# EUROPEAN PATENT APPLICATION

(11) **EP 3 842 309 A1**
(43) Date of publication of application: **30.06.2021**
(21) Application number: 19853003.2
(22) Date of filing: 21.08.2019
(51) Int. Cl.: B60W 30/16, B60W 10/04, B60W 10/18

(54) **LEANING VEHICLE**

(30) Priority: 22.08.2018 JP 2018155691
(71) Applicant: Yamaha Hatsudoki Kabushiki Kaisha, Iwata-shi, Shizuoka 438-8501 (JP)
(72) Inventor: FUJITO, Manabu, Iwata-shi, Shizuoka 438-8501 (JP)
(74) Representative: Stöckeler, Ferdinand
(86) International application number: PCT/JP2019/032594
(87) International publication number: WO 2020/040183

(57) **Abstract**

A controller 90 of a leaning vehicle 1 is configured to perform inter-vehicle distance adjustment control of adjusting the distance in the vehicle front-rear direction between a preceding vehicle and a host vehicle by controlling a driving device 20 and a brake adjustment device 60 so that acceleration of the host vehicle in a vehicle forward direction is controlled based on the distance in the vehicle front-rear direction between the preceding vehicle and the host vehicle. During the inter-vehicle distance adjustment control, the controller 90 controls the driving device 20 and the brake adjustment device 60 so that positive driving force and braking force are both applied to the leaning vehicle. It is therefore possible to improve the controllability of the leaning vehicle 1 during the inter-vehicle distance adjustment control.

## Description

### [Technical Field]

The present teaching relates to a leaning vehicle which performs inter-vehicle distance adjustment control to adjust the distance in a vehicle front-rear direction between a preceding vehicle and the host vehicle.

### [Background Art]

As a type of control for assisting the driving of a passenger vehicle, inter-vehicle distance adjustment control of adjusting the distance in the vehicle front-rear direction between a preceding vehicle and a host vehicle is known. For example, when the distance in the vehicle front-rear direction between the preceding vehicle and the host vehicle is longer than a target distance, the host vehicle is controlled to accelerate as long as the speed thereof does not exceed the speed limit. When the distance in the vehicle front-rear direction between the preceding vehicle and the host vehicle is shorter than the target distance, the host vehicle is controlled to decelerate. The target distance is change based on the relative speed between the preceding vehicle and the host vehicle, etc.

Patent Literature 1 proposes to apply this inter-vehicle distance adjustment control to a leaning vehicle such as a motorcycle. The leaning vehicle is a vehicle which includes a vehicle body frame structured to lean in a vehicle rightward direction when turning right and lean in a vehicle leftward direction when turning left.

During the inter-vehicle distance adjustment control, a controller of the leaning vehicle of Patent Literature 1 selects one of modes 1 to 5 based on the distance in the vehicle front-rear direction between a preceding vehicle and the host vehicle. When the inter-vehicle distance in the vehicle front-rear direction is shorter than a first threshold, mode 1 is selected. When the inter-vehicle distance in the vehicle front-rear direction is equal to or longer than the first threshold but is shorter than a second threshold, mode 2 is selected. When the inter-vehicle distance in the vehicle front-rear direction is equal to or longer than the second threshold but is shorter than a third threshold, mode 3 is selected. When the inter-vehicle distance in the vehicle front-rear direction is equal to or longer than the third threshold but is shorter than a fourth threshold, mode 4 is selected. When the inter-vehicle distance in the vehicle front-rear direction is equal to or longer than the fourth threshold but is shorter than a fifth threshold, mode 5 is selected. In mode 5, the controller applies positive driving force to a rear wheel (driving wheel) to accelerate the leaning vehicle. In mode 4, the controller controls the driving force applied to the rear wheel so that the leaning vehicle runs at constant speed. In mode 3, the controller applies negative driving force to the rear wheel to decelerate the leaning vehicle. The controller does not activate a braking device in mode 3. In other words, the controller does not generate braking force in mode 3. In mode 2, the controller generates negative driving force and at the same time generates small braking force for the purpose of warning. In mode 1, the controller generates larger braking force than in mode 2.

In addition to the above, the controller of Patent Literature 1 sets the throttle opening degree at an opening degree for idling and performs creep control, when the rider does not operate the accelerator and the vehicle speed of the host vehicle is equal to or less than a predetermined value. The creep control is to control the clutch while the engine is in idling. During the creep control, the controller generates positive or negative driving force but does not generate braking force. With this creep control, the controller of Patent Literature 1 allows the leaning vehicle to run at low speed.

### [Citation List]

### [Patent Literatures]

[Patent Literature 1] Japanese Unexamined Patent Publication No. 2016-34819

### [Summary]

### [Technical Problem]

When the inter-vehicle distance adjustment control is applied to a leaning vehicle, the controllability of the leaning vehicle during the inter-vehicle distance adjustment control is preferably improved.

An object of the present teaching is to provide a leaning vehicle with improved controllability during inter-vehicle distance adjustment control by which the distance in a vehicle front-rear direction between a preceding vehicle and a host vehicle is adjusted.

### [Solution to Problem]

As a result of studying the inter-vehicle distance adjustment control of leaning vehicles, the inventors of the subject application found that there are cases where the controllability of a leaning vehicle is low during the inter-vehicle distance adjustment control. The cases are a shift from an acceleration state or a constant speed state to a deceleration state and a shift from the deceleration state to the acceleration state or the constant speed state. The controllability of the leaning vehicles tends to be further deteriorated when the leaning vehicle runs at low speed due to, for example, a traffic jam.

The inventors of the subject application tried to find out a reason why the controllability of the leaning vehicles is deteriorated at the time of the shift from the acceleration state or the constant speed state to the deceleration state and the shift from the deceleration state to the acceleration state or the constant speed state. As a result of this, it was found that the reason of the deterioration is a small shock in the leaning vehicle caused by a torque transmission mechanism which transmits a torque generated by a driving source (e.g. engine) to a driving wheel. For example, when the torque transmission mechanism of the leaning vehicle includes members such as a driving chain, a driving toothed belt, a continuously variable transmission rubber belt, a continuously variable transmission resin block belt, dog teeth of a constant-mesh transmission, a multiplate wet clutch, a centrifugal clutch, and a hub damper provided at a driving wheel, these members or devices may cause a small shock in the leaning vehicle. The driving chain and the driving toothed belt are a chain and a toothed belt provided on a transmission path of a torque from the driving source to the driving wheel. The leaning vehicle has a vehicle body which is light in weight. On this account, a small shock occurring in the leaning vehicle influences the posture of the leaning vehicle. The controllability of the leaning vehicle is therefore deteriorated at the time of the shift from the acceleration state or the constant speed state to the deceleration state and the shift from the deceleration state to the acceleration state or the constant speed state, during the inter-vehicle distance adjustment control.

A reason why a small shock occurs in the leaning vehicle due to the torque transmission mechanism will be explained with reference to a case where the torque transmission mechanism includes a chain and a case where the torque transmission mechanism includes a constant-mesh transmission. To begin, a case where the torque transmission mechanism includes a driving chain will be described. A region where the driving chain is slacken when positive driving force is applied is termed a first region, whereas a region where the driving chain is tensioned when positive driving force is applied is termed a second region. When a state of applying positive driving force is switched to a state of not applying the positive driving force in order to achieve the shift from the acceleration state or the constant speed state to the deceleration state, the first region of the driving chain is changed from the slackened state to the tensioned state whereas the second region is changed from the tensioned state to the slackened state. Meanwhile, when the state of not applying the positive driving force is switched to the state of applying the positive driving force in order to achieve the shift from the deceleration state to the acceleration state or the constant speed state, changes opposite to the above occur. Because of these changes in the driving chain, a small shock occurs in the leaning vehicle. It is noted that similar changes occur in the driving toothed belt, the continuously variable transmission rubber belt, and the continuously variable transmission resin block belt, at the time of the switch from the state of applying the positive driving force to the state of not applying the positive driving force.

Now, the case where the torque transmission mechanism includes the constant-mesh transmission will be described. The constant-mesh transmission includes a first rotational body having dog teeth and a second rotational body having dog grooves. The first rotational body and the second rotational body are provided on a common shaft (an input shaft or an output shaft of the constant-mesh transmission). One of the first rotational body and the second rotational body rotates together with the shaft, whereas the other one of the bodies is rotatable relative to the shaft. At least one of the first rotational body or the second rotational body is a gear. The dog teeth protrude in the axial direction. The dog teeth are aligned in the circumferential direction. The dog teeth are fitted into the dog grooves which are formed in the second rotational body. The dog grooves may be gaps between dog teeth provided on the second rotational body. When positive driving force is applied, a first contact portion which is one end portion of a dog tooth in the circumferential direction makes contact with a dog groove, and this contact portion transmits a torque. When negative driving force is applied, a second contact portion which is the other end portion of the dog tooth in the circumferential direction makes contact with the dog groove, and this contact portion transmits a torque. In order to achieve smooth shift change, the length of the dog tooth in the circumferential direction is shorter than the length of the dog groove in the circumferential direction. When a state of applying positive driving force is switched to a state of not applying the positive driving force in order to achieve the shift from the acceleration state or the constant speed state to the deceleration state, the contact between the first contact portion of the dog tooth and the dog groove is canceled, and there is a backlash therebetween. As the leaning vehicle further decelerates, the second contact portion of the dog tooth makes contact with the dog groove. A small shock occurs in the leaning vehicle at this moment. Meanwhile, when a state of not applying positive driving force is switched to a state of applying positive driving force in order to achieve the shift from the deceleration state to the acceleration state or the constant speed state, the contact between the second contact portion of the dog tooth and the dog groove is canceled, and there is a backlash therebetween. As the leaning vehicle further decelerates, the first contact portion of the dog tooth makes contact with the dog groove. A small shock occurs in the leaning vehicle at this moment.

The inventors of the subject application tried to suppress the small shock caused by the torque transmission mechanism in order to improve the controllability of the leaning vehicle during the inter-vehicle distance adjustment control. As a result of the research, the inventors conceived of applying both positive driving force and braking force to the leaning vehicle. The inventors found that, with this arrangement, the small shock caused by the torque transmission mechanism at the time of the shift from the deceleration state to the acceleration state or the constant speed state and the shift from the acceleration state or the constant speed state to the deceleration state was suppressed.

(1) A leaning vehicle of the present teaching includes:
   a front wheel unit which includes at least one front wheel;
   a rear wheel unit which includes at least one rear wheel and is provided rearward of the front wheel unit in a vehicle-front-rear direction;
   a vehicle body frame which supports the front wheel unit and the rear wheel unit, and is structured to lean in a vehicle rightward direction when turning right and lean in a vehicle leftward direction when turning left;
   a driving device which includes: a driving source configured to generate a driving source torque; and a torque transmission mechanism capable of transmitting at least part of the driving source torque transmitted from the driving source to at least one of the front wheel unit or the rear wheel unit and is capable of applying driving force to the at least one of the front wheel unit or the rear wheel unit;
   a brake adjustment device which is configured to be able to adjust braking force applied to the front wheel unit and the rear wheel unit;
   a preceding vehicle detector which is capable of detecting a preceding vehicle which runs forward of a host vehicle in the vehicle front-rear direction; and
   a controller which is configured to perform inter-vehicle distance adjustment control of adjusting the distance in the vehicle front-rear direction between the preceding vehicle and the host vehicle by controlling the driving device and the brake adjustment device so that acceleration of the host vehicle in a vehicle forward direction is controlled based on the distance in the vehicle front-rear direction between the preceding vehicle by detected the preceding vehicle detector and the host vehicle.

During the inter-vehicle distance adjustment control, the controller is configured to control the driving device and the brake adjustment device so that the driving force which is positive and the braking force are both applied to the leaning vehicle.

The leaning vehicle includes a front wheel unit, a rear wheel unit, a vehicle body frame, a driving device, a brake adjustment device, a preceding vehicle detector, and a controller. The front wheel unit includes at least one front wheel. The rear wheel unit includes at least one rear wheel. The rear wheel unit is provided rearward of the front wheel unit in the vehicle front-rear direction. The vehicle body frame supports the front wheel unit and the rear wheel unit. The leaning vehicle body frame leans in the vehicle rightward direction when turning right and leans in the vehicle leftward direction when turning left. The driving device includes a driving source and a torque transmission mechanism. The driving source generates driving source torque. The torque transmission mechanism is arranged to be able to transmit at least part of a driving source torque transmitted from the driving source to at least one of the front wheel unit or the rear wheel unit. The torque transmission mechanism is able to apply driving force to at least one of the front wheel unit or the rear wheel unit. The brake adjustment device is arranged to be able to adjust braking force applied to the front wheel unit and the rear wheel unit. The preceding vehicle detector is configured to be able to detect a preceding vehicle which runs at a location forward of the host vehicle in the vehicle front-rear direction.

The controller performs inter-vehicle distance adjustment control of controlling the distance in the vehicle front-rear direction between a preceding vehicle detected by the preceding vehicle detector and the host vehicle. During the inter-vehicle distance adjustment control, the controller controls the driving device and the brake adjustment device so that the acceleration of the host vehicle in the vehicle forward direction is controlled based on the distance in the vehicle front-rear direction between the preceding vehicle and the host vehicle. During the inter-vehicle distance adjustment control, the controller controls the driving device and the brake adjustment device so that positive driving force and braking force are both applied to the leaning vehicle.

When positive driving force and braking force are both applied to the leaning vehicle, the vehicle is able to take any one of an acceleration state, a constant speed state, and a deceleration state, as the positive driving force and the braking force are adjusted. On this account, it is possible to maintain a state of receiving positive braking force, at the time of the shift from the acceleration state or the constant speed state to the deceleration state and the shift from the deceleration state to the acceleration state or the constant speed state. It is therefore possible to suppress a small shock occurring in the leaning vehicle on account of the torque transmission mechanism. The following will give an explanation with the assumption that, for example, the torque transmission mechanism includes a driving chain. At the time of the shift from the acceleration state or the constant speed state to the deceleration state and the shift from the deceleration state to the acceleration state or the constant speed state, it is possible to maintain a tensioned part of the driving chain to be in a tensioned state and to maintain a slackened part of the driving chain to be in a slackened state, because a state of applying positive braking force is maintained. It is therefore possible to suppress a small shock occurring in the leaning vehicle on account of a change in the tensioned state of the driving chain. The following will give an explanation with the assumption that, for example, the torque transmission mechanism includes a constant-mesh transmission. At the time of the shift from the acceleration state or the constant speed state to the deceleration state and the shift from the deceleration state to the acceleration state or the constant speed state, it is possible to maintain the dog teeth of the constant-mesh transmission to be in contact with the dog grooves, because a state of applying positive braking force is maintained. It is therefore possible to suppress a small shock occurring in the leaning vehicle on account of a change in a contact state of the dog teeth.

As such, the leaning vehicle of the present teaching is able to suppress a change of the torque transmission mechanism at the time of the shift from the acceleration state or the constant speed state to the deceleration state or the shift from the deceleration state to the acceleration state or the constant speed state. It is therefore possible to suppress a small shock occurring in the leaning vehicle on account of the torque transmission mechanism. As a result, it is possible to improve the controllability of the acceleration of the leaning vehicle during the inter-vehicle distance adjustment control. In other words, it is possible to improve the controllability of the leaning vehicle during the inter-vehicle distance adjustment control.

(2) According to an aspect of the present teaching, the leaning vehicle of the present teaching preferably includes the following arrangement, in addition to the arrangement (1).
During the inter-vehicle distance adjustment control, the controller is configured to control the driving device and the brake adjustment device so that the positive driving force and the braking force are both applied to the leaning vehicle when speed of the leaning vehicle in the vehicle forward direction is 30km or less.

According to this arrangement, during the inter-vehicle distance adjustment control, the speed of the leaning vehicle in the vehicle forward direction is relatively low when both the positive driving force and the braking force are applied to the leaning vehicle. It is therefore unnecessary to significantly increase the positive driving force and the braking force. On this account, the controllability of the leaning vehicle under the inter-vehicle distance adjustment control can be easily improved.

(3) According to an aspect of the present teaching, the leaning vehicle of the present teaching preferably include the following arrangement, in addition to the arrangement (1) or (2).
During the inter-vehicle distance adjustment control, the controller is configured to control the driving device and the brake adjustment device so that acceleration of the leaning vehicle in the vehicle forward direction shifts from zero or positive to negative or the acceleration of the leaning vehicle in the vehicle forward direction shifts from negative to zero or positive, while the positive driving force and the braking force are both applied to the leaning vehicle.

According to this arrangement, during the inter-vehicle distance adjustment control, the leaning vehicle of the present teaching is able to shift from the acceleration state or the constant speed state to the deceleration state and to shift from the deceleration state to the acceleration state or the constant speed state, while maintaining the state of applying both the positive driving force and the braking force to the leaning vehicle. For this reason, it is possible to suppress a small shock occurring in the leaning vehicle due to the torque transmission mechanism at the time of the shift from the acceleration state or the constant speed state to the deceleration state and the shift from the deceleration state to the acceleration state or the constant speed state. It is therefore possible to improve the controllability of the leaning vehicle during the inter-vehicle distance adjustment control.

(4) According to an aspect of the present teaching, the leaning vehicle of the present teaching preferably includes the following arrangement, in addition to the arrangement of any one of the arrangements (1) to (3).
During the inter-vehicle distance adjustment control, the controller is configured to control the driving device and the brake adjustment device so that the acceleration of the leaning vehicle in the vehicle forward direction is positive as both the positive driving force and the braking force are applied to the leaning vehicle and the total positive driving force applied to the leaning vehicle is larger than the sum total of the total braking force applied to the leaning vehicle and the running resistance acting on the leaning vehicle.

According to this arrangement, during the inter-vehicle distance adjustment control, the leaning vehicle of the present teaching is able to accelerate while the positive driving force and the braking force are both applied to the leaning vehicle.

(5) According to an aspect of the present teaching, the leaning vehicle of the present teaching preferably includes the following arrangement, in addition to the arrangement of any one of the arrangements (1) to (4).
During the inter-vehicle distance adjustment control, the controller is configured to control the driving device and the brake adjustment device so that, as both the positive driving force and the braking force are applied to the leaning vehicle, the acceleration of the leaning vehicle in the vehicle forward direction is positive and the total positive driving force applied to the leaning vehicle is larger than the total braking force applied to the leaning vehicle.

According to this arrangement, during the inter-vehicle distance adjustment control, the leaning vehicle of the present teaching is able to accelerate while the positive driving force and the braking force are both applied to the leaning vehicle.

(6) According to an aspect of the present teaching, the leaning vehicle of the present teaching preferably includes the following arrangement, in addition to the arrangement of any one of the arrangements (1) to (5).

During the inter-vehicle distance adjustment control, the controller is configured to control the driving device and the brake adjustment device so that, as both the positive driving force and the braking force are applied to the leaning vehicle, at least one of increase in the total positive driving force applied to the leaning vehicle or decrease in the total braking force applied to the leaning vehicle occurs and the acceleration of the leaning vehicle in the vehicle forward direction is maintained to be positive.

According to this arrangement, during the inter-vehicle distance adjustment control, the leaning vehicle of the present teaching is able to increase the acceleration of the leaning vehicle in the vehicle forward direction, while the positive driving force and the braking force are both applied to the leaning vehicle.

(7) According to an aspect of the present teaching, the leaning vehicle of the present teaching preferably includes the following arrangement.
During the inter-vehicle distance adjustment control, the controller is configured to control the driving device and the brake adjustment device so that the acceleration of the leaning vehicle in the vehicle forward direction is negative as both the positive driving force and the braking force are applied to the leaning vehicle and the total positive driving force applied to the leaning vehicle is smaller than the sum total of the total braking force applied to the leaning vehicle and the running resistance acting on the leaning vehicle.

According to this arrangement, during the inter-vehicle distance adjustment control, the leaning vehicle of the present teaching is able to decelerate while the positive driving force and the braking force are both applied to the leaning vehicle.

(8) According to an aspect of the present teaching, the leaning vehicle of the present teaching preferably includes the following arrangement, in addition to the arrangement of any one of the arrangements (1) to (7).
During the inter-vehicle distance adjustment control, the controller is configured to control the driving device and the brake adjustment device so that, as both the positive driving force and the braking force are applied to the leaning vehicle, the acceleration of the leaning vehicle in the vehicle forward direction is negative and the total positive driving force applied to the leaning vehicle is smaller than the total braking force applied to the leaning vehicle.

According to this arrangement, during the inter-vehicle distance adjustment control, the leaning vehicle of the present teaching is able to decelerate while the positive driving force and the braking force are both applied to the leaning vehicle, even when negative running resistance is being generated.

(9) According to an aspect of the present teaching, the leaning vehicle of the present teaching preferably includes the following arrangement, in addition to the arrangement of any one of the arrangements (1) to (8).
During the inter-vehicle distance adjustment control, the controller is configured to control the driving device and the brake adjustment device so that, as both the positive driving force and the braking force are applied to the leaning vehicle, at least one of a decrease in the total positive driving force applied to the leaning vehicle or an increase in the total braking force applied to the leaning vehicle occurs and the acceleration of the leaning vehicle in the vehicle forward direction is maintained to be negative.

According to this arrangement, during the inter-vehicle distance adjustment control, the leaning vehicle of the present teaching is able to decrease the acceleration of the leaning vehicle in the vehicle forward direction, while the positive driving force and the braking force are both applied to the leaning vehicle.

(10) According to an aspect of the present teaching, the leaning vehicle of the present teaching preferably includes the following arrangement, in addition to the arrangement of any one of the arrangements (1) to (9). The torque transmission mechanism includes:
a first member which is provided on a torque transmission path of the torque transmission mechanism;
a second member which is provided on the torque transmission path of the torque transmission mechanism so that the distance from the driving source to the second member is longer than the distance from the driving source to the first member; and
a clutch which is switchable between a connection state in which transmission of a torque from the first member to the second member is allowed and a cut-off state in which the transmission of the torque from the first member to the second member is blocked, the clutch being capable of taking a partial connection state in which the transmission of the torque from the first member to the second member is allowed at a torque transmission rate which is lower than a torque transmission rate in the connection state.

During the inter-vehicle distance adjustment control, the controller is configured to control the driving device and the brake adjustment device so that the positive driving force and the braking force are both applied to the leaning vehicle when the clutch is not in the cut-off state.

When the clutch is in the connection state or the partial connection state, the driving source torque is at least partially transmitted to the wheel via the clutch. The positive driving force is therefore applied to the wheel. The inter-vehicle distance adjustment control is performed when the clutch is in the connection state or the partial connection state. When both the positive driving force and the braking force are applied to the leaning vehicle while the clutch is in the partial connection state, the following effect is achieved. When the driving source is an engine, in order to avoid engine stall, the driving source torque must be larger than a predetermined value. On this account, when the clutch is in the connection state, there is a lower limit of the positive driving force. When the clutch is in the partial connection state, it is possible to decrease the positive driving force as compared to the case where the clutch is in the connection state. It is therefore further easy to control the leaning vehicle at low speed.

(11) According to an aspect of the present teaching, the leaning vehicle of the present teaching preferably includes the following arrangement, in addition to the arrangement (10).
The clutch is a centrifugal clutch in which the cut-off state is automatically switched to the connection state via the partial connection state, in accordance with increase in the rotation speed of the first member.

According to this arrangement, the clutch is automatically switched from the cut-off state to the connection state in accordance with the rotation speed of the first member. Because the controller is not required to control the clutch, the inter-vehicle distance adjustment control can be simplified.

(12) According to an aspect of the present teaching, the leaning vehicle of the present teaching preferably includes the following arrangement, in addition to the arrangement (10).
The clutch is an electronic-controlled clutch which is electronically controllable by the controller.
During the inter-vehicle distance adjustment control, the controller is configured to control the driving device and the brake adjustment device so that the positive driving force and the braking force are both applied to the leaning vehicle when the electronic-controlled clutch controlled by the controller is in the connection state or the partial connection state.

According to this arrangement, during the inter-vehicle distance adjustment control, the clutch is controlled to be in the connection state or the partial connection state by the controller. Because the clutch can be switched to the connection state or the partial connection state irrespective of the rotation speed of the first member, the speed of the leaning vehicle in the vehicle forward direction is easily adjustable during the inter-vehicle distance adjustment control. It is therefore possible to further improve the controllability of the leaning vehicle during the inter-vehicle distance adjustment control.

(13) According to an aspect of the present teaching, the leaning vehicle of the present teaching preferably includes the following arrangement, in addition to the arrangement of any one of the arrangements (1) to (12).
The driving source includes an engine.

(14) According to an aspect of the present teaching, the leaning vehicle of the present teaching preferably includes the following arrangement, in addition to the arrangement of any one of the arrangements (1) to (13). The driving source includes an electric motor.

(15) According to an aspect of the present teaching, the leaning vehicle of the present teaching preferably includes the following arrangement, in addition to the arrangement of any one of the arrangements (1) to (14).
During the inter-vehicle distance adjustment control, the controller is configured to control the driving device and the brake adjustment device so that the positive driving force and the braking force are both applied to the leaning vehicle and the braking force is applied to only the rear wheel unit.

(16) According to an aspect of the present teaching, the leaning vehicle of the present teaching preferably includes the following arrangement, in addition to the arrangement of any one of the arrangements (1) to (14).
During the inter-vehicle distance adjustment control, the controller is configured to control the driving device and the brake adjustment device so that the positive driving force and the braking force are both applied to the leaning vehicle and the braking force is applied to both the front wheel unit and the rear wheel unit.

(17) According to an aspect of the present teaching, the leaning vehicle of the present teaching preferably includes the following arrangement, in addition to the arrangement (16).
During the inter-vehicle distance adjustment control, the controller is configured to control the driving device and the brake adjustment device so that the positive driving force and the braking force are both applied to the leaning vehicle and the total braking force applied to the rear wheel unit is larger than the total braking force applied to the front wheel unit.

(18) According to an aspect of the present teaching, the leaning vehicle of the present teaching preferably includes the following arrangement, in addition to the arrangement of any one of the arrangements (1) to (17).
During the inter-vehicle distance adjustment control, the controller is configured to control the driving device and the brake adjustment device so that the positive driving force and the braking force are both applied to the leaning vehicle and the positive braking force is applied to only the rear wheel unit or the front wheel unit.

In a typical leaning vehicle, a rear wheel unit is not steered whereas a front wheel unit is steered.
When positive driving force is applied to the rear wheel unit, driving force applied to the rear wheel unit during the inter-vehicle distance adjustment control can be set without taking into account of the steering. It is therefore possible to further improve the controllability of the leaning vehicle during the inter-vehicle distance adjustment control. When positive driving force is applied to only the front wheel unit, the front wheel unit functions as both a steered wheel and a driving wheel. In this case, because the driving force is applied to the steered wheel, the rider can easily steer the steered wheel by using the steering wheel.

(19) According to an aspect of the present teaching, the leaning vehicle of the present teaching preferably includes the following arrangement, in addition to the arrangement of any one of the arrangements (1) to (17).
During the inter-vehicle distance adjustment control, the controller is configured to control the driving device and the brake adjustment device so that the positive driving force and the braking force are both applied to the leaning vehicle and the positive braking force is applied to both the front wheel unit and the rear wheel unit.

According to this arrangement, even if the inter-vehicle distance adjustment control is performed on a steep upslope or on a road surface having a small road surface friction coefficient, driving force is reliably generated between the wheels and the road surface. The road surface friction coefficient is a friction coefficient between the tire and the road surface.

(20) According to an aspect of the present teaching, the leaning vehicle of the present teaching preferably includes the following arrangement, in addition to the arrangement of any one of the arrangements (1) to (19).
During the inter-vehicle distance adjustment control, the controller is configured to control the driving device and the brake adjustment device so that the positive driving force and the braking force are both applied to the leaning vehicle and the positive braking force and the braking force are both applied to at least one of the front wheel unit or the rear wheel unit.

According to this arrangement, because the positive driving force and the braking force cancel each other out, excessive driving force or braking force is not applied to the wheel to which the driving force and the braking force are both applied. This prevents the wheel to which the driving force and the braking force are both applied from a wheellock or a wheelspin.
Furthermore, because the positive driving force and the braking force are both applied to the same wheel, the driving force and the braking force applied to this wheel are directionally parallel to each other. On this account, when the positive driving force and the braking force are both applied to the same wheel and there is no wheel to which only the driving force or the braking force is applied, only force parallel to the road surface and the leaning vehicle is generated. The leaning vehicle is easily controllable because only the traveling direction of the wheel is taken into account. It is therefore possible to further improve the controllability of the leaning vehicle during the inter-vehicle distance adjustment control.
The wheellock occurs when a brake torque applied to the wheel is large while the road surface friction coefficient is not sufficiently large. When the wheellock occurs, the wheel slips on the road surface. A wheelspin is a phenomenon of spin of a wheel. This occurs when the driving force exceeds the limit of the grip of the tire.

(21) According to an aspect of the present teaching, the leaning vehicle of the present teaching preferably includes the following arrangement, in addition to the arrangement of any one of the arrangements (1) to (15) and (18). During the inter-vehicle distance adjustment control, the controller is configured to control the driving device and the brake adjustment device so that the positive driving force and the braking force are both applied to the leaning vehicle and either the braking force is applied to only the front wheel unit and the positive driving force is applied to only the rear wheel unit or the braking force is applied to only the rear wheel unit and the positive driving force is applied to only the front wheel unit.

### <Definitions of Terms>

In the present teaching, driving force and braking force are forces generated between a wheel and a road surface. In the present teaching, the braking force is force adjusted by a brake adjustment device. Braking force is, for example, force applied to a wheel by a braking device. The braking device is controlled by the brake adjustment device. Braking force is force acting in a direction of decelerating a vehicle.
In the present teaching, driving force is force applied to a wheel by a torque transmission mechanism. The torque transmission mechanism is able to apply positive driving force. The torque transmission mechanism may be able to apply negative driving force. Positive driving force is force acting in a direction of accelerating a vehicle. Being similar to the braking force, negative driving force is force acting in a direction of decelerating a vehicle.

In the present teaching, a statement "both of positive driving force and braking force are applied to a leaning vehicle" indicates that positive driving force is applied to at least one of the front wheel unit or the rear wheel unit and braking force is applied to at least one of the front wheel unit or the rear wheel unit. "At least one of the front wheel unit or the rear wheel unit" to which positive driving force is applied may be identical with or different from "at least one of the front wheel unit or the rear wheel unit" to which braking force is applied. In other words, when positive driving force is applied to the front wheel unit, braking force may or may not be applied to the front wheel unit. When positive driving force is applied to the rear wheel unit, braking force may or may not be applied to the rear wheel unit.

In the present teaching, a statement "in inter-vehicle distance adjustment control, a driving device and a brake adjustment device are controlled so that both positive driving force and braking force are applied to a leaning vehicle" does not indicate that the driving device and the brake adjustment device are always controlled to apply both positive driving device and braking force to the leaning vehicle during the inter-vehicle distance adjustment control. As long as both positive driving force and braking force are applied to the leaning vehicle in a case during the inter-vehicle distance adjustment control, the controller of the present teaching may not perform control so that positive driving force and braking force are both applied to the leaning vehicle in another case during the inter-vehicle distance adjustment control.

When positive driving force is applied to only the front wheel unit, "total positive driving force" in the present teaching is the sum total of positive driving forces applied to all wheels of the front wheel unit. The definition of "total positive driving force" in the present teaching when positive driving force is applied to only the rear wheel unit is identical with the above. When positive driving force is applied to both the front wheel unit and the rear wheel unit, "total positive driving force" in the present teaching is the sum total of positive driving forces applied to all wheels of the front wheel unit and the rear wheel unit.
The definition of "total braking force" in the present teaching is identical with the above-described definition of "total positive driving force" except that "positive driving force" is replaced with "braking force".

In the present teaching, "running resistance" is force which is applied to a running vehicle and acts in a direction opposite to the traveling direction. A leaning vehicle accelerates when the total positive driving force is larger than a combination of the total braking force and the running resistance. A leaning vehicle decelerates when the total positive driving force is smaller than the sum total of the total braking force and the running resistance. A leaning vehicle runs at constant speed when the total positive driving force is equal to the sum total of the total braking force and the running resistance.

The "running resistance" mainly includes rolling resistance, air resistance, grade resistance, and acceleration resistance. The rolling resistance is generated mainly by energy loss due to deformation of a tire. The rolling resistance increases as the vehicle weight increases. The air resistance is generated by friction between a vehicle body surface and air. The air resistance increases as the vehicle speed increases. The air resistance decreases as the air speed of wind in the traveling direction of the vehicle (i.e., tailwind) increases, and increases as the air speed of wind in the direction opposite to the traveling direction of the vehicle (i.e., headwind) increases. The grade resistance is generated when the vehicle runs on an upslope. The grade resistance increases as the vehicle weight increases, and increases as the inclination angle increases. When the vehicle runs on a downslope, the grade resistance is negative. For this reason, when the vehicle runs on a downslope with large gradient, the running resistance may be negative. The acceleration resistance is generated when the vehicle accelerates. The acceleration resistance is negative when the vehicle decelerates. The acceleration resistance increases as the vehicle weight increases, and increases as the positive acceleration increases. As an absolute value of the negative acceleration increases, an absolute value of negative acceleration resistance increases.

In the present teaching, a statement "acceleration is maintained to be positive" does not indicate that the acceleration is maintained at a single positive value. The statement "acceleration is maintained to be positive" encompasses a case where the acceleration varies within a positive range.
In the present teaching, a statement "acceleration is maintained to be negative" does not indicate that the acceleration is maintained at a single negative value. The statement "acceleration is maintained to be negative" encompasses a case where the acceleration varies within a negative range.

In the present teaching, a statement "transmission of a torque from a first member to a second member at a torque transmission rate lower than in a connection state" indicates that the transmission rate of a torque from the first member to the second member is lower than the transmission rate of a torque from the first member to the second member when a clutch is in a connection state.

In the present teaching, "when the clutch is not in a cut-off state", the clutch may be in a partial connection state or a connection state.

The aspect (12) described above recites that, during the inter-vehicle distance adjustment control, if an electronic-controlled clutch is in a connection state or a partial connection state, the controller controls the driving device and the brake adjustment device so that positive driving force and braking force are both applied to the leaning vehicle. This disclosure does not negate that one controller is able to execute the following two processes. The first process is a process to control, during the inter-vehicle distance adjustment control, the driving device and the brake adjustment device so that positive driving force and braking force are both applied to the leaning vehicle, when an electronic-controlled clutch is in a connection state. The second process is a process to control, during the inter-vehicle distance adjustment control, the driving device and the brake adjustment device so that positive driving force and braking force are both applied to the leaning vehicle, when the electronic-controlled clutch is in a partial connection state. The controller of the leaning vehicle of the present teaching may be able to execute both of the first and second processes, may be able to execute only the first process, or may be able to execute only the second process.

In the present teaching, a vehicle body frame is a member which mainly receives stress in the vehicle. The vehicle body frame may be a frame formed by combining a plurality of components, or may be an integrally-molded frame. The vehicle body frame may have a monocoque structure, a semi-monocoque structure, or a frame structure different from these structures. A frame having the monocoque structure is made up of plate-shaped members partially constituting the appearance of the vehicle. The monocoque structure is also known as a frameless structure. A frame having the semi-monocoque structure is made up of plate-shaped members partially constituting the appearance of the vehicle and pipe-shaped members.

In the present teaching, a vehicle left-right direction is the left-right direction for the rider seated on the leaning vehicle. When the leaning vehicle is provided on a horizontal plane, the vehicle left-right direction is a horizontal direction. The vehicle left-right direction is unchanged depending on the inclination of the vehicle body frame in the vehicle left-right direction. A vehicle front-rear direction is the front-rear direction for the rider seated on the leaning vehicle. To be more specific, a vehicle forward direction is a direction in which the leaning vehicle with the vehicle body frame standing upright linearly moves on a horizontal plane. When the leaning vehicle is provided on the horizontal plane, the vehicle front-rear direction is a parallel direction. The vehicle left-right direction and the vehicle front-rear direction are orthogonal to each other.

In the present teaching, when the vehicle body frame leans in the vehicle rightward direction, the vehicle body frame leans in the vehicle rightward direction with respect to the vehicle up-down direction. In other words, the vehicle body frame leans in the vehicle rightward direction with respect to a grounding point of the vehicle. In other words, an upper portion of the vehicle body frame moves in the vehicle rightward direction relative to a lower portion of the leaning vehicle body frame. The definition of leaning of the vehicle body frame in the vehicle leftward direction is similar to this.

In this specification, when something (e.g., control) is done "based on A", it may be done solely based on A or may be done based on A and something different from A.

In this specification, when something is rotatable, it is rotatable 360 degrees, unless otherwise specified. In this specification, when something is swingable, it is rotatable less than 360 degrees, unless otherwise specified. The term "rotation" indicates both rotation for 360 degrees and rotation for less than 360 degrees.

In the present specification, an end portion of a member indicates a portion constituted by an end and its surroundings of the member.

In this specification, an expression "an entity A is provided forward of an entity B" indicates the following state, unless otherwise specified. The entire entity A is provided in a front space among two spaces on the respective sides of a plane which passes through the front-most end of the entity B and is orthogonal to the front-rear direction. The rear end of the entity A may be on the plane which passes through the front-most end of the entity B and is orthogonal to the front-rear direction. In this connection, the entities A and B may or may not be lined up in the front-rear direction. The same applies to an expression "an entity A is provided rearward of an entity B" in the same condition with regard to the entity B. Furthermore, the same applies to expressions "an entity A is provided above or below an entity B", and "an entity A is provided rightward of or leftward of an entity B" in the same condition with regard to the entity B.

In this specification, the center in the left-right direction of a region indicates the central line in the left-right direction of that region and its surroundings.

In this specification, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the present teaching, terms "including", "comprising", "having", and derivatives thereof are used to encompass not only listed items and equivalents thereof but also additional items.
In the present teaching, the terms "mounted", "connected", "coupled", and "supported" are used in broad sense. To be more specific, the terms encompass not only directly mounting, connection, coupling, and supporting but also indirect mounting, connection, coupling, and supporting. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

In the present teaching, the preferred arrangements of the different aspects described above may be variously combined. Before an embodiment of the present teaching is detailed, it is informed that the present teaching is not limited to the configurations and layout of elements described below and/or shown in drawings. The present teaching may be implemented as an embodiment other than the below-described embodiment. The present teaching may be implemented as various modifications to the below-described embodiment. Furthermore, the present teaching may be implemented by suitably combining below-described embodiments and modifications.

### [Advantageous Effects]

The present teaching makes it possible to improve controllability of a leaning vehicle during inter-vehicle distance adjustment control by which the distance in a vehicle front-rear direction between a preceding vehicle and a host vehicle is adjusted.

### [Brief Description of Drawings]

FIG. 1 is a left side view of a leaning vehicle of an embodiment of the present teaching.
FIG. 2 is a left side view of a motorcycle of Specific Example 1 of the embodiment of the present teaching.
FIG. 3 is a front view of the motorcycle of Specific Example 1.
FIG. 4 schematically shows the structure of the motorcycle of Specific Example 1.
FIG. 5 is a control block diagram of the motorcycle of Specific Example 1.
FIG. 6 is a schematic diagram of a brake adjustment device.
FIG. 7(a) is a side view of a continuously variable transmission resin block belt. FIG. 7(b) is a cross section taken along an A-A line in FIG. 7(a).
FIG. 8 shows the internal structure of a centrifugal clutch.
FIG. 9 is a cross section of two gears included in a torque transmission mechanism.
FIG. 10 illustrates inter-vehicle distance adjustment control.
FIG. 11 is a right side view of a motorcycle of Specific Example 2 of the embodiment of the present teaching.
FIG. 12 schematically shows the structure of the motorcycle of Specific Example 2.
FIG. 13 is a cross section of a multiplate wet clutch.
FIG. 14 is a schematic cross section of a constant-mesh transmission.
FIG. 15 is a cross section taken along a B-B line in FIG. 14.
This figure schematically shows the structure of the motorcycle of Specific Example 2.
FIG. 16 is an exploded perspective view of a rear wheel unit where a hub damper is provided.

### [Description of Embodiments]

### <Embodiment of Present Teaching>

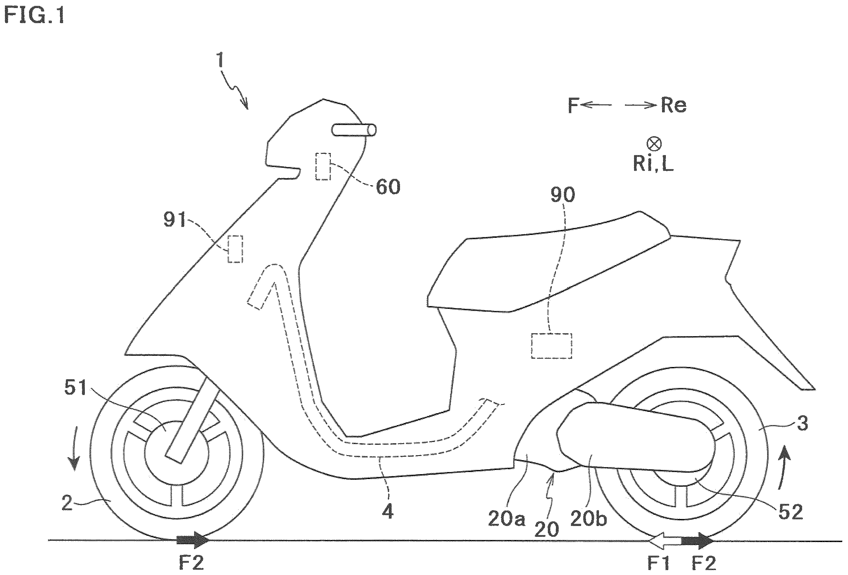

The following will describe a leaning vehicle 1 of an embodiment of the present teaching with reference to FIG. 1. Arrows F and Re in FIG. 1 indicate a vehicle forward direction and a vehicle rearward direction, respectively, whereas arrows L and Ri indicate a vehicle leftward direction and a vehicle rightward direction, respectively. The vehicle left-right direction and the vehicle front-rear direction are directions viewed by a rider seated on the leaning vehicle 1.

The leaning vehicle 1 includes a front wheel unit 2, a rear wheel unit 3, a vehicle body frame 4, a driving device 20, a brake adjustment device 60, a preceding vehicle detector 91, and a controller 90. The front wheel unit 2 includes at least one front wheel. The rear wheel unit 3 includes at least one rear wheel. The rear wheel unit 3 is provided rearward of the front wheel unit 2 in the vehicle front-rear direction. The vehicle body frame 4 supports the front wheel unit 2 and the rear wheel unit 3. The vehicle body frame 4 leans in the vehicle rightward direction when turning right and leans in the vehicle leftward direction when turning left. The driving device 20 includes a driving source 20a and a torque transmission mechanism 20b. The driving source 20a generates a driving source torque. The torque transmission mechanism 20b is arranged to be able to transmit at least part of a driving source torque transmitted from the driving source 20a to at least one of the front wheel unit 2 or the rear wheel unit 3. The torque transmission mechanism 20b is able to apply driving force F1 to at least one of the front wheel unit 2 or the rear wheel unit 3. The brake adjustment device 60 is arranged to be able to adjust braking force F2 applied to the front wheel unit 2 and the rear wheel unit 3. The brake adjustment device 60 controls a front braking device 51 capable of applying the braking force F2 to the front wheel unit 2 and a rear braking device 52 capable of applying the braking force F2 to the rear wheel unit 3. The preceding vehicle detector 91 is configured to be able to detect a preceding vehicle which runs at a location forward of the host vehicle.

The controller 90 performs inter-vehicle distance adjustment control of controlling the distance in the vehicle front-rear direction between a preceding vehicle detected by the preceding vehicle detector 91 and the host vehicle. During the inter-vehicle distance adjustment control, the controller 90 controls the driving device 20 and the brake adjustment device 60 so that the acceleration of the host vehicle in the vehicle forward direction is controlled based on the distance in the vehicle front-rear direction between the preceding vehicle detected by the preceding vehicle detector 91 and the host vehicle. During the inter-vehicle distance adjustment control, the controller 90 controls the driving device 20 and the brake adjustment device 60 so that positive driving force and braking force are both applied to the leaning vehicle.

When positive driving force and braking force are both applied to the leaning vehicle 1, the vehicle is able to take any one of an acceleration state, a constant speed state, and a deceleration state, as the positive driving force and the braking force are adjusted. On this account, it is possible to maintain a state of receiving positive braking force, at the time of the shift from the acceleration state or the constant speed state to the deceleration state and the shift from the deceleration state to the acceleration state or the constant speed state. It is therefore possible to suppress a small shock occurring in the leaning vehicle 1 on account of the torque transmission mechanism 20b. The following will give an explanation with the assumption that, for example, the torque transmission mechanism 20b includes a driving chain. At the time of the shift from the acceleration state or the constant speed state to the deceleration state and the shift from the deceleration state to the acceleration state or the constant speed state, it is possible to maintain a tensioned part of the driving chain to be in a tensioned state and to maintain a slackened part of the driving chain to be in a slackened state, because a state of applying positive braking force is maintained. It is therefore possible to suppress a small shock occurring in the leaning vehicle 1 on account of a change in the tensioned state of the driving chain. The following will give an explanation with the assumption that, for example, the torque transmission mechanism 20b includes a constant-mesh transmission. At the time of the shift from the acceleration state or the constant speed state to the deceleration state and the shift from the deceleration state to the acceleration state or the constant speed state, it is possible to maintain the dog teeth of the constant-mesh transmission to be in contact with the dog grooves, because a state of applying positive braking force is maintained. It is therefore possible to suppress a small shock occurring in the leaning vehicle 1 on account of a change in a contact state of the dog teeth.

As such, the leaning vehicle 1 of the present embodiment is able to suppress a change of the torque transmission mechanism 20b at the time of the shift from the acceleration state or the constant speed state to the deceleration state or the shift from the deceleration state to the acceleration state or the constant speed state. It is therefore possible to suppress a small shock occurring in the leaning vehicle 1 on account of the torque transmission mechanism 20b. As a result, it is possible to improve the controllability of the acceleration of the leaning vehicle 1 during the inter-vehicle distance adjustment control. In other words, it is possible to improve the controllability of the leaning vehicle 1 during the inter-vehicle distance adjustment control.

### (Specific Example 1 of Embodiment)

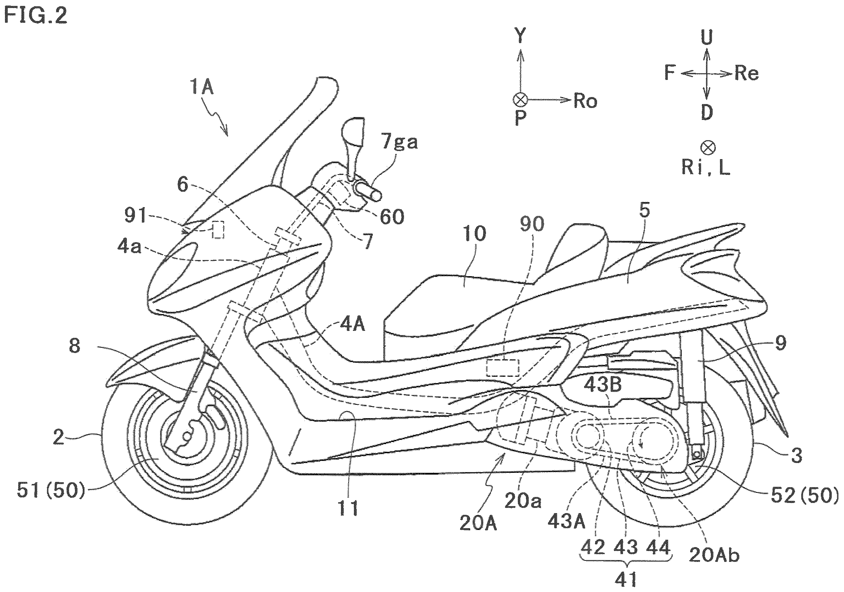

The following will describe Specific Example 1 of the embodiment with reference to FIG. 2 to FIG. 10. Basically, a leaning vehicle 1A of Specific Example 1 includes all features of the above-described leaning vehicle 1 of the embodiment described above. Members identical with those in the above-described embodiment of the present teaching are not explained again.

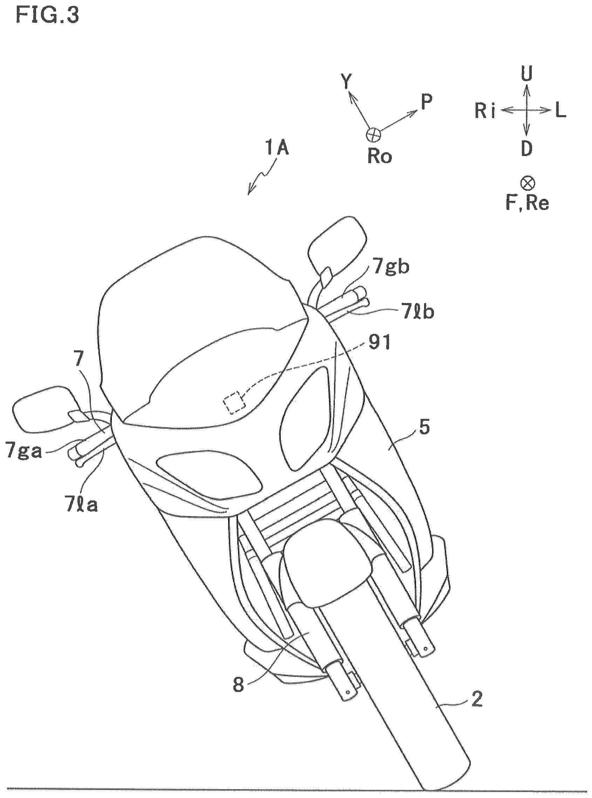

Arrows U and D in FIG. 2 and FIG. 3 indicate a vehicle upward direction and a vehicle downward direction, respectively. The vehicle up-down direction is perpendicular to a road surface. The arrows F, Re, L, and Ri have been defined as above. Hereinafter, a front-rear direction is a vehicle front-rear direction of the leaning vehicle 1A, unless otherwise stated. Hereinafter, a left-right direction is a vehicle left-right direction of the leaning vehicle 1A, unless otherwise stated. Hereinafter, an up-down direction is a vehicle up-down direction of the leaning vehicle 1A, unless otherwise stated. The vehicle up-down direction is perpendicular to a road surface. FIG. 2 shows the leaning vehicle 1A in which a vehicle body frame 4A stands upright. FIG. 3 shows the leaning vehicle 1A in which the vehicle body frame 4A leans in the vehicle rightward direction. In both FIG. 2 and FIG. 3, the road surface is horizontal. The leaning vehicle 1A is a motorcycle. Hereinafter, the leaning vehicle 1A is termed a motorcycle 1A.

### <1> Overall Structure of Motorcycle

As shown in FIG. 2, the motorcycle 1A is a so-called scooter-type motorcycle. The motorcycle 1A includes a front wheel unit 2, a rear wheel unit 3, and a vehicle body frame 4A. The rear wheel unit 3 is provided rearward of the front wheel unit 2 in the vehicle front-rear direction. As shown in FIG. 3, the vehicle body frame 4A of the motorcycle 1A leans in the vehicle rightward direction when turning right. The vehicle body frame 4A of the motorcycle 1A leans in the vehicle leftward direction when turning left.

As shown in FIG. 2, the vehicle body frame 4A is an underbone-type vehicle body frame. The vehicle body frame 4A is substantially entirely covered with a vehicle body cover 5. The vehicle body frame 4A includes a head pipe 4a at its front portion. A steering shaft 6 is rotatably inserted into the head pipe 4a. An upper end portion of the steering shaft 6 is fixed to a steering wheel (handle unit or handlebar) 7. A lower end portion of the steering shaft 6 is fixed to an upper end portion of a front fork 8.

A lower end portion of the front fork 8 supports the front wheel unit 2. The front wheel unit 2 is therefore indirectly supported by the vehicle body frame 4A. The front wheel unit 2 is composed of one front wheel. The front wheel includes a rubber tire and a wheel. The diameter of the front wheel unit 2 (front wheel) is substantially identical with the diameter of the rear wheel unit 3 (rear wheel). The diameter of the front wheel unit 2 (front wheel) may be longer than or shorter than the diameter of the rear wheel unit 3 (rear wheel). The front wheel unit 2 is steered as a rider rotates the steering wheel 7. When the front wheel unit 2 is steered, a plane which passes through the center in the width direction of the front wheel and is perpendicular to the axle shaft leans with respect to the vehicle front-rear direction of the motorcycle 1A.

The vehicle body frame 4A supports a seat 10. The rider is seated on the seat 10. A fuel tank (not illustrated) is provided below the seat 10. The motorcycle 1A includes a step board 11 which is provided below the seat 10. A rider seated on the seat 10 places his/her feet on the step board 11.

The vehicle body frame 4A supports an engine unit 20A. The engine unit 20A is a unit-swing engine unit. A front end portion of the engine unit 20A is swingably supported by the vehicle body frame 4A. Furthermore, the engine unit 20A is swingably connected to the vehicle body frame 4A via a rear suspension 9.

A rear end portion of the engine unit 20A supports the rear wheel unit 3. The rear wheel unit 3 is therefore indirectly supported by the vehicle body frame 4A. The rear wheel unit 3 is composed of one rear wheel. The rear wheel includes a rubber tire and a wheel. The engine unit 20A is arranged to be able to apply driving force to the rear wheel unit 3. The rear wheel unit 3 (rear wheel) is therefore a driving wheel of the motorcycle 1A. The engine unit 20A is equivalent to a driving device of the present teaching. The engine unit 20A is an example of the driving device 20 of the embodiment above.

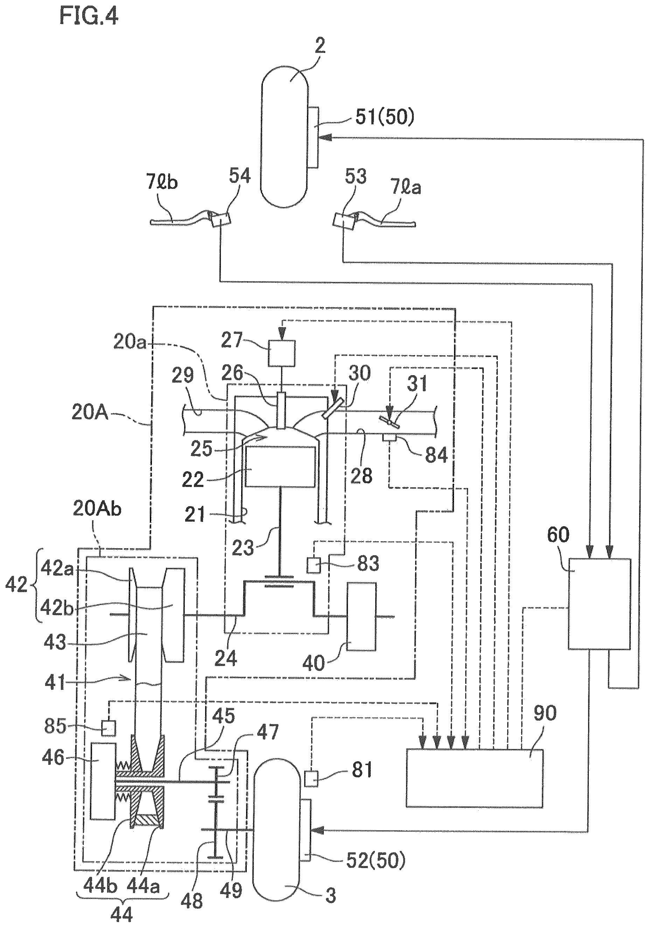

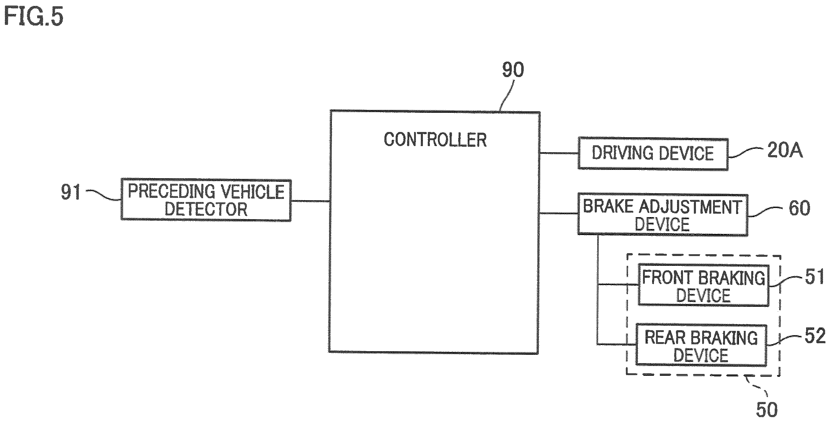

As shown in FIG. 5, the motorcycle 1A includes a braking device 50. The braking device 50 includes a front braking device 51 and a rear braking device 52. As shown in FIG. 2 and FIG. 4, the front braking device 51 is provided at the front wheel unit 2. The front braking device 51 is arranged to be able to apply braking force to the front wheel unit 2. The rear braking device 52 is provided at the rear wheel unit 3. The rear braking device 52 is arranged to be able to apply braking force to the rear wheel unit 3. The front braking device 51 and the rear braking device 52 are hydraulic brakes. The front braking device 51 and the rear braking device 52 are hydraulic disc brakes, for example. The front braking device 51 and the rear braking device 52 may be known brakes different from these hydraulic brakes. The front braking device 51 may be, for example, a hydraulic drum brake.

As shown in FIG. 3, the steering wheel 7 includes a right grip 7ga and a left grip 7gb. The right grip 7ga is an accelerator grip. The accelerator grip 7ga is operated by a hand of the rider. The accelerator grip 7ga is operated to adjust an output (driving source torque) of an engine 20a of the engine unit 20A. Basically, the driving source torque increases as the degree of movement (rotation amount) of the accelerator grip 7ga increases. The output (driving source torque) of the engine 20a can be controlled by a controller 90 (FIG. 4 and FIG. 5) without requiring an operation of the accelerator grip 7ga. The controller 90 is configured to control components of the motorcycle 1A.

As shown in FIG. 3, the steering wheel 7 includes a right brake lever 71a and a left brake lever 71b. The right brake lever 71a and the left brake lever 71b are operated by hands of the rider. When the right brake lever 71a is operated, the front braking device 51 is activated and braking force is applied to the front wheel unit 2. When the left brake lever 71b is operated, the rear braking device 52 is activated and braking force is applied to the rear wheel unit 3. When the right brake lever 71a is operated, both of the front braking device 51 and the rear braking device 52 may be activated. When the left brake lever 71b is operated, both of the front braking device 51 and the rear braking device 52 may be activated. Hereinafter, the right brake lever 71a will be referred to as a front brake operator 71a, and the left brake lever 71b will be referred to as a rear brake operator 71b.

As shown in FIG. 4, the front brake operator 71a is connected to a front brake cylinder 53, whereas the rear brake operator 71b is connected to a rear brake cylinder 54. The brake cylinders 53 and 54 are connected to the front braking device 51 and the rear braking device 52 via the brake adjustment device 60. The brake adjustment device 60 includes a brake pressure sensor (not illustrated) configured the detect hydraulic pressure. The brake adjustment device 60 is controlled by the controller 90. When the front brake operator 71a or the rear brake operator 71b is operated, the controller 90 controls the brake adjustment device 60 to activate the braking device 50. The front braking device 51 and the rear braking device 52 are operated by a command from the controller 90 even when the front brake operator 71a and the rear brake operator 71b are not operated.

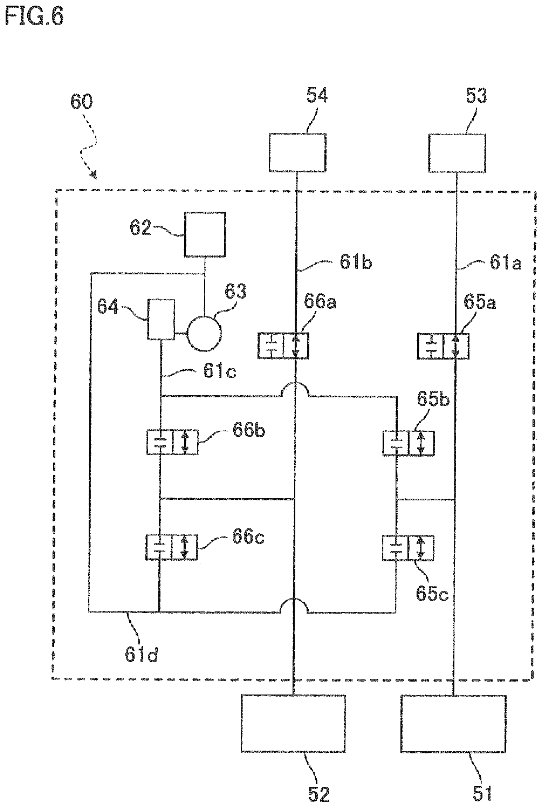

The following will explain an example of the brake adjustment device 60 with reference to FIG. 6. The brake adjustment device 60 shown in FIG. 6 includes first to fourth passages 61a, 61b, 61c, and 61d, a reserve tank 62, a pump 63, an accumulator 64, and valves 65a to 65c and 66a to 66c. The valves 65a to 65c and 66a to 66c are controlled by the controller 90. The front brake cylinder 53 is connected to the front braking device 51 via the first passage 61a. A first front valve 65a is provided on the first passage 61a. The rear brake cylinder 54 is connected to the rear braking device 52 via the second passage 61b. A first rear valve 66a is provided on the second passage 61b. The reserve tank 62 is connected to the first passage 61a and the second passage 61b via the third passage 61c. The third passage 61c is branched at plural parts. On the third passage 61c, the pump 63, the accumulator 64, a second front valve 65b, and a second rear valve 66b are provided. The third passage 61c is used for supplying hydraulic fluid from the reserve tank 62 to the front braking device 51 and the rear braking device 52. To the third passage 61c, a fourth passage 61d is connected to circumvent the pump 63, the accumulator 64, the second front valve 65b, and the second rear valve 66b. On the fourth passage 61d, a third front valve 65c and a third rear valve 66c are provided. The fourth passage 61d is used for supplying hydraulic fluid to the reserve tank 62 from the front braking device 51 and the rear braking device 52. When the hydraulic fluid is supplied to the reserve tank 62 from the front braking device 51 and the rear braking device 52, part of the third passage 61c is used together with the fourth passage 61d.

Normally, as shown in FIG. 6, the first front valve 65a and the first rear valve 66a are open whereas the remaining valves 65b, 65c, 66b, and 66c are closed. As the front brake operator 71a is operated, a piston of the front brake cylinder 53 moves. As a result, the hydraulic pressure in the front braking device 51 increases and the front braking device 51 is activated. As the rear brake operator 71b is operated, a piston of the rear brake cylinder 54 moves. As a result, the hydraulic pressure in the rear braking device 52 increases and the rear braking device 52 is activated.

In order to activate the front braking device 51 without an operation of the front brake operator 71a, the controller 90 opens the second front valve 65b and closes the first front valve 65a. As a result, hydraulic fluid is pressure-supplied from the pump 63 to the front braking device 51. In order to maintain the hydraulic pressure in the front braking device 51 while the front braking device 51 is being activated, the controller 90 closes the second front valve 65b. In order to release the front braking device 51, the controller 90 opens the third front valve 65c while the second front valve 65b is kept closed. As a result, the hydraulic fluid returns from the front braking device 51 to the reserve tank 62. By adjusting the hydraulic pressure in the front braking device 51 in this way, the controller 90 controls the braking force applied to the front wheel unit 2 by the front braking device 51.

In order to activate the rear braking device 52 without an operation of the rear brake operator 71b, the controller 90 opens the second rear valve 66b and closes the first rear valve 66a. As a result, hydraulic fluid is pressure-supplied from the pump 63 to the rear braking device 52. In order to maintain the hydraulic pressure of the rear braking device 52 while the rear braking device 52 is being activated, the controller 90 closes the second rear valve 66b. In order to release the rear braking device 52, the controller 90 opens the third rear valve 66c while the second rear valve 66b is kept closed. As a result, the hydraulic fluid returns from the rear braking device 52 to the reserve tank 62. By adjusting the hydraulic pressure in the rear braking device 52 in this way, the controller 90 controls the braking force applied to the rear wheel unit 3 by the rear braking device 52.

The vehicle body frame 4A supports a battery (not illustrated). The battery supplies electric power to electronic devices such as the controller 90 (FIG. 4 and FIG. 5) and sensors.

The motorcycle 1A includes a display (not illustrated). The display is positioned to be viewable by the rider seated on the seat 10. The display is configured to display, for example, vehicle speed (speed in the traveling direction), a driving mode, and various warnings.

The steering wheel 7 is provided with plural switches. The switches include a switch by which an operation to start or stop power supply from a battery to electric equipment can be received. The switches include a switch by which an operation to start or stop the engine unit 20A can be received. The switches include a switch by which an operation to select at least one driving mode from among plural driving modes can be received.

The driving modes include a manual driving mode and plural driving assist modes. The manual driving mode is a mode in which the motorcycle 1A is driven by the rider. Each driving assist mode is a mode in which the motorcycle 1A is driven by the rider and at the same time the driving by the rider is assisted. Plural driving assist modes can be selected simultaneously. The driving assist mode may be automatically set in accordance with the running situation, even if the setting of the mode is not performed by using the switch.

One of the driving assist modes is a mode for performing inter-vehicle distance adjustment control. The inter-vehicle distance adjustment control is adjustment of vehicle speed (speed in the traveling direction) to achieve that the distance in the vehicle front-rear direction between a preceding vehicle and the host vehicle 1A is maintained at a target distance. The preceding vehicle is a vehicle which runs at a position forward of the host vehicle 1A, in the same running direction as the host vehicle 1A. In this regard, when vehicles run in the same direction, the vehicle may not run in the exactly same direction. When a vehicle and the host vehicle 1A run in the same direction, the vehicle may run on a lane which is identical in terms of the vehicle flow direction with a lane on which the host vehicle runs. A preceding vehicle which is a target of inter-vehicle distance adjustment control is a vehicle running on the same lane as the host vehicle. A preceding vehicle is detected by a later-described preceding vehicle detector 91.
Control of the vehicle speed such that the distance in the vehicle front-rear direction between a preceding vehicle and the host vehicle is maintained at a target distance is typically termed Adaptive Cruise Control (ACC), Auto Cruise Control, or Active Cruise Control. The inter-vehicle distance adjustment control is preferably used in highways and roads exclusive for motor vehicles. In this connection, the roads exclusive for motor vehicles are roads without pedestrians. Motorcycles are allowed to run the roads exclusive for motor vehicles.

The driving assist modes may include a cruise control mode in which the vehicle speed is maintained to be constant. The driving assist modes may include an automatic brake mode in which an obstacle or a human body is detected and the brake is automatically activated.

As shown in FIG. 2 and FIG. 3, the motorcycle 1A includes the preceding vehicle detector 91. The preceding vehicle detector 91 is able to detect an object forward of the motorcycle 1A. The installation location of the preceding vehicle detector 91 may be different from the location shown in FIG. 2 and FIG. 3. The preceding vehicle detector 91 is configured to detect the shortest distance between an object and the preceding vehicle detector 91 and detect information regarding a position and a direction of the object relative to the preceding vehicle detector 91.

The preceding vehicle detector 91 may be a sensor which is configured to detect an object by using an electromagnetic wave or an acoustic wave. To be more specific, for example, the preceding vehicle detector 91 may be a laser radar, a microwave radar, a millimeter wave radar, an infrared sensor, or a radio wave sensor. The preceding vehicle detector 91 may be a camera by which images are taken. The camera is preferably a compound eye camera having plural lens mechanisms. The preceding vehicle detector 91 may include both a camera and a sensor which is configured to detect an object by using an electromagnetic wave or an acoustic wave. The preceding vehicle detector 91 may include plural types of sensors each of which is configured to detect an object by using an electromagnetic wave or an acoustic wave.

As shown in FIG. 4, the motorcycle 1A includes a wheel speed sensor 81. The wheel speed sensor 81 is provided in the rear wheel unit 3 to detect the rotation speed of the rear wheel unit 3. The motorcycle 1A may include a wheel speed sensor provided in the front wheel unit 2 in place of the wheel speed sensor 81 provided in the rear wheel unit 3. The motorcycle 1A may include a wheel speed sensor provided in the front wheel unit 2 in addition to the wheel speed sensor 81 provided in the rear wheel unit 3. The controller 90 detects the speed of the motorcycle 1A in the vehicle front-rear direction based on a signal from the wheel speed sensor 81. The controller 90 may detect the speed of the motorcycle 1A in the vehicle front-rear direction based on images taken by the camera. The wheel speed sensor may not be provided in this case.

The motorcycle 1A includes a steering angle sensor (not illustrated) configured to detect the steering angle of the steering wheel 7. The steering angle of the steering wheel 7 is the rotational angle of the steering shaft 6. The motorcycle 1A includes a roll gyro sensor which is configured to detect at least one of the roll angle, the roll rate (roll angular speed), or the roll angular acceleration of the vehicle body frame 4A. The roll angle of the vehicle body frame 4A is a rotational angle about a roll axis Ro (see FIG. 2 and FIG. 3) of the vehicle body frame 4A. The motorcycle 1A may include a yaw gyro sensor which is configured to detect at least one of the yaw angle, the yaw rate (yaw angular speed), or the yaw angular acceleration of the vehicle body frame 4A. The yaw angle of the vehicle body frame 4A is a rotational angle about a yaw axis Y (see FIG. 2 and FIG. 3) of the vehicle body frame 4A. The yaw axis Y is parallel to the vehicle up-down direction when the motorcycle 1A stands upright on a horizontal road surface. The yaw axis Y may slightly lean with respect to the vehicle up-down direction when the motorcycle 1A stands upright on a horizontal road surface. For example, the yaw axis Y may be parallel to the steering shaft 6. The motorcycle 1A may include a pitch gyro sensor which is configured to detect at least one of the pitch angle, the pitch rate (pitch angular speed), or the pitch angular acceleration of the vehicle body frame 4A. The pitch angle of the vehicle body frame 4A is a rotational angle about a pitch axis P (see FIG. 2 and FIG. 3) of the vehicle body frame 4A. The motorcycle 1A may include an inertial measurement unit (IMU). The IMU functions as the roll gyro sensor, the yaw gyro sensor, and the pitch gyro sensor.

The motorcycle 1A may include a wireless communication device (not illustrated). The wireless communication device may be configured to perform vehicle-to-vehicle communication and road-to-vehicle communication. The vehicle-to-vehicle communication is communication which is performed between on-board communication apparatuses. The road-to-vehicle communication is communication performed between a road-side communication apparatus mounted on a road and an on-board communication apparatus. The wireless communication device may be configured to receive a GNSS (Global Navigation Satellite System) signal. The controller 90 is able to acquire information of the absolute location of the host vehicle 1A.

### <2> Structure of Engine Unit 20A

The engine unit 20A includes an engine 20a, a torque transmission mechanism 20Ab, and an ISG (Integrated Starter Generator) 40. The engine 20a generates a driving source torque. The positive or negative driving source torque generated by the engine 20a is transmitted to the torque transmission mechanism 20Ab. The torque transmission mechanism 20Ab transmits at least part of the positive or negative driving source torque transmitted from the engine 20a to the rear wheel unit 3. Consequently, positive or negative driving force is applied to the rear wheel unit 3. The engine 20a is equivalent to a driving source of the present teaching. The engine 20a is an example of the driving source 20a of the embodiment above. The torque transmission mechanism 20Ab is equivalent to a torque transmission mechanism of the present teaching. The torque transmission mechanism 20Ab is an example of the torque transmission mechanism 20b of the embodiment above.

The engine 20a is a gasoline engine. The engine 20a is a four-stroke engine. The four-stroke engine repeats, in each cylinder, an intake process, a compression process, a combustion process (expansion process), and an exhaust process in this order. The engine 20a is a single-cylinder engine. The cooling method of the engine 20a is not limited to any particular type.

The engine 20a has a cylinder hole 21. The cylinder hole 21 houses a piston 22 in a slidable manner. The piston 22 is connected to a crankshaft 24 by a connecting rod 23. The engine 20a includes a combustion chamber 25. The combustion chamber 25 is partially formed by the piston 22 and the inner surface of the cylinder hole 21. A leading end of an ignition plug 26 is provided inside the combustion chamber 25. The ignition plug 26 is connected to an ignition coil 27. The ignition coil 27 generates a high voltage to cause spark discharge of the ignition plug 26. The ignition plug 26 is configured to ignite an air-fuel mixture of fuel and air in the combustion chamber 25. On account of combustion energy generated by the combustion of the ignited air-fuel mixture, the piston 22 moves to expand the combustion chamber 25. AS a result, the crankshaft 24 rotates and the piston 22 reciprocates. The rotational central axis of the crankshaft 24 is parallel to the vehicle left-right direction.

The combustion chamber 25 is connected to an intake passage 28 and an exhaust passage 29. The atmospheric air is supplied to the combustion chamber 25 through an intake passage 28. Combustion gas (exhaust gas) generated in the combustion chamber 25 is discharged to the atmosphere through the exhaust passage 29. Each of the intake passage 28 and the exhaust passage 29 is partially formed ion the engine 20a. The remaining part of the intake passage 28 is formed of a pipe, etc. An unillustrated intake valve is provided at the border between the intake passage 28 and the combustion chamber 25. An unillustrated exhaust valve is provided at the border between the exhaust passage 29 and the combustion chamber 25. The intake valve and the exhaust valve are driven by an unillustrated valve operating mechanism. The valve operating mechanism is configured to drive the intake valve and the exhaust valve in accordance with the rotation of the crankshaft 24.

The engine unit 20A includes an injector 30 as a fuel supplier for supplying fuel to the combustion chamber 25. The injector 30 is configured to inject fuel from its leading end portion. An injecting portion (leading end portion) of the injector 30 is provided inside the intake passage 28. The injecting portion of the injector 30 may be provided inside the combustion chamber 25. A fuel injection amount of the injector 30 is controlled so that the ratio of air to fuel in the air-fuel mixture in the combustion chamber 25 is close to the stoichiometric air-fuel ratio. The injector 30 is connected to a fuel pump (not illustrated) which is provided in a fuel tank (not illustrated). The fuel in the fuel tank is pressure-fed to the injector by the fuel pump. Alternatively, a carburetor may be used as the fuel supplier in place of the injector 30. The carburetor utilizes a negative pressure in the combustion chamber 25 to supply fuel into the combustion chamber 25.

The engine unit 20A includes a throttle valve 31. The throttle valve 31 is provided in the intake passage 28. The throttle valve 31 adjusts an amount of air supplied to the combustion chamber 25. The throttle valve 31 is an electronic-controlled throttle valve. The throttle valve 31 is opened and closed by the controller 90.

The engine unit 20A includes members such as an engine rotation speed sensor 83, a throttle opening degree sensor 84, an intake pressure sensor (not illustrated), an intake temperature sensor (not illustrated), an engine temperature sensor (not illustrated), and an oxygen sensor (not illustrated). The engine rotation speed sensor 83 is configured to detect the rotation speed of the crankshaft 24, i.e., the engine rotation speed. To be more specific, the engine rotation speed sensor 83 detects the rotation number of the crankshaft 24 per unit time. The throttle opening degree sensor (throttle position sensor) 84 is configured to detect the opening degree of the throttle valve 31 by detecting the position of the throttle valve 31. Hereinafter, the opening degree of the throttle valve 31 will be referred to as a throttle opening degree. The intake pressure sensor is configured to detect the pressure of air in the intake passage 28. The intake temperature sensor is configured to detect the temperature of air in the intake passage 28. The engine temperature sensor is configured to directly or indirectly detect the temperature of the engine 20a. The oxygen sensor is configured to detect the oxygen density of the exhaust gas in the exhaust passage 29.

As the engine 20a is driven, a positive or negative driving source torque is generated at the crankshaft 24. Whether the driving source torque is positive or negative depends on the engine rotation speed and the throttle opening degree. The throttle opening degree at which the driving source torque is switched between positive and negative varies depending on the engine rotation speed. When the throttle opening degree is larger than the threshold throttle opening degree at which the driving source torque is switched between positive and negative, the driving source torque is positive. The higher the engine rotation speed is, the larger the threshold throttle opening degree at which the driving source torque is switched between positive and negative is. The threshold throttle opening degree at which the driving source torque is switched between positive and negative is more or less in proportion to the engine rotation speed. Irrespective of the engine rotation speed, the driving source torque is positive when the throttle opening degree is larger than a predetermined opening degree.

The ISG 40 is provided on the crankshaft 24. The ISG 40 functions as both a starter motor and a generator. When the engine 20a starts, the ISG 40 functions as a starter motor and rotates the crankshaft 24. While the motorcycle 1A is running, the ISG 40 functions as a generator. The electric power generated by the ISG 40 is stored in a battery. The engine unit 20A may include an independent generator and an independent starter motor, in place of the ISG 40.

The torque transmission mechanism 20Ab includes a continuously variable transmission 41, a clutch 46, a gear 47, and a gear 48.

The continuously variable transmission 41 includes a primary pulley 42, a secondary pulley 44, and an annular belt 43 (continuously variable transmission belt). The primary pulley 42 is provided on the crankshaft 24 and rotates together with the crankshaft 24. The primary pulley 42 may be independent from the crankshaft 24 and provided on a primary shaft to which a torque is transmitted from the crankshaft 24. The primary pulley 42 includes a fixed sheave 42a and a movable sheave 42b. The fixed sheave 42a is provided on the crankshaft 24 so as not to be slidable in the axial direction. The movable sheave 42b is provided on the crankshaft 24 so as to be slidable in the axial direction. Between the fixed sheave 42a and the movable sheave 42b, a V-shaped groove is formed. The secondary pulley 44 is provided on a secondary shaft 45 so as to be relatively rotatable. The secondary pulley 44 is connected to the secondary shaft 45 via the clutch 46. The secondary pulley 44 includes a fixed sheave 44a and a movable sheave 44b. The fixed sheave 44a is provided on the secondary shaft 45 so as not to be slidable in the axial direction. The movable sheave 44b is provided on the secondary shaft 45 so as to be slidable in the axial direction. Between the fixed sheave 44a and the movable sheave 44b, a V-shaped groove is formed. The belt 43 is a so-called V belt. The belt 43 is wound into the V-shaped grooves of the two pulleys 42 and 44. The longer the groove width is, the shorter the diameter of a part on which the belt 43 is wound is. The movable sheave 42b of the primary pulley 42 is arranged to slide in the axial direction on account of centrifugal force. The groove width of the primary pulley 42 is decreased as the rotation speed of the crankshaft 24 is increased. The movable sheave 44b of the secondary pulley 44 receives, from a spring, elastic force in the direction of decreasing the groove width of the secondary pulley 44. As the groove width of the primary pulley 42 is decreased, the movable sheave 44b slides against the elastic force of the spring to increase the groove width of the secondary pulley 44. As the groove width of the primary pulley 42 is increased, the groove width of the secondary pulley 44 is decreased by the elastic force of the spring. The ratio of the rotation speed of the secondary pulley 44 to the rotation speed of the primary pulley 42 is termed a transmission ratio. The continuously variable transmission 41 is configured to be able to automatically change the transmission ratio by utilizing centrifugal force. In other words, the continuously variable transmission 41 is able to change the ratio of the rotation speed of the crankshaft 24 to the rotation speed of the driving wheel (rear wheel unit 3). The engine unit 20A may include a pulley sensor (not illustrated) which is configured to detect a change of the groove width of the primary pulley 42. The controller 90 detects the transmission ratio of the continuously variable transmission 41 based on a signal from the pulley sensor.

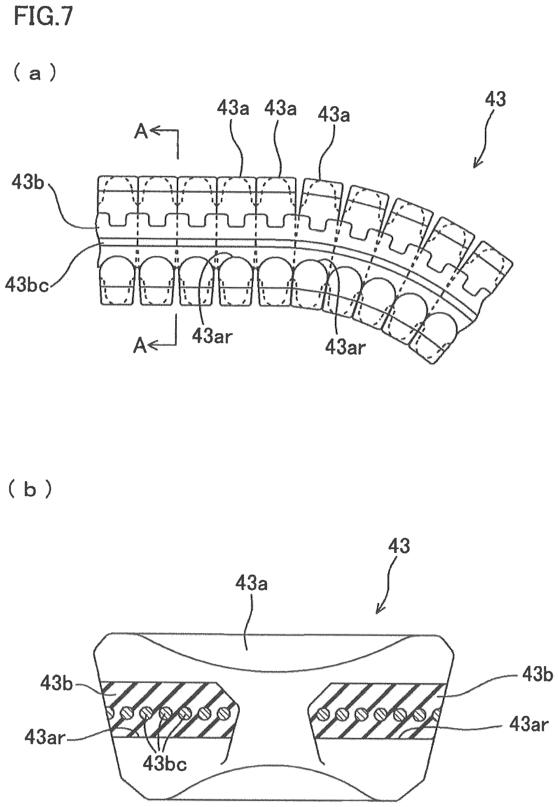

The belt 43 may be a continuously variable transmission resin block belt. The belt 43 shown in FIG. 7(a) and FIG. 7(b) is an example of the continuously variable transmission resin block belt. The belt 43 shown in FIG. 7(a) includes resin blocks 43a and two endless connecting bodies 43b connecting these resin blocks 43a. The resin block 43a is mainly made of synthetic resin. The resin block 43a may include a reinforcement material such as carbon fibers. The resin block 43a may be formed by coating a metal frame with a synthetic resin composition. The resin block 43a may not include the metal frame. In other words, the resin block 43a may be made solely of the synthetic resin composition. The resin blocks 43a are lined up in the longitudinal direction of the belt (circumferential direction of the belt). A concave portion 43ar is formed in each of two side surfaces of the resin block 43a, which make contact with the grooves of the primary pulley 42 and the secondary pulley 44. The connecting body 43b is fitted into the concave portion 43ar. The connecting body 43b is mainly made of rubber. Plural core wires 43bc are embedded in the connecting body 43b.

The belt 43 may be a continuously variable transmission rubber belt. The continuously variable transmission rubber belt is mainly made of rubber. Plural core wires are embedded in the continuously variable transmission rubber belt. The surface of the continuously variable transmission rubber belt may be at least partially covered with a covering cloth. As such, the surface of the continuously variable transmission rubber belt, which makes contact with the grooves of the primary pulley 42 and the secondary pulley 44, is made of rubber or is formed of the covering cloth. The belt 43 may be a metal belt.

The clutch 46 is provided between the secondary pulley 44 and the secondary shaft 45 on a torque transmission path of the torque transmission mechanism 20Ab. On the torque transmission path of the torque transmission mechanism 20Ab, the distance from the engine 20a to the secondary shaft 45 is longer than the distance from the engine 20a to the secondary pulley 44. The clutch 46 is switchable between a connection state in which transmission of a torque from the secondary pulley 44 to the secondary shaft 45 is allowed and a cut-off state in which the transmission of a torque from the secondary pulley 44 to the secondary shaft 45 is blocked. The clutch 46 is able to take a partial connection state in which the transmission of a torque from the secondary pulley 44 to the secondary shaft 45 is allowed at a lower torque transmission rate than in the connection state. This torque transmission rate indicates the rate of transmission of a torque from the secondary pulley 44 to the secondary shaft 45. The clutch 46 in the connection state allows the transmission of a torque from the secondary shaft 45 to the secondary pulley 44, too. The clutch 46 in the cut-off state blocks the transmission of a torque from the secondary shaft 45 to the secondary pulley 44, too. The secondary pulley 44 is equivalent to a first member of the present teaching. The secondary shaft 45 is equivalent to a second member of the present teaching.

The clutch 46 is a centrifugal clutch. The centrifugal clutch is a type of friction clutches transmitting a torque by utilizing friction force. The centrifugal clutch is configured to be automatically switched between the connection state and the cut-off state by means of centrifugal force. The clutch 46 is automatically switched from the cut-off state to the connection state via the partial connection state, in accordance with increase in the rotation speed of the secondary pulley 44. The engine unit 20A includes a clutch sensor 85 which is configured to detect whether the clutch 46 is in the connection state, the partial connection state, or the cut-off state. The clutch 46 may be a dry centrifugal clutch or a wet centrifugal clutch. The clutch 46 may be a shoe-type centrifugal clutch or a multi-plate centrifugal clutch.

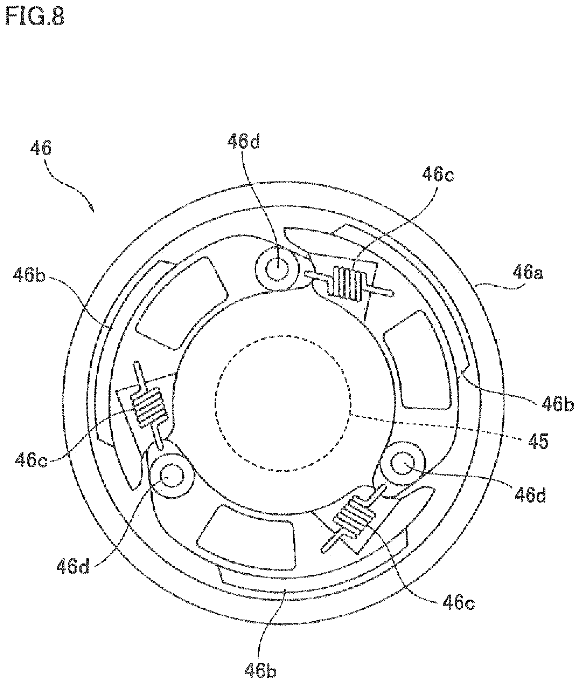

The clutch 46 shown in FIG. 8 is an example of a dry shoe-type centrifugal clutch. FIG. 8 shows the clutch 46 when the engine 20a is not driven. The clutch 46 shown in FIG. 8 includes a clutch outer 46a, clutch shoes 46b, and clutch springs 46c. The clutch outer 46a is provided to rotate together with the secondary shaft 45. The clutch outer 46a has a cylindrical portion. The clutch shoes 46b and the clutch springs 46c are provided inside the clutch outer 46a. The clutch shoes 46b are aligned in the circumferential direction. Each clutch shoe 46b is rotatable about a pin 46d which is provided at one end in the circumferential direction of the clutch shoe 46b. The pin 46d is attached to an unillustrated clutch plate fixed to the secondary pulley 44. The clutch shoe 46b therefore rotates together with the secondary pulley 44. The clutch spring 46c connects neighboring two clutch shoes 46b. The clutch spring 46c is provided in an elongated state. Therefore, due to the elastic reaction force of the clutch spring 46c, the clutch shoe 46b is pressed toward the central axis of the secondary shaft 45.

When the engine 20a is not driven, as shown in FIG. 8, a gap is formed between the clutch shoe 46b and the clutch outer 46a by the elastic reaction force of the clutch spring 46c. When the engine 20a is activated, the secondary pulley 44 starts to rotate. As the rotation speed of the secondary pulley 44 gradually increases, the centrifugal force causes the clutch shoe 46b to swing about the pin 46d away from the central axis of the secondary shaft 45, against the elastic reaction force of the clutch spring 46c. When the rotation speed of the secondary pulley 44 reaches clutch connection speed, the clutch shoe 46b makes contact with the clutch outer 46a. The clutch shoe 46b then transmits a torque to the clutch outer 46a while sliding on the clutch outer 46a. In other words, the clutch 46 takes the partial connection state. Thereafter, as the rotation speed of the secondary pulley 44 is further increased, the clutch shoe 46b rotates together with the clutch outer 46a on account of the friction force acting between the clutch shoe 46b and the clutch outer 46a. As a result, the clutch 46 takes the connection state.

The rotation speed of the crankshaft 24 when the clutch 46 is switched from the cut-off state to the partial connection state is higher than the rotation speed of the crankshaft 24 rotated by the ISG 40 functioning as a starter motor. The torque of the crankshaft 24 generated by the starter motor is therefore not transmitted to the rear wheel unit 3. The starter motor is not a driving source of the present teaching.

As shown in FIG. 2, among two regions of the belt 43 between the pulleys 42 and 44, the region moving from the primary pulley 42 toward the secondary pulley 44 is a first region 43A. The region moving from the secondary pulley 44 toward the primary pulley 42 is a second region 43B.
When a positive driving source torque is generated and the clutch 46 is in the connection state or the partial connection state, basically, the second region 43B is in the tensioned state whereas the first region 43A is in the slackened state. When a negative driving source torque is generated and the clutch 46 is in the connection state or the partial connection state, basically, the first region 43A is in the tensioned state whereas the second region 43B is in the slackened state. When the braking device 50 is activated, basically, the first region 43A is in the tensioned state whereas the second region 43B is in the slackened state.
When the driving source torque is switched from positive to negative and the clutch 46 is in the connection state or the partial connection state, the second region 43B is changed from the tensioned state to the slackened state. Thereafter, the first region 43A is changed from the slackened state to the tensioned state. Therefore, temporarily, both of the first region 43A and the second region 43B are in the slackened state. In other words, torque transmission between the pulley 42 and the pulley 44 via the belt 43 is temporarily stopped. Similarly, when the driving source torque is switched from negative to positive and the clutch 46 is in the connection state or the partial connection state, torque transmission between the pulley 42 and the pulley 44 via the belt 43 is temporarily stopped.

The gear 47 is provided on the secondary shaft 45 and rotates together with the secondary shaft 45. The gear 48 is provided on an axle shaft 49 of the rear wheel unit 3. The gear 47 is meshed with the gear 48. The rear wheel unit 3 is provided to rotate together with the gear 48. A torque of the secondary shaft 45 is transmitted to the rear wheel unit 3 via the gear 47 and the gear 48. The number of gear teeth 48t of the gear 48 is larger than the number of gear teeth 47t of the gear 47. The rotation speed of the rear wheel unit 3 is therefore lower than the rotation speed of the secondary shaft 45. The number of gear teeth 48t of the gear 48 may be equal to or smaller than the number of gear teeth 47t of the gear 47. On the torque transmission path, one or two intermediate gear may be provided between the gear 47 and the gear 48. The intermediate gear is provided on a shaft which is neither the secondary shaft 45 nor the axle shaft 49.

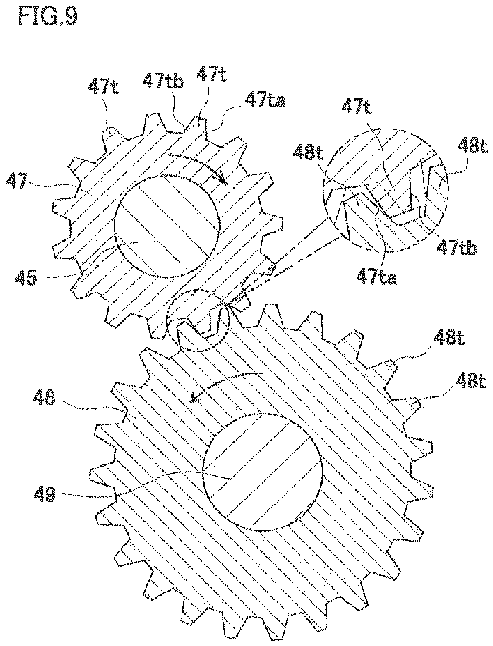

As shown in FIG. 9, the gear 47 includes the gear teeth 47t. Each gear tooth 47t has a first gear surface 47ta and a second gear surface 47tb. The first gear surface 47ta is a gear surface facing in the rotational direction of the gear 47 (indicated by an arrow in FIG. 9), whereas the second gear surface 47tb is a gear surface facing in the direction opposite to the rotational direction of the gear 47. The gear 48 includes gear teeth 48t. The gear 47 and the gear 48 are provided so that there is a backlash between the gear tooth 47t and the gear tooth 48t.
When a positive driving source torque is generated and the clutch 46 is in the connection state or the partial connection state, basically, the first gear surface 47ta of the gear tooth 47t of the gear 47 is in contact with the gear tooth 48t of the gear 48. At this stage, there is a backlash between the second gear surface 47tb of the gear tooth 47t of the gear 47 and the gear tooth 48t of the gear 48.
When a negative driving source torque is generated and the clutch 46 is in the connection state or the partial connection state, basically, the second gear surface 47tb of the gear tooth 47t of the gear 47 is in contact with the gear tooth 48t of the gear 48. At this stage, there is a backlash between the first gear surface 47ta of the gear tooth 47t of the gear 47 and the gear tooth 48t of the gear 48.
When the driving source torque is switched from positive to negative and the clutch 46 is in the connection state or the partial connection state, the first gear surface 47ta of the gear tooth 47t is changed from a state of being in contact with the gear tooth 48t to a state of not being in contact with the gear tooth 48t. Thereafter, the second gear surface 47tb of the gear tooth 47t makes contact with the gear tooth 48t. Therefore, temporarily, both of the first gear surface 47ta and the second gear surface 47tb are not in contact with the gear tooth 48t. In other words, a torque is temporarily not transmitted between the gear 47 and the gear 48. Similarly, when the driving source torque is switched from negative to positive and the clutch 46 is in the connection state or the partial connection state, a torque is temporarily not transmitted between the gear 47 and the gear 48.

When a positive driving source torque is generated and the clutch 46 is in the connection state or the partial connection state, positive driving force is applied to the rear wheel unit 3. When positive driving force is applied to the rear wheel unit 3 whereas braking force is not applied to the front wheel unit 2 and the rear wheel unit 3, the motorcycle 1A basically accelerates. To be more specific, the motorcycle 1A accelerates when the positive driving force is larger than the running resistance. The running resistance is large when the road surface is a steep upslope or when a strong headwind blows. When positive driving force is applied but the positive driving force is smaller than the running resistance, the motorcycle 1A decelerates. A statement "the motorcycle 1A accelerates or decelerates" indicates that the motorcycle 1A accelerates or decelerates in the vehicle forward direction. The same applies to the descriptions below.
When a negative driving source torque is generated and the clutch 46 is in the connection state or the partial connection state, negative driving force is applied to the rear wheel unit 3. When negative driving force is applied to the rear wheel unit 3, the motorcycle 1A basically decelerates. To be more specific, the motorcycle 1A decelerates when an absolute value of negative driving force is larger than an absolute value of negative running resistance. The negative running resistance is generated when the road surface is a steep downslope or when strong tailwind blows. Even if negative driving force is applied, the motorcycle 1A accelerates when the absolute value of the negative driving force is smaller than the absolute value of the negative running resistance.

No matter whether the driving source torque is positive or negative, the motorcycle 1A basically decelerates or runs at constant speed when the clutch 46 is in the cut-off state. Even when the clutch 46 is in the cut-off state, the motorcycle 1A accelerates when the road surface is a steep downslope or when strong headwind blows and negative running resistance is generated.

When braking force is applied to at least one of the front wheel unit 2 or the rear wheel unit 3 by the braking device 50 whereas positive driving force is not applied to the rear wheel unit 3, the motorcycle 1A basically decelerates. Even if only braking force is applied, the motorcycle 1A accelerates when the total braking force is smaller than the absolute value of the negative running resistance.

When braking force is applied to at least one of the front wheel unit 2 or the rear wheel unit 3 while positive driving force is applied to the rear wheel unit 3 and the positive driving force is larger than the sum total of the total braking force and the running resistance, the motorcycle 1A accelerates. The motorcycle 1A decelerates when the positive driving force is smaller than the sum total of the total braking force and the running resistance. The motorcycle 1A runs at constant speed when the positive driving force is equal to the sum total of the total braking force and the running resistance.

### <3> Structure of Controller 90

The controller 90 includes a processor and a storage device (storage). The processor is, for example, a CPU (Central Processing Unit), a GPU (Graphics Processing Unit), a microcontroller, a microprocessor, an application specific integrated circuit (ASIC), a programmable logic circuit (PLC), a field programmable gate array (FPGA), etc. The processor may include a register therein. The storage device stores data. The storage device stores information necessary for processes executed by the processor. The storage device includes, for example, a ROM (Read Only Memory) and a RAM (Random Access Memory). The RAM temporarily stores data when the processor executes a program. The ROM stores a program executed by the processor. The processor is configured or programmed to execute driving assist control including inter-vehicle distance adjustment control.

As shown in FIG. 4, the controller 90 is electrically connected to sensors, an ignition coil 27, an injector 30, a fuel pump (not illustrated), a throttle valve 31, and a brake adjustment device 60. The controller 90 receives signals from the sensors. The controller 90 electronically controls the ignition coil 27, the injector 30, the fuel pump (not illustrated), the throttle valve 31, and the brake adjustment device 60, based on the signals from the sensors. The controller 90 controls a driving source torque generated by the engine 20a, by controlling the ignition coil 27, the injector 30, the fuel pump, and the throttle valve 31. Consequently, driving force applied to the rear wheel unit 3 is controlled. In this way, the controller 90 controls the driving force applied to the rear wheel unit 3 by controlling the engine unit 20A. The controller 90 controls the front braking device 51 and the rear braking device 52 by controlling the brake adjustment device 60. In other words, the controller 90 controls the braking force applied to the front wheel unit 2 and the braking force applied to the rear wheel unit 3 by controlling the brake adjustment device 60.

### (1) Basic Operations of Inter-Vehicle Distance Adjustment Control

The following will describe an example of basic operations of the controller 90 in the mode for performing inter-vehicle distance adjustment control. The basic operations are operations that are performed regardless of the speed of the motorcycle 1A in the vehicle forward direction.

The controller 90 is configured to detect the position of a lane L in which a host vehicle 1A runs, based on a signal from a preceding vehicle detector 91, for example. For example, the position of the lane L may be detected by detecting a mark displayed on the lane L in an image taken by a camera.

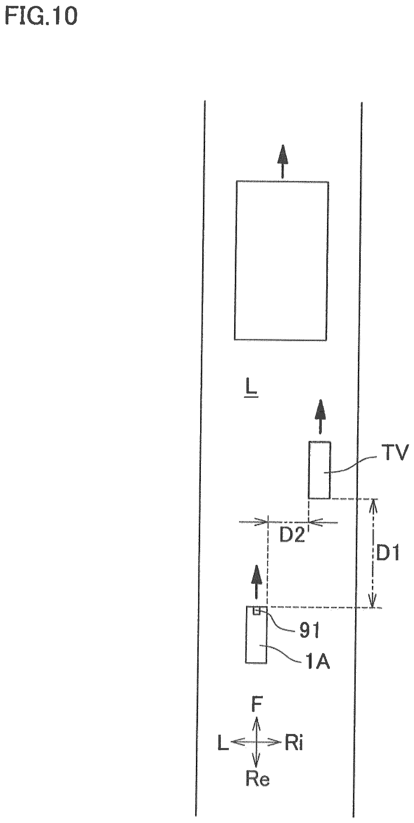

The controller 90 is configured to detect a preceding vehicle running in the lane L in which the host vehicle 1A runs (see FIG. 10), from among objects detected by the preceding vehicle detector 91. When the number of the detected preceding vehicles is more than one, the controller 90 selects a preceding vehicle which is the target of inter-vehicle distance adjustment control, from among the preceding vehicles. For example, the vehicle which is the closest to the host vehicle 1A in the vehicle front-rear direction is selected as a preceding vehicle which is the target of the inter-vehicle distance adjustment control, from among the preceding vehicles. Hereinafter, the preceding vehicle which is the target of the inter-vehicle distance adjustment control will be referred to as a target preceding vehicle TV.

The controller 90 calculates the distance D1 (see FIG. 10) between the target preceding vehicle TV and the host vehicle 1A in the vehicle front-rear direction. The distance D1 between the preceding vehicle and the motorcycle 1A in the vehicle front-rear direction is calculated based on a signal from the preceding vehicle detector 91.

The controller 90 is configured to control the engine unit 20A and the brake adjustment device 60 so that the acceleration in the vehicle forward direction of the host vehicle 1A is controlled based on the distance D1 between the target preceding vehicle TV and the host vehicle 1A in the vehicle front-rear direction. This control is the inter-vehicle distance adjustment control. The controller 90 controls the acceleration in the vehicle forward direction of the host vehicle 1A so that the distance D1 in the vehicle front-rear direction between the preceding vehicle and the host vehicle 1A is maintained at a target distance. When the distance D1 in the vehicle front-rear direction between the host vehicle 1A and the target preceding vehicle TV is shorter than the target distance, the controller 90 decreases the acceleration of the host vehicle 1A in the vehicle forward direction. When the distance D1 in the vehicle front-rear direction between the host vehicle 1A and the target preceding vehicle TV is shorter than the target distance, the controller 90 basically decelerates the host vehicle 1A. When the distance D1 in the vehicle front-rear direction between the host vehicle 1A and the target preceding vehicle TV is longer than the target distance, the controller 90 increases the acceleration of the host vehicle 1A in the vehicle forward direction on condition that the acceleration does not exceed maximum speed which is set in advance. When the distance D1 in the vehicle front-rear direction between the host vehicle 1A and the target preceding vehicle TV is longer than the target distance, the controller 90 basically accelerates the host vehicle 1A. The target distance is set based on the speed of the motorcycle 1A in the vehicle front-rear direction, etc.

During the inter-vehicle distance adjustment control, the controller 90 controls the engine unit 20A to apply positive driving force to the rear wheel unit 3 so as to increase the acceleration of the host vehicle 1A in the vehicle forward direction. During the inter-vehicle distance adjustment control, the controller 90 controls the engine unit 20A to apply negative driving force to the rear wheel unit 3 so as to decrease the acceleration of the host vehicle 1A in the vehicle forward direction. During the inter-vehicle distance adjustment control, the controller 90 may control the brake adjustment device 60 to apply braking force to at least one of the front wheel unit 2 or the rear wheel unit 3 so as to decrease the acceleration of the host vehicle 1A in the vehicle forward direction. In this case, the braking force may be applied to only one of the front wheel unit 2 and the rear wheel unit 3, or may be applied to both of them. The wheel to which the braking force is applied may be changed in accordance with a running situation. During the inter-vehicle distance adjustment control, the controller 90 may control the engine unit 20A and the brake adjustment device 60 to apply negative driving force to the rear wheel unit 3 and apply braking force to at least one of the front wheel unit 2 or the rear wheel unit 3, so as to decrease the acceleration of the host vehicle 1A in the vehicle forward direction.

During the inter-vehicle distance adjustment control, the controller 90 may control the acceleration in the vehicle forward direction based on the distance D1 in the vehicle front-rear direction and the distance D2 in the vehicle left-right direction between the target preceding vehicle TV and the host vehicle 1A (see FIG. 10). To be more specific, for example, the controller 90 may determine a target distance of the distance D1 in the vehicle front-rear direction between the target preceding vehicle TV and the host vehicle 1A based on the distance D2 in the vehicle left-right direction between the target preceding vehicle TV and the host vehicle 1A. The longer the distance D2 in the vehicle left-right direction between the target preceding vehicle TV and the host vehicle 1A is, the shorter the target distance of the distance D1 in the vehicle front-rear direction between the target preceding vehicle TV and the host vehicle 1A may be. The controller 90 may calculate the distance D2 in the vehicle left-right direction between the target preceding vehicle TV and the motorcycle 1A based on a signal from the preceding vehicle detector 91. The distance D2 in the vehicle left-right direction between the preceding vehicle and the motorcycle 1A may be calculated based on a signal from the roll gyro sensor, in addition to the signal from the preceding vehicle detector 91.

### (2) Low-Speed Inter-Vehicle Distance Adjustment Control

During the inter-vehicle distance adjustment control, the controller 90 performs low-speed inter-vehicle distance adjustment control when the speed of the motorcycle 1A in the vehicle forward direction is in a predetermined low-speed region. The low-speed inter-vehicle distance adjustment control is to control the engine unit 20A and the brake adjustment device 60 so that both the positive driving force and the braking force are applied to the motorcycle 1A. During the low-speed inter-vehicle distance adjustment control, the controller 90 controls the engine unit 20A and the brake adjustment device 60 so that positive driving force is applied to the rear wheel unit 3 and at the same time braking force is applied to at least one of the front wheel unit 2 or the rear wheel unit 3. The statement "both positive driving force and braking force are applied" indicates that both positive driving force and braking force are simultaneously applied at a certain time point. A timing to start the application of positive driving force may be identical with or different from a timing to start the application of braking force. A timing to end the application of positive driving force may be identical with or different from a timing to end the application of braking force.

In the description below of the low-speed inter-vehicle distance adjustment control, speed of the motorcycle 1A indicates speed of the motorcycle 1A in the vehicle forward direction. Furthermore, acceleration of the motorcycle 1A indicates acceleration of the motorcycle 1A in the vehicle forward direction. Furthermore, a statement "the motorcycle 1A accelerates or decelerates" indicates that the motorcycle 1A accelerates or decelerates in the vehicle forward direction.

The controller 90 determines whether the speed of the motorcycle 1A detected based on a signal from a wheel speed sensor 81 falls within the low-speed region, and executes the low-speed inter-vehicle distance adjustment control when the speed falls within the low-speed region. The upper limit of the low-speed region may be a constant value or may be changed in accordance with the running situation. The lower limit of the low-speed region may be a constant value or may be changed in accordance with the running situation. The upper limit of the low-speed region before the start of the low-speed inter-vehicle distance adjustment control may be identical with, higher than, or lower than the upper limit of the low-speed inter-vehicle distance adjustment control during the low-speed inter-vehicle distance adjustment control. The lower limit of the low-speed region before the start of the low-speed inter-vehicle distance adjustment control may be identical with, higher than, or lower than the lower limit of the low-speed inter-vehicle distance adjustment control during the low-speed inter-vehicle distance adjustment control.

The lower limit of the low-speed region is higher than normal speed of the motorcycle 1A in an idling state. The idling state is a driving state in which the throttle valve 31 is at a full-closed position or nearly at the full-closed position and the engine rotation speed is at a predetermined idling rotation speed. Even when the throttle valve 31 is in the full-closed position, a gap which allows air to pass therethrough is formed between the throttle valve 31 and the inner surface of the intake passage 28. The idling rotation speed is a minimum rotation speed at which engine stall does not occur. The idling rotation speed may be a single value or a range of values.

The lower limit of the low-speed region is higher than the speed of the motorcycle 1A when the clutch 46 is switched from the cut-off state to the partial connection state. The upper limit of the low-speed region is higher than the speed of the motorcycle 1A when the clutch 46 is switched from the partial connection state to the connection state. In this way, the low-speed inter-vehicle distance adjustment control is performed when the clutch 46 is not in the cut-off state. The lower limit of the low-speed region may be higher than the speed of the motorcycle 1A when the clutch 46 is switched from the partial connection state to the connection state. In this case, the low-speed inter-vehicle distance adjustment control is performed only when the clutch 46 is in the connection state. The lower limit of the low-speed region may be lower than the speed of the motorcycle 1A when the clutch 46 is switched from the partial connection state to the connection state. In this case, the low-speed inter-vehicle distance adjustment control is performed when the clutch 46 is in the partial connection state or the connection state.

The upper limit of the low-speed region is preferably lower than the speed of the motorcycle 1A when the ISG 40 functions as a generator. In this case, in the low-speed region, a torque in the direction opposite to the rotational direction of the crankshaft 24 is not applied from the ISG 40 to the crankshaft 24. The upper limit of the low-speed region may be higher than the speed of the motorcycle 1A when the ISG 40 functions as a generator. The upper limit of the low-speed region may be, for example, 30km per hour. To put it differently, the controller 90 performs the low-speed inter-vehicle distance adjustment control when the speed of the motorcycle 1A is equal to or lower than 30km per hour. To put it differently, the controller 90 performs the low-speed inter-vehicle distance adjustment control so that the speed of the motorcycle 1A is equal to or lower than 30km per hour. The upper limit of the low-speed region may be 25km per hour or less, 20km per hour or less, 15km per hour or less, or 10km per hour or less. The low-speed inter-vehicle distance adjustment control is similarly performed when the upper limit of the low-speed region is one of these.

During the low-speed inter-vehicle distance adjustment control, the controller 90 determines whether the clutch 46 is in the partial connection state or the connection state, and controls the engine unit 20A and the brake adjustment device 60 based on a result of the determination. This determination may be performed based on a signal from the clutch sensor 85. Alternatively, for example, a sensor may be provided to detect the rotation speed of the secondary pulley 44 and the determination may be done based on a signal from this sensor and a signal from the wheel speed sensor 81. The engine unit 20A and the brake adjustment device 60 may be controlled based on not only whether the clutch 46 is in the partial connection state or the connection state but also a detected result of a torque transmission rate of the clutch 46.

During the low-speed inter-vehicle distance adjustment control, the controller 90 controls the engine unit 20A and the brake adjustment device 60 based on the vehicle speed of the motorcycle 1A, the engine rotation speed, the throttle opening degree, the inclination in the vehicle left-right direction of the vehicle body frame 4A, and so on. During the low-speed inter-vehicle distance adjustment control, the controller 90 controls the engine unit 20A and the brake adjustment device 60 based on, for example, signals from a wheel speed sensor 81, an engine rotation speed sensor 83, a throttle opening degree sensor 84, a clutch sensor 85, a roll gyro sensor, a brake pressure sensor, a pulley sensor, and so on.

The target (wheel) to which braking force is applied during the low-speed inter-vehicle distance adjustment control may be constant or may be changed in accordance with the running situation, etc. During the low-speed inter-vehicle distance adjustment control, braking force is preferably applied to both the front wheel unit 2 and the rear wheel unit 3 or only to the rear wheel unit 3. During the low-speed inter-vehicle distance adjustment control, braking force may be applied to only the front wheel unit 2. During the low-speed inter-vehicle distance adjustment control, when braking force is applied to the rear wheel unit 3, both positive driving force and braking force are applied to the rear wheel unit 3. During the low-speed inter-vehicle distance adjustment control, when braking force is applied to only the front wheel unit 2, the wheel to which the braking force is applied is different from the wheel to which the positive driving force is applied. When the braking force is applied to both the front wheel unit 2 and the rear wheel unit 3, the braking force applied to the rear wheel unit 3 may be larger than braking force applied to the front wheel unit 2. When the braking force is applied to both the front wheel unit 2 and the rear wheel unit 3, the braking force applied to the rear wheel unit 3 may be equal to or smaller than the braking force applied to the front wheel unit 2.

During the low-speed inter-vehicle distance adjustment control, the controller 90 may accelerate the motorcycle 1A. During the low-speed inter-vehicle distance adjustment control, the controller 90 may decelerate the motorcycle 1A. During the low-speed inter-vehicle distance adjustment control, the controller 90 may cause the motorcycle 1A to run at constant speed.

During the low-speed inter-vehicle distance adjustment control, the controller 90 may shift the motorcycle 1A from the acceleration state to the deceleration state. In other words, during the low-speed inter-vehicle distance adjustment control, the controller 90 may switch the acceleration of the motorcycle 1A from positive to negative. During the low-speed inter-vehicle distance adjustment control, the controller 90 may shift the motorcycle 1A from the deceleration state to the acceleration state. In other words, during the low-speed inter-vehicle distance adjustment control, the controller 90 may switch the acceleration of the motorcycle 1A from negative to positive. During the low-speed inter-vehicle distance adjustment control, the controller 90 may shift the motorcycle 1A from the acceleration state to the constant speed state. In other words, during the low-speed inter-vehicle distance adjustment control, the controller 90 may switch the acceleration of the motorcycle 1A from positive to zero. During the low-speed inter-vehicle distance adjustment control, the controller 90 may shift the motorcycle 1A from the deceleration state to the constant speed state. In other words, during the low-speed inter-vehicle distance adjustment control, the controller 90 may switch the acceleration of the motorcycle 1A from negative to zero. During the low-speed inter-vehicle distance adjustment control, the controller 90 may shift the motorcycle 1A from the constant speed state to the acceleration state. In other words, during the low-speed inter-vehicle distance adjustment control, the controller 90 may switch the acceleration of the motorcycle 1A from zero to positive. During the low-speed inter-vehicle distance adjustment control, the controller 90 may shift the motorcycle 1A from the constant speed state to the deceleration state. In other words, during the low-speed inter-vehicle distance adjustment control, the controller 90 may switch the acceleration of the motorcycle 1A from zero to negative.

When the motorcycle 1A accelerates during the low-speed inter-vehicle distance adjustment control, the positive driving force is larger than the sum total of the total braking force and the running resistance. In other words, during the low-speed inter-vehicle distance adjustment control, the controller 90 controls the positive driving force to be larger than the sum total of total braking force and the running resistance so that the acceleration of the motorcycle 1A is positive.
When the motorcycle 1A decelerates during the low-speed inter-vehicle distance adjustment control, the positive driving force is smaller than the sum total of the total braking force and the running resistance. In other words, during the low-speed inter-vehicle distance adjustment control, the controller 90 controls the positive driving force to be smaller than the sum total of total braking force and the running resistance so that the acceleration of the motorcycle 1A is negative.
When the motorcycle 1A runs at constant speed during the low-speed inter-vehicle distance adjustment control, the positive driving force is equal to the sum total of the total braking force and the running resistance. In other words, during the low-speed inter-vehicle distance adjustment control, the controller 90 controls the positive driving force to be equal to the sum total of total braking force and the running resistance so that the acceleration of the motorcycle 1A is zero.

During the low-speed inter-vehicle distance adjustment control, when the controller 90 accelerates the motorcycle 1A, the controller 90 basically controls the positive driving force to be larger than the total braking force.
During the low-speed inter-vehicle distance adjustment control, even when the controller 90 accelerates the motorcycle 1A, the controller 90 may control the positive driving force to be equal to or smaller than the total braking force. For example, when negative running resistance is generated because the road surface is a downslope or a strong tailwind blows, the motorcycle 1A may accelerate even if the positive driving force is equal to or smaller than the total braking force.

During the low-speed inter-vehicle distance adjustment control, when the controller 90 decelerates the motorcycle 1A, the controller 90 may control the positive driving force to be equal to or smaller than the total braking force.
During the low-speed inter-vehicle distance adjustment control, even when the controller 90 decelerates the motorcycle 1A, the controller 90 may control the positive driving force to be equal to or larger than the total braking force. For example, when running resistance is large because the road surface is a steep upslope or a strong headwind blows, the motorcycle 1A may decelerate even if the positive driving force is equal to or larger than the total braking force.

During the low-speed inter-vehicle distance adjustment control, the controller 90 may maintain the total braking force applied to the motorcycle 1A to be constant, while increasing the total positive driving force applied to the motorcycle 1A. During the low-speed inter-vehicle distance adjustment control, the controller 90 may decrease the total braking force applied to the motorcycle 1A, while increasing the total positive driving force applied to the motorcycle 1A. During the low-speed inter-vehicle distance adjustment control, the controller 90 may decrease the total braking force applied to the motorcycle 1A, while maintaining the total positive driving force applied to the motorcycle 1A to be constant. The controller 90 may perform these controls while maintaining the acceleration of the motorcycle 1A to be positive, while maintaining the acceleration to be negative, or while increasing the acceleration from negative to positive or zero. When the running resistance is increasing, the controller 90 may perform these controls while maintaining the acceleration of the motorcycle 1A at zero or while changing the acceleration from positive or zero to negative. The statement "acceleration is maintained to be positive (negative)" encompasses not only a case where the acceleration is maintained at a single positive (negative) value but also a case where the acceleration varies within a positive (negative) range.

During the low-speed inter-vehicle distance adjustment control, the controller 90 may increase the total braking force applied to the motorcycle 1A, while maintaining the total positive driving force applied to the motorcycle 1A to be constant. During the low-speed inter-vehicle distance adjustment control, the controller 90 may increase the total braking force applied to the motorcycle 1A, while decreasing the total positive driving force applied to the motorcycle 1A. During the low-speed inter-vehicle distance adjustment control, the controller 90 may maintain the total braking force applied to the motorcycle 1A to be constant, while decreasing the total positive driving force applied to the motorcycle 1A. The controller 90 may perform these controls while maintaining the acceleration of the motorcycle 1A to be negative, while maintaining the acceleration to be positive, or while decreasing the acceleration from positive or zero to negative. When negative running resistance is generated and its absolute value is increasing, the controller 90 may perform the controls while maintaining the acceleration of the motorcycle 1A at zero or while increasing the acceleration from negative to positive or zero.

During the low-speed inter-vehicle distance adjustment control, the controller 90 may increase the total braking force applied to the motorcycle 1A, while increasing the total positive driving force applied to the motorcycle 1A. During the low-speed inter-vehicle distance adjustment control, the controller 90 may maintain the total braking force applied to the motorcycle 1A to be constant, while maintaining the total positive driving force applied to the motorcycle 1A to be constant. During the low-speed inter-vehicle distance adjustment control, the controller 90 may decrease the total braking force applied to the motorcycle 1A, while decreasing the total positive driving force applied to the motorcycle 1A. The controller 90 may perform these controls while maintaining the acceleration of the motorcycle 1A to be positive, while maintaining the acceleration to be negative, or while maintaining the acceleration at zero. When the running resistance varies, the controller 90 may perform the controls while decreasing the acceleration of the motorcycle 1A from positive or zero to negative or while increasing the acceleration from negative to positive or zero.

When the distance D1 between the preceding vehicle and the host vehicle 1A in the vehicle front-rear direction is identical with the target distance, the controller 90 may perform the low-speed inter-vehicle distance adjustment control. When the distance D1 in the vehicle front-rear direction between the preceding vehicle and the host vehicle 1A is identical with the target distance, the controller 90 may perform the low-speed inter-vehicle distance adjustment control in order to cause the host vehicle 1A to run at constant speed. When the distance D1 between the preceding vehicle and the host vehicle 1A in the vehicle front-rear direction is shorter than the target distance, the controller 90 may perform the low-speed inter-vehicle distance adjustment control. When the distance D1 between the preceding vehicle and the host vehicle 1A in the vehicle front-rear direction is shorter than the target distance, the controller 90 may perform the low-speed inter-vehicle distance adjustment control in order to accelerate the host vehicle 1A. When the distance D1 between the preceding vehicle and the host vehicle 1A in the vehicle front-rear direction is longer than the target distance, the controller 90 may perform the low-speed inter-vehicle distance adjustment control. When the distance D1 between the preceding vehicle and the host vehicle 1A in the vehicle front-rear direction is longer than the target distance, the controller 90 may perform the low-speed inter-vehicle distance adjustment control in order to decelerate the host vehicle 1A.

The low-speed inter-vehicle distance adjustment control is an example of inter-vehicle distance adjustment control in the low-speed region. In other words, during the inter-vehicle distance adjustment control, the low-speed inter-vehicle distance adjustment control may not be performed even if the speed of the vehicle is in the low-speed region. During the inter-vehicle distance adjustment control, only positive driving force may be applied when the speed of the vehicle is in the low-speed region. During the inter-vehicle distance adjustment control, only negative driving force may be applied when the speed of the vehicle is in the low-speed region. During the inter-vehicle distance adjustment control, negative driving force and braking force may be simultaneously applied when the speed of the vehicle is in the low-speed region.

Specific Example 1 of the embodiment exerts the same effects as the embodiment. In addition, Specific Example 1 of the embodiment exerts the following effects.

Control of causing a leaning vehicle having a centrifugal clutch to run at low speed without applying both positive driving force and braking force to the leaning vehicle would be, for example, the following two controls. The first low-speed running control is a control with which positive driving force and braking force are alternately applied. The second low-speed running control is a control with which positive driving force and negative driving force are alternately applied. With these two low-speed running controls, the vehicle is able to run at low speed as acceleration and deceleration are frequently alternated.

If the above-described first low-speed running control is applied to the motorcycle 1A and the state of applying only positive driving force is switched to the state of applying only braking force, the state of the first region 43A of the belt 43 of the continuously variable transmission 41 is switched from the slackened state to the tensioned state whereas the second region 43B is switched from the tensioned state to the slackened state. As the positive driving force and the braking force are alternately applied, the first region 43A of the belt 43 is alternately switched between the slackened state and the tensioned state.
Also when the above-described second low-speed running control is applied to the motorcycle 1A and positive driving force and negative driving force are alternately applied, the first region 43A of the belt 43 is alternately switched between the slackened state and the tensioned state.
In both of these two low-speed running controls, there is no tensioned portion in the belt 43. When the belt 43 in this state becomes partially in the tensioned state, a small shock occurs in the motorcycle 1A.

If the above-described first low-speed running control is applied to the motorcycle 1A and a state of applying only positive driving force is switched to a state of applying only braking force, a state in which the first gear surface 47ta of the gear tooth 47t of the gear 47 is in contact with the gear tooth 48t in the continuously variable transmission 41 is switched to a state in which the second gear surface 47tb of the gear tooth 47t is in contact with the gear tooth 48t. As the positive driving force and the braking force are alternately applied, the state in which the first gear surface 47ta of the gear tooth 47t is in contact with the gear tooth 48t and the state in which the gear surface 47ta is not in contact with the gear tooth 48t are repeatedly alternated.
Also when the above-described second low-speed running control is applied to the motorcycle 1A and positive driving force and negative driving force are alternately applied, the state in which the first gear surface 47ta of the gear tooth 47t is in contact with the gear tooth 48t and the state in which the gear surface 47ta is not in contact with the gear tooth 48t are repeatedly alternated.
Both of the two low-speed running controls involve a state in which temporarily neither the first gear surface 47ta nor the second gear surface 47tb of the gear tooth 47t is in contact with the gear tooth 48t. From such a state, when the gear tooth 47t comes into contact with the gear tooth 48t, a small shock occurs in the motorcycle 1A.

Meanwhile, during the low-speed inter-vehicle distance adjustment control, both the positive driving force and the braking force are applied to the motorcycle 1A. On this account, it is possible to maintain a state of receiving positive braking force, at the time of the shift from the acceleration state or the constant speed state to the deceleration state and the shift from the deceleration state to the acceleration state or the constant speed state. It is therefore possible to suppress a change in the torque transmission mechanism 20Ab, which generates a small shock occurring in the motorcycle 1A. For example, during the low-speed inter-vehicle distance adjustment control, it is possible to maintain the second region 43B of the belt 43 of the continuously variable transmission 41 to be in the tensioned state and to maintain the first region 43A to be in the slackened state. Furthermore, for example, during the low-speed inter-vehicle distance adjustment control, it is possible to maintain the first gear surface 47ta of the gear tooth 47t of the gear 47 of the continuously variable transmission 41 to be in contact with the gear tooth 48t. As such, the motorcycle 1A of Specific Example 1 of the present embodiment is able to suppress a change of the torque transmission mechanism 20Ab at the time of the shift from the acceleration state or the constant speed state to the deceleration state or at the time of the shift from the deceleration state to the acceleration state or the constant speed state. It is therefore possible to suppress a small shock occurring in the motorcycle 1A on account of the torque transmission mechanism 20Ab. As a result, it is possible to improve the controllability of the acceleration of the motorcycle 1A during the inter-vehicle distance adjustment control. In other words, it is possible to improve the controllability of the motorcycle 1A during the inter-vehicle distance adjustment control.

In the above-described two low-speed running controls, a state of applying positive driving force and a state of not applying positive driving force are repeatedly alternated at low speed. On this account, the centrifugal clutch is likely to be repeatedly switched between the partial connection state or the connection state and the cut-off state. When the state of the centrifugal clutch is switched from the partial connection state to the cut-off state and then switched to the partial connection state again, a small shock occurs in the leaning vehicle.

Meanwhile, during the low-speed inter-vehicle distance adjustment control, both the positive driving force and the braking force are applied to the motorcycle 1A. For this reason, even if the vehicle speed is identical with the vehicle speed in the above-described two low-speed running controls, large positive driving force can be applied as compared to the cases where positive driving force is applied in the above-described two low-speed running controls. It is therefore possible to maintain the state of applying the positive driving force. For this reason, even if the vehicle speed is identical with the vehicle speed in the above-described two low-speed running controls, the clutch 46 can be in the partial connection state or the connection state.

When one of the above-described two low-speed running controls is employed, there is a case where a vehicle which runs at low speed by repeatedly alternating acceleration and deceleration under the low-speed running may significantly accelerate in order to perform high-speed running. To be more specific, an acceleration state under the low-speed running control is switched to an acceleration state for high-speed running, or a deceleration state under the low-speed running control is switched to an acceleration state for high-speed running. Assume that one of the above-described two low-speed running controls is applied to the motorcycle 1A and a deceleration state under the low-speed running control is switched to an acceleration state for high-speed running. In this case, acceleration starts at least after the second region 43B of the belt 43 of the continuously variable transmission 41 is switched from the slackened state to the tensioned state and a state in which the first gear surface 47ta of the gear tooth 47t of the gear 47 of the continuously variable transmission 41 is not in contact with the gear tooth 48 is switched to a state in which the first gear surface 47ta is in contact with the gear tooth 48. As a result, the responsiveness of the acceleration may be low.

Meanwhile, during the low-speed inter-vehicle distance adjustment control, both the positive driving force and the braking force are applied to the motorcycle 1A. On this account, even after the switch from the low-speed inter-vehicle distance adjustment control to the acceleration state for high-speed running, it is possible to maintain the second region 43B of the belt 43 of the continuously variable transmission 41 to be in the tensioned state and to maintain the first gear surface 47ta of the gear tooth 47t of the gear 47 of the continuously variable transmission 41 to be in contact with the gear tooth 48. As a result, when the motorcycle 1A under the low-speed inter-vehicle distance adjustment control accelerates for high-speed running, the motorcycle 1A is able to swiftly accelerate immediately after the stop of the application of the braking force. In other words, the responsiveness of the acceleration from the state under the low-speed inter-vehicle distance adjustment control is high.

The controller 90 performs the low-speed inter-vehicle distance adjustment control when the speed of the motorcycle 1A is equal to or lower than 30km per hour. Furthermore, the controller 90 performs the low-speed inter-vehicle distance adjustment control so that the speed of the motorcycle 1A is equal to or lower than 30km per hour. As such, the speed of the motorcycle 1A under the low-speed inter-vehicle distance adjustment control is relatively low. It is therefore unnecessary to significantly increase the positive driving force and the braking force. On this account, the controllability of the motorcycle 1A under the inter-vehicle distance adjustment control can be easily improved.

During the low-speed inter-vehicle distance adjustment control, the motorcycle 1A is able to shift from the acceleration state or the constant speed state to the deceleration state and to shift from the deceleration state to the acceleration state or the constant speed state. For this reason, it is possible to suppress a small shock occurring in the motorcycle 1A due to the torque transmission mechanism 20Ab at the time of the shift from the acceleration state or the constant speed state to the deceleration state and the shift from the deceleration state to the acceleration state or the constant speed state. It is therefore possible to improve the controllability of the motorcycle 1A during the inter-vehicle distance adjustment control.

When the low-speed inter-vehicle distance adjustment control is performed while the clutch 46 is in the partial connection state, the following effect can be achieved. In order to avoid engine stall, the driving source torque must be larger than a predetermined value. On this account, when the clutch 46 is in the connection state, there is a lower limit of the positive driving force. When the low-speed inter-vehicle distance adjustment control is performed while the clutch 46 is in the partial connection state, it is possible to decrease the positive driving force as compared to the case where the clutch 46 is in the connection state. It is therefore easy to control the motorcycle 1A at low speed.

Because the clutch 46 is a centrifugal clutch, the clutch 46 is automatically switched from the cut-off state to the connection state in accordance with the rotation speed of the secondary pulley 44. Because the controller 90 is not required to control the clutch 46, the inter-vehicle distance adjustment control can be simplified.

During the low-speed inter-vehicle distance adjustment control, both the positive driving force and the braking force are applied to the motorcycle 1A. For this reason, even if the acceleration and the vehicle speed are identical with those in the above-described two low-speed running controls, large positive driving force can be applied as compared to the cases where positive driving force is applied in the above-described two low-speed running controls. It is therefore possible to apply larger positive driving force as compared to the case where only positive driving force is applied without the application of braking force. On this account, changes in the posture of the motorcycle 1A are suppressed during the low-speed inter-vehicle distance adjustment control, as compared to the above-described two low-speed running controls.

During the low-speed inter-vehicle distance adjustment control, when braking force is applied to only the rear wheel unit 3, changes in the posture of the motorcycle 1A are further suppressed as compared to the case where braking force is applied to only the front wheel unit 2.
During the low-speed inter-vehicle distance adjustment control, when braking force is applied to both the front wheel unit 2 and the rear wheel unit 3, changes in the posture of the motorcycle 1A are further suppressed as compared to the case where braking force is applied to only the front wheel unit 2.
During the low-speed inter-vehicle distance adjustment control, when braking force applied to the rear wheel unit 3 is larger than braking force applied to the front wheel unit 2, changes in the posture of the motorcycle 1A are further suppressed as compared to the case where braking force applied to the rear wheel unit 3 is equal to or smaller than braking force applied to the front wheel unit 2.

The rear wheel unit 3 of the motorcycle 1A is not steered, whereas the front wheel unit 2 is steered.
When positive driving force is applied to only the rear wheel unit 3, driving force applied to the rear wheel unit 3 during the low-speed inter-vehicle distance adjustment control can be set without taking into account of the steering. It is therefore possible to further improve the controllability of the motorcycle 1A during the inter-vehicle distance adjustment control.
When positive driving force is applied to only the front wheel unit 2, the front wheel unit 2 functions as both a steered wheel and a driving wheel. In this case, because the driving force is applied to the steered wheel, the driver can easily steer the steered wheel by using the steering wheel.

During the low-speed inter-vehicle distance adjustment control, when both positive driving force and braking force are applied to the rear wheel unit 3, excessive driving force or braking force is not applied to the rear wheel unit 3 because the positive driving force and the braking force cancel each other out. This prevents the rear wheel unit 3 from a wheel look or a wheelspin.
When both positive driving force and braking force are applied to the rear wheel unit 3, the driving force and the braking force applied to the rear wheel unit 3 are directionally parallel to each other. On this account, when no driving force is applied to the front wheel unit 2, all forces acting on the road surface and the motorcycle 1A are parallel to one another. The motorcycle 1A is easily controllable because only the traveling direction of the wheel is taken into account. It is therefore possible to further improve the controllability of the motorcycle 1A during the inter-vehicle distance adjustment control.
The wheellock occurs when a torque generated by the braking device 50 is large while the road surface friction coefficient is not sufficiently large. When the wheellock occurs, the wheel slips on the road surface. A wheelspin is a phenomenon of spin of a wheel. This occurs when the driving force exceeds the limit of the grip of the tire.

### <Specific Example 2 of Embodiment>

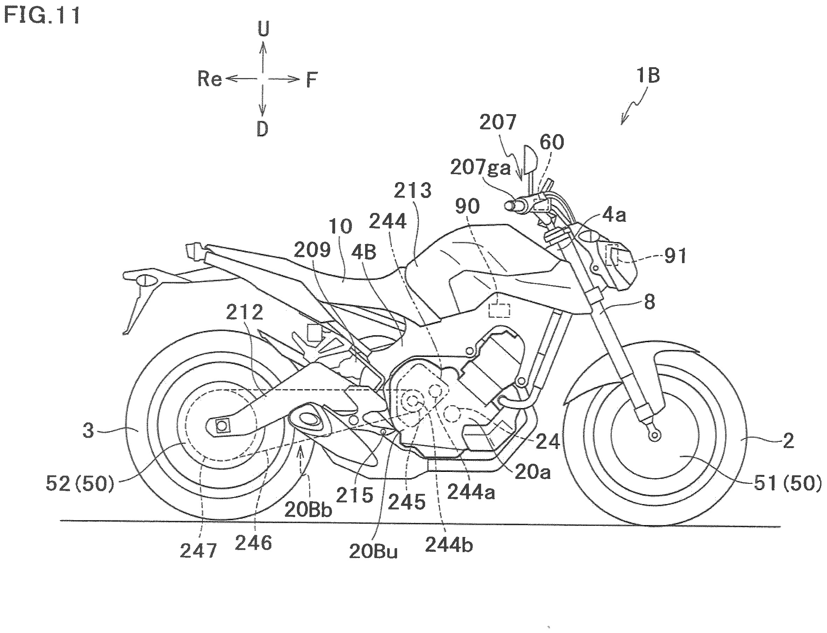

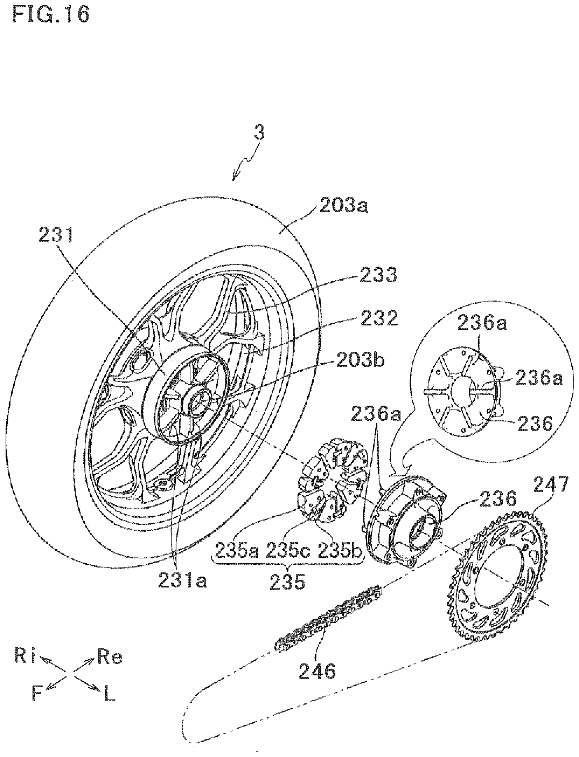

The following will describe Specific Example 2 of the embodiment with reference to FIG. 11 to FIG. 16. Basically, a leaning vehicle 1B of Specific Example 2 includes all features of the above-described leaning vehicle 1 of the embodiment described above. Items identical with those in the embodiment above of the present teaching and Specific Example 1 are not explained again. In the same manner as in Specific Example 1, arrows U and D in FIG. 11 and FIG. 16 indicate a vehicle upward direction and a vehicle downward direction, respectively. In FIG. 11, the road surface is horizontal. The leaning vehicle 1B is a motorcycle. Hereinafter, the leaning vehicle 1B is termed a motorcycle 1B.

### <1> Overall Structure of Motorcycle

As shown in FIG. 11, the motorcycle 1B is a sports type motorcycle (sport bike). The motorcycle 1B includes a front wheel unit 2, a rear wheel unit 3, and a vehicle body frame 4B. The vehicle body frame 4B includes a head pipe 4a at its front portion. A steering shaft (not illustrated) is rotatably inserted into the head pipe 4a. An upper end portion of the steering shaft is connected to a steering wheel (handle unit or handlebar) 207. A lower end portion of the steering shaft is fixed to an upper end portion of a front fork 8. A lower end portion of the front fork 8 supports the front wheel unit 2. A front braking device 51 is provided at the front wheel unit 2.

The vehicle body frame 4B swingably supports a front end portion of a pair of swingarms 212. The rear end portions of the pair of swingarms 212 support the rear wheel unit 3. Each swingarm 212 is connected, at a portion rearward of the swing center, to the vehicle body frame 4B via a rear suspension 209. A rear braking device 52 is provided at the rear wheel unit 3.

The vehicle body frame 4B supports a seat 10, a fuel tank 213, and a battery (not illustrated). The fuel tank 213 is provided forward of the seat 10. The vehicle body frame 4B supports a driving device 20B. The driving device 20B includes an engine unit 20Bu. The engine unit 20Bu includes an engine 20a. The driving device 20B is arranged to be able to apply driving force to the rear wheel unit 3. The driving device 20B is equivalent to the driving device of the present teaching. The driving device 20B is an example of the driving device 20 of the embodiment above.

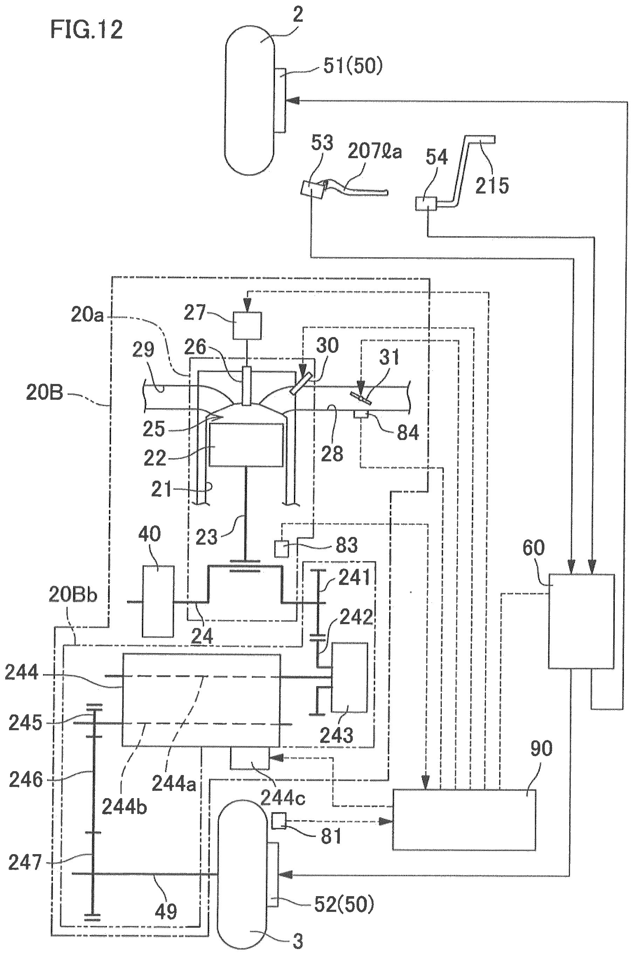

The motorcycle 1B includes a brake pedal 215 (see FIG. 11 and FIG. 12) and a shift pedal (not illustrated). The brake pedal 215 and the shift pedal are operated by a leg of the rider. When the brake pedal 215 is operated, the rear braking device 52 is activated and braking force is applied to the rear wheel unit 3. Hereinafter, the brake pedal 215 will be referred to as a rear brake operator 215. When the rear brake operator 215 is operated, both the front braking device 51 and the rear braking device 52 may be activated. When the shift pedal is operated, the gear position of a later-described transmission 244 (see FIG. 12) is changed. Alternatively, a shift switch may be provided on the steering wheel 207 in place of the shift pedal.

As shown in FIG. 11, the steering wheel 207 includes an accelerator grip 7ga. The accelerator grip 7ga is operated to adjust an output (driving source torque) of the engine 20a. As shown in FIG. 12, the steering wheel 207 includes a brake lever 2071a (see FIG. 12) and a clutch lever (not illustrated). The brake lever 2071a and the clutch lever are operated by hands of the rider. When the brake lever 2071a is operated, the front braking device 51 is activated and braking force is applied to the front wheel unit 2. Hereinafter, the brake lever 2071a will be referred to as a front brake operator 2071a. When the front brake operator 2071a is operated, both the front braking device 51 and the rear braking device 52 may be activated. When the clutch lever is operated, a clutch 243 is switched from the cut-off state to the partial connection state or the connection state.

As shown in FIG. 12, the front brake operator 2071a is connected to a front brake cylinder 53, whereas the rear brake operator 215 is connected to a rear brake cylinder 54. The brake cylinders 53 and 54 are connected to the front braking device 51 and the rear braking device 52 via the brake adjustment device 60. The brake adjustment device 60 includes a brake pressure sensor (not illustrated) configured to detect hydraulic pressure. The brake adjustment device 60 is controlled by the controller 90. When the front brake operator 2071a or the rear brake operator 215 is operated, the controller 90 controls the brake adjustment device 60 to activate the braking device 50. The braking device 50 is activated by a command from the controller 90, even when neither the front brake operator 2071a nor the rear brake operator 215 is operated.

The steering wheel 207 is provided with plural switches in the same manner as on the steering wheel 7. As shown in FIG. 11, the motorcycle 1B includes a preceding vehicle detector 91. As shown in FIG. 12, the motorcycle 1B includes a wheel speed sensor 81. The motorcycle 1B includes a steering angle sensor (not illustrated). The motorcycle 1B may include at least one of a roll gyro sensor, a yaw gyro sensor, or a pitch gyro sensor.

### <2> Structure of Driving Device 20B

As shown in FIG. 11, the driving device 20B includes an engine unit 20Bu, a chain 246 (driving chain), and a sprocket 247. The engine unit 20Bu is an integrated apparatus. The engine unit 20Bu includes an engine 20a. As shown in FIG. 12, the driving device 20B includes the engine 20a, a torque transmission mechanism 20Bb, and an ISG 40, in terms of functions. The torque transmission mechanism 20Bb is constituted by a torque transmission mechanism in the engine unit 20Bu, the chain 246, and the sprocket 247. The engine 20a generates a driving source torque. The positive or negative driving source torque generated by the engine 20a is transmitted to the torque transmission mechanism 20Bb. The torque transmission mechanism 20Bb transmits at least part of the positive or negative driving source torque transmitted from the engine 20a to the rear wheel unit 3. Consequently, positive or negative driving force is applied to the rear wheel unit 3. The torque transmission mechanism 20Bb is equivalent to a torque transmission mechanism of the present teaching. The torque transmission mechanism 20Bb is an example of the torque transmission mechanism 20b of the embodiment above.

The specific structure of the engine 20a has already been described in Specific Example 1 of the embodiment. Being similar to the engine unit 20A of Specific Example 1 of the embodiment, the driving device 20B includes members such as an engine rotation speed sensor 83, a throttle opening degree sensor 84, an intake pressure sensor (not illustrated), an intake temperature sensor (not illustrated), an engine temperature sensor (not illustrated), and an oxygen sensor (not illustrated). The ISG 40 is provided on the crankshaft 24.

As shown in FIG. 12, the torque transmission mechanism 20Bb includes a crank gear 241, a clutch gear 242, a clutch 243, a transmission 244, a sprocket 245, a chain 246, and a sprocket 247.

The crank gear 241 is provided on the crankshaft 24 and rotates together with the crankshaft 24. The clutch gear 242 is provided on a primary shaft 244a of the transmission 244, in a relatively rotatable manner. The crank gear 241 is meshed with the clutch gear 242.

The clutch 243 is provided between the clutch gear 242 and the primary shaft 244a on a torque transmission path of the torque transmission mechanism 20Bb. On the torque transmission path of the torque transmission mechanism 20Bb, the distance from the engine 20a to the primary shaft 244a is longer than the distance from the engine 20a to the clutch gear 242. The clutch 243 is switchable between a connection state in which transmission of a torque from the clutch gear 242 to the primary shaft 244a is allowed and a cut-off state in which the transmission of a torque from the clutch gear 242 to the primary shaft 244a is blocked. The clutch 243 is able to take a partial connection state in which the transmission of a torque from the clutch gear 242 to the primary shaft 244a is allowed at a lower torque transmission rate than in the connection state. This torque transmission rate here indicates the rate of transmission of a torque from the clutch gear 242 to the primary shaft 244a. The clutch 243 in the connection state allows the transmission of a torque from the primary shaft 244a to the clutch gear 242, too. The clutch 243 in the cut-off state blocks the transmission of a torque from the primary shaft 244a to the clutch gear 242, too. The clutch gear 242 is equivalent to the first member of the present teaching. The primary shaft 244a is equivalent to the second member of the present teaching.

The clutch 243 is an electronic-controlled clutch that is electronically controllable by the controller 90. The electronic-controlled clutch may be an electromagnetic friction clutch. The electromagnetic friction clutch may be of a wet type or a dry type. The electromagnetic friction clutch may be a multiplate wet clutch, for example. When the rider operates the clutch lever, the clutch 243 is controlled by the controller 90. When the driving assist mode is set, the clutch 243 is controlled by the controller 90 even when the clutch lever is not operated.

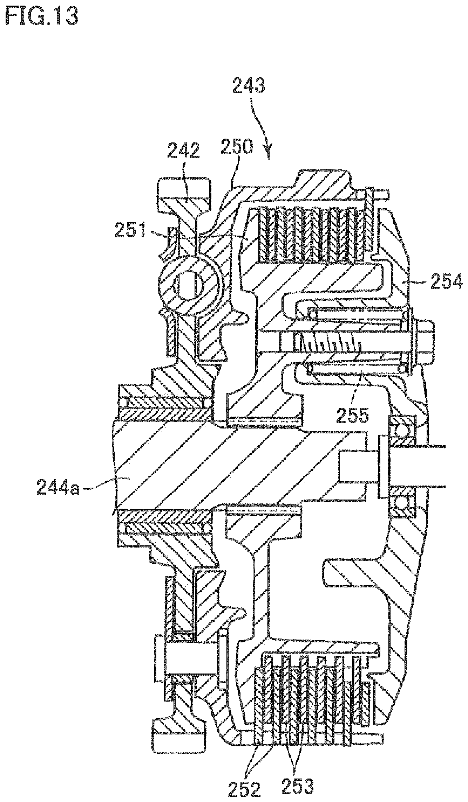

The clutch 243 shown in FIG. 13 is an example of the multiplate wet clutch. The clutch 243 shown in FIG. 13 includes a clutch outer 250, a clutch boss 251, friction plates 252, clutch plates 253, a pressurizing member 254, and a clutch spring 255. The clutch outer 250 is connected to the clutch gear 242 and rotates together with the clutch gear 242. In other words, the clutch outer 250 rotates in accordance with the rotation of the crankshaft 24. The clutch boss 251 is provided on the primary shaft 244a and rotates together with the primary shaft 244a. The friction plate 252 rotates together with the clutch outer 250. The clutch plate 253 rotates together with the clutch boss 251. The friction plates 252 and the clutch plates 253 are alternately provided in the axial direction of the primary shaft 244a.

The pressurizing member 254 is movable in the axial direction of the primary shaft 244a. The pressurizing member 254 is pressed toward the clutch boss 251 by the clutch spring 255. The motorcycle 1B includes a clutch driving unit (not illustrated) which is configured to move the pressurizing member 254 away from the clutch boss 251.

When the clutch driving unit is not activated, the pressurizing member 254 presses the friction plates 252 and the clutch plates 253 toward the clutch boss 251 by means of the biasing force of the clutch spring 255. On account of the friction force acting between the friction plates 252 and the clutch plates 253, the clutch outer 250 and the clutch boss 251 rotate together. As a result, the clutch 243 takes the connection state. The torque transmission rate of the clutch 243 varies in accordance with the position of the pressurizing member 254. When the clutch driving unit is activated, the pressurizing member 254 moves away from the clutch boss 251 against the biasing force of the clutch spring 255, and hence the friction plates 252 transmit a torque to the clutch plates 253 while sliding thereon. In other words, the clutch 243 takes the partial connection state. When the pressurizing member 254 is moved to a position where the plates 252 and 253 are not pressed, the clutch 243 takes the cut-off state.

The clutch driving unit is controlled by the controller 90. When the rider operates the clutch lever, the controller 90 activates the clutch driving unit. When the driving assist mode is set, the clutch driving unit is activated by a command from the controller 90 even when the clutch lever is not controlled.

The transmission 244 includes the primary shaft 244a and a secondary shaft 244b. The transmission 244 is configured to be able to transmit a torque between the primary shaft 244a and the secondary shaft 244b. The ratio of the rotational speed of the secondary shaft 244b to the rotation speed of the primary shaft 244a is termed (defined) as a transmission ratio. The transmission 244 is a stepped transmission. The transmission 244 has plural selectable gear positions which are different in transmission ratio. In other words, the transmission 244 is able to change the ratio of the rotation speed of the crankshaft 24 to the rotation speed of the driving wheel (rear wheel unit 3). The transmission 244 has a neutral position in addition to the plural gear positions. When the transmission 244 is at the neutral position, no torque is transmitted between the primary shaft 244a and the secondary shaft 244b.

The transmission 244 includes gears provided on the primary shaft 244a and gears provided on the secondary shaft 244b. The gears on the primary shaft 244a are meshed with the gears on the secondary shaft 244b. The transmission 244 is a constant-mesh transmission. The gears on the primary shaft 244a are therefore always meshed with the gears on the secondary shaft 244b. The transmission 244 may be a constant-mesh transmission which does not have a synchromesh mechanism, or a constant-mesh transmission having a synchromesh mechanism. The transmission 244 may be a selective sliding-gear transmission (sliding mesh transmission). The transmission 244 is a sequential shift transmission. The transmission 244 of the present teaching may not be a sequential shift transmission.

The gear position of the transmission 244 is switched to one of the plural gear positions and the neutral position, by a shift actuator 244c. The controller 90 controls the shift actuator 244c. In other words, the transmission 244 is controlled by the controller 90. The gear position of the transmission 244 is basically changed when the clutch 243 is in the cut-off state. In the manual driving mode, the gear position of the transmission 244 is changed by the controller 90 as the shift pedal is operated. In the driving assist mode, the gear position of the transmission 244 is changed by the controller 90 even when the shift pedal is not operated.

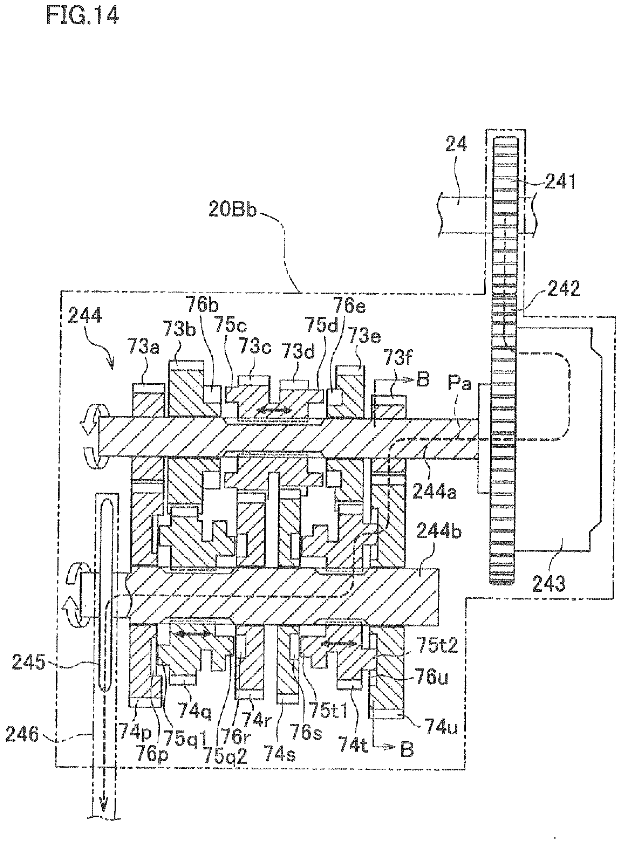

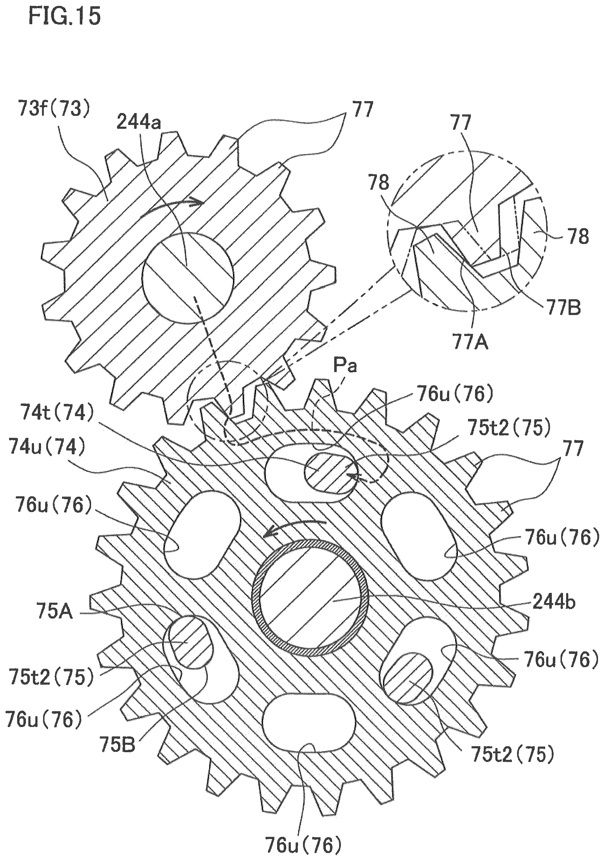

The transmission 244 shown in FIG. 14 is an example of the constant-mesh transmission. The transmission 244 shown in FIG. 14 has six gear positions. On the primary shaft 244a (input shaft), gears 73a, 73b, 73c, 73d, 73e, and 73f are provided. Hereinafter, the gears 73a, 73b, 73c, 73d, 73e, and 73f will be collectively referred to as gears 73 (see FIG. 15). The six gears 73 are different from each other in number of teeth. The secondary shaft 244b is provided with gears 74p, 74q, 74r, 74s, 74t, and 74u. Hereinafter, the gears 74p, 74q, 74r, 74s, 74t, and 74u will be collectively referred to as gears 74 (see FIG. 15). The six gears 74 are different from each other in number of teeth. The six gears 73a to 73f on the primary shaft 244a are meshed with the six gears 74p to 74u on the secondary shaft 244b, respectively.

The gears 73b and 73e are provided on the primary shaft 244a in a relatively rotatable manner. The gears 74q and 74t meshed with the respective gears 73b and 73e rotate together with the secondary shaft 244b. The gears 74p, 74r, 74s, and 74u are provided on the secondary shaft 244b in a relatively rotatable manner. The gears 73a, 73c, 73d, and 73f meshed with the respective gears 74p, 74r, 74s, and 74u rotate together with the primary shaft 244a.

The gears 73c and 73d are provided on the primary shaft 244a so as to be movable in the axial direction. The gears 73c and 73d are connected to each other and move together in the axial direction. The gears 74q and 74t are provided on the secondary shaft 244b so as to be movable in the axial direction. Hereinafter, the gears 73c, 73d, 74q, and 74t will be referred to as movable gears 73c, 73d, 74q, and 74t.

The movable gears 73c, 73d, 74q, and 74t are driven in the axial direction by the shift actuator 244c (see FIG. 12). As a mechanism for driving the movable gears 73c, 73d, 74q, and 74t by the shift actuator 244c, a shift cam and a shift fork (both not illustrated) which are known are used. When the rider operates the shift pedal (not illustrated), a request to change the gear position of the transmission 244 is input to the later-described controller 90. When this request is input, the controller 90 controls the shift actuator 244c. As a result, the rotational angle of the shift cam (rotational position) is controlled.

The movable gear 73c has dog teeth 75c on one side surface. The movable gear 73d has dog teeth 75d on one side surface. The gear 73b has dog grooves 76b on the surface facing the movable gear 73c. The gear 73e has dog grooves 76e on the surface facing the movable gear 73d. The movable gear 74q has dog teeth 75q1 on one side surface and dog teeth 75q2 on the other side surface. The gear 74p has dog grooves 76p on the surface facing the movable gear 74q. The gear 74r has dog grooves 76r on the surface facing the movable gear 74q. The movable gear 74t has dog teeth 75t1 on one side surface and dog teeth 75t2 on the other side surface. The gear 74s has dog grooves 76s on the surface facing the movable gear 74t. The gear 74u has dog grooves 76u on the surface facing the movable gear 74t. Hereinafter, the dog teeth 75c, 75d, 75q1, 75q2, 75t1, and 75t2 will be collectively referred to as dog teeth 75 (see FIG. 15). Hereinafter, the dog grooves 76b, 76e, 76p, 76r, 76s, and 76u will be collectively referred to as dog grooves 76 (see FIG. 15).

The dog teeth 75 protrude in the axial direction from a side face of the gear 73 or 74. Each dog groove 76 is concave in shape. The dog teeth 75 and the dog grooves 76 provided in two gears (73 or 74) facing each other in the axial direction are arranged to be meshable with each other. As shown in FIG. 15, the dog grooves 76 provided in one gear (73 or 74) are lined up in the circumferential direction. The dog teeth 75 provided in one gear (73 or 74) are lined up in the circumferential direction. The number of the dog teeth 75 in one gear (73 or 74) is smaller than the number of the dog grooves 76 in the gear (73 or 74) facing these dog teeth 75. The number of the dog teeth 75 may be identical with the number of the dog grooves 76. The length in the circumferential direction of each dog groove 76 is longer than the length in the circumferential direction of each dog tooth 75 in the gear (73 or 74) facing that dog groove 76.

The movable gear (73 or 74) having the dog teeth 75 moves in the axial direction toward the gear (73 or 74) having the dog grooves 76 so that the dog teeth 75 are arranged inside the dog grooves 76. Alternatively, the movable gear (73 or 74) having the dog grooves 76 may move in the axial direction toward the gear (73 or 74) having the dog teeth 75 so that the dog teeth 75 are arranged inside the dog grooves 76. When the dog teeth 75 are provided inside the dog grooves 76, the dog teeth 75 are in contact with the dog grooves 76. To be more specific, an end portion in the circumferential direction of each dog teeth 75 makes contact with an end portion in the circumferential direction of each dog groove 76. This state is referred to as the dog teeth 75 are engaged with the dog grooves 76.

FIG. 14 and FIG. 15 show a state in which the dog teeth 75t2 of the gear 74t are in contact with the dog grooves 76u of the gear 74u. When the dog teeth 75t2 are in contact with the dog grooves 76u while the clutch 243 is in the connection state, the gear 74t and the gear 74u rotate together. As a result, the torque of the primary shaft 244a is transmitted to the secondary shaft 244b through the gear 73f, the gear 74u, and the gear 74t in this order. On the torque transmission path Pa in this case, the gear 73f, the gear 74u, and the gear 74t are lined up in this order. When the dog teeth 75 other than the dog teeth 75t2 are in contact with the dog grooves 76, the torque of the primary shaft 244a is transmitted to the secondary shaft 244b through three gears. The three gears in this case are two gears 73 and one gear 74, or one gear 73 and two gears 74.

The gear position of the transmission 244 is different depending on which dog teeth 75c, 75d, 75q1, 75q2, 75t1, and 75t2 make contact with the dog grooves 76. In other words, the six gear positions of the transmission 244 are equivalent to the states in which the six dog teeth 75c, 75d, 75ql, 75q2, 75t1, and 75t2 make contact with the dog grooves 76. When the transmission 244 is in the neutral position, none of the dog teeth 75 is inside the dog grooves 76.

As described above, the length in the circumferential direction of each dog groove 76 is longer than the length in the circumferential direction of each dog tooth 75 in the gear (73 or 74) facing that dog groove 76. In other words, the two facing gears (73 or 74) are formed so that there is always a backlash between a dog groove 76 and a dog tooth 75 which are meshable with each other.

Which one of the two end portions in the circumferential direction of the dog tooth 75 makes contact with the dog groove76 varies depending on whether the driving force applied to the rear wheel unit 3 is positive or negative. In other words, the contact position between the dog tooth 75 and the dog groove 76 varies depending on whether the driving force applied to the rear wheel unit 3 is positive or negative. On this account, even though the same combination of a dog teeth 75 and a dog groove76 make contact with each other, the torque transmission path Pa is different depending on whether or not positive driving force is applied to the rear wheel unit 3. FIG. 15 shows a state in which positive driving force is applied to the rear wheel unit 3. The positive driving force is applied when a positive driving source torque is generated and the clutch 243 is in the connection state or the partial connection state. The negative driving force is applied when a negative driving source torque is generated and the clutch 243 is in the connection state or the partial connection state.

When positive driving force is applied to the rear wheel unit 3, a first contact portion 75A which is one end portion of the dog tooth 75 in the circumferential direction basically makes contact with the dog groove 76. At this stage, there is a backlash between a second contact portion 75B which is the other end portion in the circumferential direction of the dog tooth 75 and the dog groove 76.
When negative driving force is applied to the rear wheel unit 3, the second contact portion 75B of the dog tooth 75 basically makes contact with the dog groove 76. At this stage, there is a backlash between the first contact portion 75A and the dog groove 76.
When the state of applying positive driving force to the rear wheel unit 3 is switched to the state of applying negative driving force to the rear wheel unit 3, the state in which the first contact portion 75A of the dog tooth 75 is in contact with the dog groove 76 is switched to the state in which the first contact portion 75A is not in contact with the dog groove 76. Thereafter, the second contact portion 75B of the dog tooth 75 makes contact with the dog groove 76. For this reason, a state in which neither the first contact portion 75A nor the second contact portion 75B is in contact with the dog groove 76 temporarily results. In other words, a torque is temporarily not transmitted between the dog teeth 75 and the dog grooves 76. Similarly, when the state of applying negative driving force to the rear wheel unit 3 is switched to the state of applying positive driving force to the rear wheel unit 3, a torque is temporarily not transmitted between the dog teeth 75 and the dog grooves 76.

The gear teeth of the six gears 73 will be collectively termed gear teeth 77. The gear teeth of the six gears 74 will be collectively termed gear teeth 78. The gear 73 and the gear 74 meshed with each other are provided so that there is a backlash between the gear tooth 77 and the gear tooth 78. When positive driving force is applied to the rear wheel unit 3, a first gear surface 77A which is one end portion of the gear tooth 77 in the circumferential direction makes contact with the gear tooth 78. At this stage, there is a backlash between a second gear surface 77B which is the other end portion in the circumferential direction of the gear tooth 77 and the gear groove 78.
When negative driving force is applied to the rear wheel unit 3, the second gear surface 77B of the gear tooth 77 makes contact with the gear tooth 78. At this stage, there is a backlash between the first gear surface 77A of the gear 77 and the gear tooth 78.
When the state of applying positive driving force to the rear wheel unit 3 is switched to the state of applying negative driving force to the rear wheel unit 3, the state in which the first gear surface 77A of the gear tooth 77 is in contact with the gear tooth 78 is switched to the state in which the first gear surface 77A is not in contact with the gear tooth 78. Thereafter, the second gear surface 77B of the gear tooth 77 makes contact with the gear tooth 78. Therefore, temporarily, both of the first gear surface 77A and the second gear surface 77B are not in contact with the gear tooth 78. In other words, a torque is temporarily not transmitted between the gear tooth 77 and the gear tooth 78. Similarly, when the state of applying negative driving force to the rear wheel unit 3 is switched to the state of applying positive driving force to the rear wheel unit 3, a torque is temporarily not transmitted between the gear tooth 77 and the gear tooth 78.

The sprocket 245 is provided on the secondary shaft 244b and rotates together with the secondary shaft 244b. The sprocket 247 is provided on the axle shaft 49 of the rear wheel unit 3. The chain 246 which is made of metal is wound onto the sprocket 245 and the sprocket 247. The rear wheel unit 3 is provided to rotate together with the sprocket 247. The torque of the secondary shaft 244b is transmitted to the rear wheel unit 3 through the chain 246. Pulleys and a drive belt may be used in place of the sprockets 245 and 247 and the chain 246. For example, toothed pulleys and a toothed belt made of rubber may be used. At the rear wheel unit 3, a hub damper may be provided. In other words, the torque of the sprocket 247 may be transmitted to the rear wheel unit 3 through the hub damper. Alternatively, for the case of no hub damper is provided, the sprocket 247 and the rear wheel unit 3 are fixed to the axle shaft 49. In other words, the torque of the sprocket 247 may be transmitted to the rear wheel unit 3 through the axle shaft 49.

The rear wheel unit 3 shown in FIG. 16 is an example of the rear wheel unit 3 at which the hub damper is provided. As shown in FIG. 16, the rear wheel unit 3 includes a rubber tire 203a and a rear wheel 203b. The rear wheel 203b includes a wheel hub 231, a rim 232, and spokes 233. The wheel hub 231 has a hole at its central portion to allow the axle shaft 49 to be inserted therein (see FIG. 12). The wheel hub 231 is rotatable relative to the axle shaft 49. The rubber tire 203a is attached to the rim 232. The spokes 233 connect the wheel hub 231 with the rim 232. Between the wheel hub 231 and the sprocket 247, plural hub dampers 235 and a drive hub 236 are provided.

The hub dampers 235 are provided at the wheel hub 231. Each hub damper 235 includes two blocks 235a and 235b and a connecting member 235c connecting these two blocks 235a and 235b. The blocks 235a and 235b are made of rubber. The block 235a and the block 235b are lined up in this order in the rotational direction of the rear wheel unit 3. The wheel hub 231 has partition walls 231a which are lined up in the circumferential direction. The hub dampers 235 are provided at the wheel hub 231 so that the partition wall 231a is disposed between the two blocks 235a and 235b.

The drive hub 236 is fixed to the sprocket 247 by an unillustrated fastening member. The drive hub 236 has a hole at its central portion to allow the axle shaft 49 to be inserted therein (see FIG. 12). The drive hub 236 is rotatable relative to the axle shaft 49. Claws 236a are formed on a surface of the drive hub 236, which faces the hub damper 235. The claws 236a are provided to be lined up in the circumferential direction. Each claw 236a is provided between two neighboring hub dampers 235. On this account, the claws 236a of the drive hub 236 are able to transmit a torque to the partition walls 231a of the wheel hub 231 through the hub dampers 235. Each hub damper 235 is formed so that both of the blocks 235a and 235b make contact with the partition wall 231a and the claw 236a.

When positive driving force is applied to the rear wheel unit 3, the block 235a basically receives compression force in the circumferential direction by the partition wall 231a and the claw 236a. When negative driving force is applied to the rear wheel unit 3, the block 235b basically receives compression force in the circumferential direction by the partition wall 231a and the claw 236a. When braking force is applied to the rear wheel unit 3, the block 235b basically receives compression force in the circumferential direction by the partition wall 231a and the claw 236a.

When no braking force is applied and the state of not applying driving force to the rear wheel unit 3 is switched to the state of applying positive driving force to the rear wheel unit 3, the rotation speed of the drive hub 236 temporarily becomes higher than the rotation speed of the wheel hub 231. As a result of this, the blocks 235a are compressed in the circumferential direction and elastically deformed. Because of this elastic deformation, the variation from zero to a positive value of the torque transmitted to the rear wheel unit 3 becomes gentle. A shock that occurs in the vehicle due to the variation from zero to a positive value of the torque transmitted to the rear wheel unit 3 is therefore suppressed.
When no braking force is applied and the state of not applying driving force to the rear wheel unit 3 is switched to the state of applying negative driving force to the rear wheel unit 3, the rotation speed of the wheel hub 231 temporarily becomes higher than the rotation speed of the drive hub 236. As a result of this, the blocks 235b are compressed in the circumferential direction and elastically deformed. Because of this elastic deformation, the variation from zero to a negative value of the torque transmitted to the rear wheel unit 3 becomes gentle. A shock that occurs in the vehicle due to the variation from zero to a negative value of the torque transmitted to the rear wheel unit 3 is therefore suppressed.

The driving device 20B may include a gear position sensor (not illustrated) configured to detect at which one of the gear positions the transmission 244 is. The driving device 20B may include a neutral sensor (not illustrated) configured to detect whether the transmission 244 is at the neutral position. The driving device 20B may include a sensor (not illustrated) which is configured to detect the rotational angular speed of the primary shaft 244a. The driving device 20B may include a sensor (not illustrated) which is configured to detect the rotational angular speed of the secondary shaft 244b.

### <3> Structure of Controller 90

As shown in FIG. 12, the controller 90 is electrically connected to sensors, an ignition coil 27, an injector 30, a fuel pump (not illustrated), a throttle valve 31, a brake adjustment device 60, a clutch 243, and a shift actuator 244c. The controller 90 receives signals from the sensors. The controller 90 electronically controls the ignition coil 27, the injector 30, the fuel pump (not illustrated), the throttle valve 31, the brake adjustment device 60, the clutch 243, and the shift actuator 244c, based on the signals from the sensors. The controller 90 controls a driving source torque generated by the engine 20a, by controlling the ignition coil 27, the injector 30, the fuel pump, and the throttle valve 31. As the controller 90 controls the clutch 243 and the shift actuator 244c, the driving force applied to the rear wheel unit 3 is controlled. In this way, the controller 90 controls the driving force applied to the rear wheel unit 3 by controlling the driving device 20B. The controller 90 controls the front braking device 51 and the rear braking device 52 by controlling the brake adjustment device 60. Consequently, braking force applied to the rear wheel unit 3 is controlled.

### (1) Basic Operations of Inter-Vehicle Distance Adjustment Control

Basic operations of the controller 90 in the mode for performing inter-vehicle distance adjustment control are almost identical with those in Specific Example 1 of the embodiment. During the inter-vehicle distance adjustment control, the controller 90 controls the driving device 20B and the brake adjustment device 60 so that the acceleration of the host vehicle 1B in the vehicle forward direction is controlled based on the distance in the vehicle front-rear direction between a target preceding vehicle and the host vehicle 1B.

### (2) Low-Speed Inter-Vehicle Distance Adjustment Control

During the inter-vehicle distance adjustment control, the controller 90 performs low-speed inter-vehicle distance adjustment control when the speed of the motorcycle 1B in the vehicle forward direction is in a predetermined low-speed region. The low-speed inter-vehicle distance adjustment control is to control the driving device 20B and the brake adjustment device 60 so that both the positive driving force and the braking force are applied to the motorcycle 1B.

The controller 90 determines whether the speed of the motorcycle 1B detected based on a signal from a wheel speed sensor 81 falls within a low-speed region, and executes the low-speed inter-vehicle distance adjustment control when the speed falls within the low-speed region. The upper limit of the low-speed region may be a constant value or may be changed in accordance with the running situation. The lower limit of the low-speed region may be a constant value or may be changed in accordance with the running situation. The upper limit of the low-speed region before the start of the low-speed inter-vehicle distance adjustment control may be identical with, higher than, or lower than the upper limit of the low-speed inter-vehicle distance adjustment control during the low-speed inter-vehicle distance adjustment control. The lower limit of the low-speed region before the start of the low-speed inter-vehicle distance adjustment control may be identical with, higher than, or lower than the lower limit of the low-speed inter-vehicle distance adjustment control during the low-speed inter-vehicle distance adjustment control. The lower limit of the low-speed region is higher than normal speed of the motorcycle 1B in an idling state. The upper limit of the low-speed region is lower than the speed of the motorcycle 1B when the ISG 40 functions as a generator.

During the low-speed inter-vehicle distance adjustment control, the controller 90 controls the clutch 243 to be in at least one of the partial connection state or the connection state. During the low-speed inter-vehicle distance adjustment control, the clutch 243 may be controlled to be always in the partial connection state or always in the connection state. During the low-speed inter-vehicle distance adjustment control, the controller 90 may determine the state of the clutch 243 to the connection state or the partial connection state, based on the running situation, for example. During the low-speed inter-vehicle distance adjustment control, the controller 90 may switch the state of the clutch 243 between the connection state and the partial connection state, in accordance with the running situation. During the low-speed inter-vehicle distance adjustment control, the controller 90 may control the torque transmission rate of the clutch 243 in the partial connection state, in accordance with the running situation.

During the low-speed inter-vehicle distance adjustment control, the controller 90 controls the driving device 20B and the brake adjustment device 60 based on the vehicle speed of the motorcycle 1B, the engine rotation speed, the throttle opening degree, the inclination in the vehicle left-right direction of the vehicle body frame 4B, and so on. For example, during the low-speed inter-vehicle distance adjustment control, the controller 90 controls the driving device 20B and the brake adjustment device 60 based on signals from the wheel speed sensor 81, the engine rotation speed sensor 83, the throttle opening degree sensor 84, the roll gyro sensor, the brake pressure sensor, the gear position sensor, and so on.

Other than the above, the details of the low-speed inter-vehicle distance adjustment control are identical with those in Specific Example 1.

In the same manner as in Specific Example 1, during the inter-vehicle distance adjustment control, the low-speed inter-vehicle distance adjustment control may not be performed even if the speed of the vehicle is in the low-speed region. During the inter-vehicle distance adjustment control, the controller 90 may control the clutch 243 to be in the cut-off state when the speed of the vehicle is in the low-speed region. During the inter-vehicle distance adjustment control, the controller 90 may switch between the cut-off state of the clutch 243 and the low-speed inter-vehicle distance adjustment control in accordance with the running situation, when the speed of the vehicle is in the low-speed region. When the clutch 243 is controlled to be in the cut-off state, braking force may or may not be applied.

In regard to the arrangement identical with that of Specific Example 1 of the embodiment, Specific Example 2 of the embodiment exerts the same effects as Specific Example 1 of the embodiment. In addition, Specific Example 2 of the embodiment exerts the following effects.

As control of causing a leaning vehicle having an electronically-controlled clutch to run at low speed without applying both positive driving force and braking force to the leaning vehicle, there is third low-speed running control which will be described below, in addition to the first and the second low-speed running controls described in Specific Example 1. In the third low-speed running control, a state in which positive driving force is applied and a state in which neither driving force nor braking force is applied are repeatedly alternated by the control of the clutch. The vehicle decelerates when positive driving force is not applied.

When the above-described first low-speed running control is applied to the motorcycle 1B and positive driving force and braking force are alternately applied, a region of the chain 246 is alternately switched between the tensioned state and the slackened state.
Also when the above-described second low-speed running control is applied to the motorcycle 1B and positive driving force and negative driving force are alternately applied, a region of the chain 246 is alternately switched between the tensioned state and the slackened state.
When the above-described third low-speed running control is applied to the motorcycle 1B and the state in which positive driving force is applied and the state in which positive driving force is not applied are repeatedly alternated, a region of the chain 246 is alternately switched between the tensioned state and the slackened state.
In any of these three low-speed running controls, a tensioned portion is temporarily eliminated from the chain 246. When the chain 246 in this state becomes partially in the tensioned state, a small shock occurs in the motorcycle 1B.

When the above-described first low-speed running control is applied to the motorcycle 1B and positive driving force and braking force are alternately applied, a state in which the first contact portion 75A of the dog tooth 75 of the constant-mesh transmission 244 is in contact with the dog groove 76 and a state in which the first contact portion 75A is not in contact with the dog groove 76 are repeatedly alternated.
Also when the above-described second low-speed running control is applied to the motorcycle 1B and positive driving force and negative driving force are alternately applied, the state in which the first contact portion 75A of the dog tooth 75 is in contact with the dog groove 76 and the state in which the first contact portion 75A is not in contact with the dog groove 76 are repeatedly alternated.
Also when the above-described third low-speed running control is applied to the motorcycle 1B and the state in which positive driving force is applied and the state in which positive driving force is not applied are repeatedly alternated, the state in which the first contact portion 75A of the dog tooth 75 is in contact with the dog groove 76 and the state in which the first contact portion 75A is not in contact with the dog groove 76 are repeatedly alternated.
All of the three low-speed running controls involve a state in which neither the first contact portion 75A nor the second contact portion 75B of the dog tooth 75 is in contact with the dog groove 76. When the dog tooth 75 in such a state makes contact with the dog groove 76, a small shock occurs in the motorcycle 1B.

Meanwhile, during the low-speed inter-vehicle distance adjustment control, both the positive driving force and the braking force are applied to the motorcycle 1B. On this account, it is possible to maintain a state of receiving positive braking force, at the time of the shift from the acceleration state or the constant speed state to the deceleration state and the shift from the deceleration state to the acceleration state or the constant speed state. It is therefore possible to suppress a change in the torque transmission mechanism 20Bb, which generates a small shock occurring in the motorcycle 1B. For example, during the low-speed inter-vehicle distance adjustment control, it is possible to maintain the tensioned portion of the chain 246 to be in the tensioned state. Furthermore, for example, during the low-speed inter-vehicle distance adjustment control, it is possible to maintain the first contact portion 75A of the dog tooth 75 of the constant-mesh transmission 244 to be in contact with the dog groove 76. As such, the motorcycle 1B of Specific Example 2 of the present embodiment is able to suppress a change of the torque transmission mechanism 20Bb at the time of the shift from the acceleration state or the constant speed state to the deceleration state or the shift from the deceleration state to the acceleration state or the constant speed state. It is therefore possible to suppress a small shock occurring in the motorcycle 1B on account of the torque transmission mechanism 20Bb. As a result, it is possible to improve the controllability of the acceleration of the motorcycle 1B during the inter-vehicle distance adjustment control. In other words, it is possible to improve the controllability of the motorcycle 1B during the inter-vehicle distance adjustment control.

When one of the above-described three low-speed running controls is employed, there is a case where a vehicle which runs at low speed by repeatedly alternating acceleration and deceleration under the low-speed running may significantly accelerate in order to perform high-speed running. To be more specific, an acceleration state under the low-speed running control is switched to an acceleration state for high-speed running, or a deceleration state under the low-speed running control is switched to an acceleration state for high-speed running. Assume that one of the above-described three low-speed running controls is applied to the motorcycle 1B and a deceleration state under the low-speed running control is switched to an acceleration state for high-speed running. In this case, acceleration starts at least after a region of the chain 246 is switched from the slackened state to the tensioned state and the state in which the first contact portion 75A of the dog tooth 75 of the constant-mesh transmission 244 is not in contact with the dog groove 76 is switched to the state in which the first contact portion 75A is in contact with the dog groove 76. As a result, the responsiveness of the acceleration may be deteriorated.

Meanwhile, during the low-speed inter-vehicle distance adjustment control, both the positive driving force and the braking force are applied to the motorcycle 1B. On this account, even after the switch from the low-speed inter-vehicle distance adjustment control to the acceleration state for high-speed running, it is possible to maintain the tensioned portion of the chain 246 to be in the tensioned state and to maintain the first contact portion 75A of the dog tooth 75 of the constant-mesh transmission 244 to be in contact with the dog groove 76. As a result, when the motorcycle 1B under the low-speed inter-vehicle distance adjustment control accelerates for high-speed running, the motorcycle 1B is able to swiftly accelerate immediately after the stop of the application of the braking force. In other words, the responsiveness of the acceleration from the state under the low-speed inter-vehicle distance adjustment control is high.

During the low-speed inter-vehicle distance adjustment control, both the positive driving force and the braking force are applied to the motorcycle 1B. For this reason, even if the acceleration and the vehicle speed are identical with those in the above-described three low-speed running controls, large positive driving force can be applied as compared to the cases where positive driving force is applied in the above-described three low-speed running controls. It is therefore possible to apply larger positive driving force as compared to the case where only positive driving force is applied without the application of braking force. On this account, changes in the posture of the motorcycle 1B are suppressed during the low-speed inter-vehicle distance adjustment control, as compared to the above-described three low-speed running controls.

As described above, the hub dampers 235 suppress a shock that occurs in the vehicle due to the variation from zero to a positive value or a negative value of the torque transmitted to the rear wheel unit 3. The hub dampers 235, however, may not be able to completely eliminate a shock due to torque variation, and a very small shock may occur in the vehicle. Furthermore, when the capability of shock absorption of the hub dampers 235 is deteriorated over time, a shock occurring in the vehicle due to torque variation is increased.
In the first and third low-speed running controls described above, a state of applying positive driving force and a state of not applying driving force applied are repeatedly and frequently alternated. In other words, a torque applied from the driving source to the driving wheel frequently varies within a range between a positive value and zero. In the second low-speed running control described above, a state of applying positive driving force and a state of applying negative driving force are repeatedly and frequently alternated. In other words, a torque applied from the driving source to the driving wheel frequently varies within a range between a positive value and a negative value. On this account, when one of the above-described three low-speed running controls is applied to the motorcycle 1B, a shock is likely to occur in the vehicle during the low-speed running control, even if the hub dampers 235 are provided. Meanwhile, during the low-speed inter-vehicle distance adjustment control, the state in which positive driving force is applied is maintained. In other words, during the low-speed inter-vehicle distance adjustment control, the torque transmitted from the engine 20a to the rear wheel unit 3 is maintained at a positive value. It is therefore possible to suppress a shock occurring in the motorcycle 1B during the low-speed inter-vehicle distance adjustment control.

In the third low-speed running control described above, a state of applying positive driving force and a state of not applying positive driving force are repeatedly alternated by means of the control of the electronic-controlled clutch. In other words, the clutch is frequently switched to the cut-off state. In this connection, a small shock is likely to occur in the vehicle when the clutch is switched from the connection state to the cut-off state and/or when the clutch is switched from the cut-off state to the connection state.
Meanwhile, during the low-speed inter-vehicle distance adjustment control, the state in which positive driving force is applied is maintained. The clutch 243 is therefore maintained to be in the connection state or the partial connection state. It is therefore possible to prevent the occurrence of a shock in the vehicle due to the switching of the clutch 243 to the cut-off state during the low-speed inter-vehicle distance adjustment control.

During the low-speed inter-vehicle distance adjustment control, the clutch 243 is controlled to be in the connection state or the partial connection state by the controller 90. Because the clutch 243 can be switched to the connection state or the partial connection state irrespective of the rotation speed of the clutch gear 242, the speed of the motorcycle 1B in the vehicle forward direction is easily adjustable during the low-speed inter-vehicle distance adjustment control. It is therefore possible to further improve the controllability of the leaning vehicle during the inter-vehicle distance adjustment control.

### <Modifications of Embodiment>

The present teaching is not limited to the above-described embodiment and Specific Examples 1 and 2 of the embodiment, and various changes can be made within the scope of the claims. The following describes modifications of the embodiment of the present teaching. Components having the same structure as those described above will be given the same reference numerals, and the description thereof will be omitted, if appropriate. Hereinafter, control of the driving device and the brake adjustment device by the controller so that positive driving force and braking force are both applied to the leaning vehicle during the inter-vehicle distance adjustment control will be referred as low-speed inter-vehicle distance adjustment control, for convenience. The low-speed inter-vehicle distance adjustment control described below, the vehicle speed may be limited as during the low-speed inter-vehicle distance adjustment control in Specific Examples 1 and 2, or the vehicle speed may not be limited.

### <<Modifications of Basic Operations of Inter-Vehicle Distance Adjustment Control>>

The controller of the present teaching may not be required to calculate the distance in the vehicle front-rear direction between a target preceding vehicle and a motorcycle, when the controller is able to calculate a parameter which allows the acceleration in the vehicle forward direction to be controlled based on the distance in the vehicle front-rear direction between the target preceding vehicle and the host vehicle. For example, the controller may calculate the distance in the vehicle front-rear direction between the target preceding vehicle and the front detection device. Alternatively, for example, the controller may calculate an inter-vehicle time between the target preceding vehicle and the host vehicle in the traveling direction or the vehicle forward direction of the host vehicle. The inter-vehicle time between the target preceding vehicle and the host vehicle is a time between a time point when the target preceding vehicle passes through a particular position and a time point when the host vehicle passes through the same position. In the case of the inter-vehicle time in the vehicle forward direction of the host vehicle, the particular position is a line perpendicular to the vehicle forward direction. In the case of the inter-vehicle time in the traveling direction of the host vehicle, the particular position is a line perpendicular to the traveling direction. For example, the inter-vehicle time may be calculated based on a change over time of the distance in the vehicle front-rear direction between the target preceding vehicle and the host vehicle and a change over time of the relative speed of the target preceding vehicle in the traveling direction or the vehicle forward direction of the host vehicle. The relative speed of the target preceding vehicle may be calculated based on a signal from the preceding vehicle detector.
The controller of the present teaching may not be required to calculate the distance in the vehicle front-rear direction and the distance in the vehicle left-right direction between the target preceding vehicle and the motorcycle, when the controller is able to calculate a parameter which allows the acceleration in the vehicle forward direction to be controlled based on the distance in the vehicle front-rear direction and the distance in the vehicle left-right direction between the target preceding vehicle and the host vehicle.

### <<Modifications of Basic Operations of Inter-Vehicle Distance Adjustment Control>>

When the acceleration in the vehicle forward direction is controlled based on the distance in the vehicle front-rear direction between the target preceding vehicle and the host vehicle, the controller of the present teaching may control an element which is not the acceleration in the vehicle forward direction. For example, a notification for prompting the movement in the vehicle rightward direction or the vehicle leftward direction may be made based on the distance in the vehicle front-rear direction between the target preceding vehicle and the host vehicle. Alternatively, for example, the acceleration in the vehicle left-right direction may be controlled based on the distance in the vehicle front-rear direction between the target preceding vehicle and the host vehicle. To be more specific, for example, the acceleration in the vehicle left-right direction may be controlled by controlling the balance between the left and right front suspensions of the front fork. Alternatively, when paired left and right rear suspensions are provided, the acceleration in the vehicle left-right direction may be controlled by controlling the balance between the left and right paired rear suspensions. When the leaning vehicle is turning, for example, the acceleration in the vehicle left-right direction may be controlled by controlling the driving force or the braking force applied to at least one of the front wheel unit or the rear wheel unit.

### <<Application of Control of Present Teaching>>

The controller of the present teaching may perform a control such that both positive driving force and braking force are applied to the leaning vehicle in driving assist control which is different from the inter-vehicle distance adjustment control. The controller of the present teaching may perform a control such that both positive driving force and braking force are applied to the leaning vehicle in automatic brake control which is a type of the driving assist control. The automatic brake control is a control to activate the brake upon detection of an obstacle or a human.
In the leaning vehicle of the present teaching, the driving assist mode in which the inter-vehicle distance adjustment control is performed and an autonomous driving mode may be selectable. In the autonomous driving mode, the leaning vehicle is controlled to automatically run toward a destination without needing the rider to drive the leaning vehicle. The controller of the present teaching may perform a control such that both positive driving force and braking force are applied to the leaning vehicle in the autonomous driving mode.

### <<Modifications of Preceding Vehicle Detector>>

In the present teaching, the preceding vehicle detector may include a wireless communication device configured to receive information regarding a preceding vehicle by wireless communication. The wireless communication device may receive information regarding a preceding vehicle through vehicle-to-vehicle communication or road-to-vehicle communication. When the preceding vehicle detector includes the wireless communication device, the preceding vehicle detector may or may not include a camera. When the preceding vehicle detector includes the wireless communication device, the preceding vehicle detector may or may not include a sensor which is configured to detect an object by means of an electromagnetic wave or acoustic wave. When the preceding vehicle detector includes the wireless communication device, the preceding vehicle detector may include only one of the camera and the sensor, may include both of the camera and the sensor, or may include none of the camera and the sensor. The preceding vehicle detector may detect only the shortest distance between an object and the preceding vehicle detector.

### <<Modifications of Transmission Having Plural Gear Positions>>

In Specific Example 2 of the embodiment above, the transmission 244 is a manual transmission. In the manual transmission, the transmission ratio is switched as the rider operates the clutch lever and the shift pedal.
In this regard, when the torque transmission mechanism of the present teaching includes a transmission having plural gear positions, the transmission method of the transmission may be full-automatic or semi-automatic. In the full-automatic transmission, a shift actuator is automatically driven in accordance with the vehicle speed, the engine rotation speed, etc., so that the gear position is switched. In the semi-automatic transmission, only clutch operation is automatically done, and the gear position is switched as the rider operates the shift pedal.

### <<Modifications of Continuously Variable Transmission and Clutch>>

The continuously variable transmission 41 of Specific Example 1 of the embodiment is configured to be able to automatically change the groove width of the primary pulley 42 by utilizing centrifugal force. The clutch 46 is a centrifugal clutch.
Alternatively, when the torque transmission mechanism of the present teaching includes a continuously variable transmission, the groove width of the pulley of the continuously variable transmission may be controlled by the controller. To be more specific, the groove width of the pulley is changeable by an actuator, and the controller is able to control this actuator. In this case, the clutch may be an electronic-controlled clutch that is electronically controllable by the controller. The electronic-controlled clutch may be an electromagnetic friction clutch. The electromagnetic friction clutch may be of a wet type or a dry type. The electromagnetic friction clutch may be a multiplate wet clutch. Even when the clutch is an electronic-controlled clutch, the transmission method of the continuously variable transmission is preferably full-automatic type.

When the torque transmission mechanism of the present teaching includes a continuously variable transmission and an electronic-controlled clutch, the controller controls the electronic-controlled clutch to be in at least one of the partial connection state or the connection state during the low-speed inter-vehicle distance adjustment control. During the low-speed inter-vehicle distance adjustment control, the electronic-controlled clutch may be controlled to be always in the partial connection state or always in the connection state. During the low-speed inter-vehicle distance adjustment control, the controller may determine the state of the electronic-controlled clutch to the connection state or the partial connection state, based on the running situation, for example. During the low-speed inter-vehicle distance adjustment control, the controller may switch the state of the electronic-controlled clutch between the connection state and the partial connection state, in accordance with the running situation. During the low-speed inter-vehicle distance adjustment control, the controller may control the torque transmission rate of the electronic-controlled clutch in the partial connection state, based on the running situation.

### <<Modifications of Transmission>>

The torque transmission mechanism of the leaning vehicle of the present teaching may include an auxiliary transmission in addition to one transmission. The torque transmission mechanism of the leaning vehicle of the present teaching may not include a transmission.

### <<Modification 1 of Engine as Driving Source>>

In the present teaching, the engine as a driving source may be a multi-cylinder engine including plural combustion chambers (cylinders). The number of cylinders is not limited. When the driving source of the present teaching is a multi-cylinder engine, all cylinders may be arranged so that the central axial lines of the cylinder holes are parallel to one another or substantially parallel to one another. The driving source of the present teaching may be a V multi-cylinder engine. The V multi-cylinder engine has two cylinders forming a V-shape. When the driving source of the present teaching is a V multi-cylinder engine, only two cylinders may be provided. When the driving source of the present teaching is a V multi-cylinder engine, four or more cylinders may be provided. The V multi-cylinder engine may be a V engine having only two cylinders. The V multi-cylinder engine may be a V engine having four or more cylinders. The V engine having four or more cylinders includes two or more cylinders which are arranged so that the central axial lines of the cylinder holes are parallel to one another or substantially parallel to one another. The number of crankshafts in the multi-cylinder engine is one. The central axis of the crankshaft is preferably parallel to the vehicle left-right direction. When the driving source of the present teaching is a multi-cylinder engine, a throttle valve is preferably provided for each combustion chamber. Alternatively, one throttle valve may be provided for plural combustion chambers.

### <<Modification 2 of Engine as Driving Source>>

In the present teaching, the engine as a driving source may be an engine with a forced-induction compressor. The forced-induction compressor is configured to compress air supplied to a combustion chamber. The forced-induction compressor may be a supercharger (mechanical supercharger) or a turbocharger (exhaust turbine supercharger).

### <<Modification 3 of Engine as Driving Source>>

In the present teaching, the engine as a driving source is preferably a reciprocating engine. The engine may be a two-stroke engine. The engine may be a diesel engine. The diesel engine is an engine in which output (driving source torque) is controlled solely by a fuel injection amount (fuel supply amount). In the present teaching, the engine as a driving source may be a hydrogen rotary engine.

### <Modifications of Driving Source>

In Specific Examples 1 and 2 of the embodiment, the driving source of the motorcycle 1A is the engine 20a. In the present teaching, however, the driving source of the leaning vehicle of the present teaching is not limited to the engine. The driving source may be constituted by at least one electric motor, or by an engine and at least one electric motor. In other word, the leaning vehicle of the present teaching may be a hybrid electric vehicle (HEV) or an electric vehicle (EV). When the driving source includes an electric motor, the leaning vehicle may include, for example, a battery (secondary battery) or a fuel cell as a power source for supplying electric power to the electric motor. When the driving source includes an engine and an electric motor, the electric motor may be a motor generator having a function as a generator.

### <<Specific Example 1 When Driving Source Is Electric Motor>>

When the driving source of the present invention includes an electric motor, the electric motor may be an in-wheel motor provided inside a wheel. The electric motor may not be an in-wheel motor, and may be provided on the axle shaft of a driving wheel. When the driving source includes an engine and an electric motor, the electric motor may be provided on the crankshaft of the engine. When the electric motor is provided on the crankshaft the electric motor functions as a starter motor, too. When a driving source including an engine and an electric motor is applied to Specific Example 1 of the embodiment, the electric motor may be provided on the secondary shaft 45. When a driving source including an engine and an electric motor is applied to Specific Example 2 of the embodiment, the electric motor may be provided on the primary shaft 244a or on the secondary shaft 244b.

### <<Specific Example 2 When Driving Source Is Electric Motor>>

When the driving source of the present teaching includes an electric motor but does not include an engine, the torque transmission mechanism may not include a transmission.
When the driving source of the present teaching includes an electric motor but does not include an engine, the torque transmission mechanism may not include a clutch which is switchable between the connection state and the cut-off state.

### <<Specific Example 3 When Driving Source Is Electric Motor>>

When the driving source of the present teaching includes an electric motor but does not include an engine, the torque transmission mechanism may include a one-way clutch between the electric motor and the driving wheel. The one-way clutch is configured to transmit only a torque in one direction. The one-way clutch is provided to transmit a positive driving source torque. However, even when a positive driving source torque is generated, the one-way clutch may not transmit the positive driving source torque when, for example, acceleration obtained due to a steep downslope is larger than acceleration due to the driving source torque. When a negative driving source torque is generated, the one-way clutch does not transmit the torque. Furthermore, when braking force is applied to the driving wheel and a positive driving source torque is not generated, the one-way clutch does not transmit the torque. When braking force is applied to the driving wheel and a positive driving source torque is generated, the one-way clutch transmits the torque.

After the switch from the state in which positive driving force is applied to the state in which positive driving force is not applied, surfaces which were in contact with each other when the positive driving force was applied are separated from each other in two power transmission members (e.g., gears) provided between the electric motor and the one-way clutch. For this reason, if the switch between the state in which positive driving force is applied and the state in which positive driving force is not applied is repeated for low-speed running, two surfaces of two power transmission members (e.g., gears) provided between the electric motor and the one-way clutch may be repeatedly made in contact with each other and separated from each other. In this regard, during the low-speed inter-vehicle distance adjustment control of the present teaching, because both positive driving force and braking force are applied to the leaning vehicle, it is possible to maintain the contact state of the two power transmission members provided between the electric motor and the one-way clutch to be the same. On this account, changes in the posture of the leaning vehicle are suppressed during the low-speed inter-vehicle distance adjustment control.

There is a case where a vehicle which runs at low speed by repeatedly alternating a state in which positive driving force is applied and a state in which positive driving force is not applied may significantly accelerate in order to perform high-speed running. To be more specific, the state in which positive driving force is applied is switched to an acceleration state for high-speed running, or the state in which positive driving force is not applied is switched to the acceleration state for high-speed running. In the latter case, acceleration starts after contact surfaces which had a gap therebetween in low-speed running make contact with each other. On this account, the responsiveness of the acceleration may be low. In this regard, during the low-speed inter-vehicle distance adjustment control of the present teaching, because both positive driving force and braking force are applied to the leaning vehicle, it is possible to maintain the contact state of the two power transmission members provided between the electric motor and the one-way clutch to be the same, even if the low-speed inter-vehicle distance adjustment control is switched to the high-speed running. As a result, the responsiveness of the acceleration from the state under the low-speed inter-vehicle distance adjustment control is high.

### <<Modifications of Target of Application of Driving Force>>

The driving device of the present teaching may be able to apply driving force to only the front wheel unit. The driving device of the present teaching may be able to apply driving force to both the front wheel unit and the rear wheel unit. When the driving device is able to apply driving force to both the front wheel unit and the rear wheel unit, the target (wheel) to which the driving force is applied during the low-speed inter-vehicle distance adjustment control may be constant or may be changed in accordance with the running situation, etc. When the driving device is able to apply driving force to both the front wheel unit and the rear wheel unit, the target (wheel) to which positive driving force is applied during the low-speed inter-vehicle distance adjustment control may be constant or may be only the front wheel unit or only the rear wheel unit. During the low-speed inter-vehicle distance adjustment control, when positive driving force is applied to both the front wheel unit and the rear wheel unit, even if the low-speed inter-vehicle distance adjustment control is performed on a steep upslope or on a road surface having a small road surface friction coefficient, driving force is reliably generated between the wheels and the road surface.
When the driving device of the present teaching is able to apply driving force to the front wheel unit, both positive driving force and braking force may be applied to the front wheel unit during the low-speed inter-vehicle distance adjustment control. When the driving device of the present teaching is able to apply driving force to the front wheel unit, braking force may be applied to only the rear wheel unit and positive driving force maybe applied only to the front wheel unit during the low-speed inter-vehicle distance adjustment control.

During the low-speed inter-vehicle distance adjustment control, when braking force is applied to both the front wheel unit and the rear wheel unit, positive driving force may be applied to both the front wheel unit and the rear wheel unit, positive driving force may be applied to only to the front wheel unit, or positive driving force may be applied to only the rear wheel unit. During the low-speed inter-vehicle distance adjustment control, when positive driving force is applied to only the rear wheel unit, braking force may be applied to both the front wheel unit and the rear wheel unit, braking force may be applied to only the front wheel unit, or braking force may be applied to only the rear wheel unit. During the low-speed inter-vehicle distance adjustment control, when positive driving force is applied to only the front wheel unit, braking force may be applied to both the front wheel unit and the rear wheel unit, braking force may be applied to only the front wheel unit, or braking force may be applied to only the rear wheel unit. During the low-speed inter-vehicle distance adjustment control, when positive driving force is applied to both the front wheel unit and the rear wheel unit, braking force may be applied to both the front wheel unit and the rear wheel unit, braking force may be applied to only to the front wheel unit, or braking force may be applied to only the rear wheel unit. During the low-speed inter-vehicle distance adjustment control, when both positive driving force and braking force are applied to the front wheel unit, to the rear wheel unit, both positive driving force and braking force may be applied, neither positive driving force nor braking force may be applied, only positive driving force may applied, or only braking force may be applied. During the low-speed inter-vehicle distance adjustment control, when both positive driving force and braking force are applied to the rear wheel unit, to the front wheel unit, both positive driving force and braking force may be applied, neither positive driving force nor braking force may be applied, only positive driving force may applied, or only braking force may be applied.

### <<Modifications of Front Wheel Unit>>

The front wheel unit of the leaning vehicle of the present teaching may include two or more front wheels.
When the front wheel unit includes plural front wheels, the brake adjustment device is able to apply braking force to all of the front wheels in the front wheel unit. When the front wheel unit includes two front wheels, the controller may apply braking force to only one of the two front wheels, depending on the running situation. This control may be formed, for example, when the vehicle is turning. During the low-speed inter-vehicle distance adjustment control, the controller may control the brake adjustment device so that braking force is applied to all front wheels (plural front wheels) of the front wheel unit. During the inter-vehicle distance adjustment control, the controller may control the brake adjustment device so that braking force is applied to only one or some of the front wheels in a speed range in which the low-speed inter-vehicle distance adjustment control is performed. The driving device may be able to apply driving force to all front wheels (plural front wheels) of the front wheel unit.
When the front wheel unit includes two front wheels, the controller may apply driving force to only one of the two front wheels, depending on the running situation. During the low-speed inter-vehicle distance adjustment control, the controller may control the driving device so that positive driving force is applied to all front wheels (plural front wheels) of the front wheel unit. During the inter-vehicle distance adjustment control, the controller may control the driving device so that positive driving force is applied to only one or some of the front wheels in a speed range in which the low-speed inter-vehicle distance adjustment control is performed.

### <<Modifications of Rear Wheel Unit>>

The rear wheel unit of the leaning vehicle of the present teaching may include two or more rear wheels.
When the rear wheel unit includes plural rear wheels, the brake adjustment device is able to apply braking force to all of the rear wheels in the rear wheel unit. When the rear wheel unit includes two rear wheels, the controller may apply braking force to only one of the two rear wheels, depending on the running situation. During the low-speed inter-vehicle distance adjustment control, the controller may control the brake adjustment device so that braking force is applied to all rear wheels (plural rear wheels) of the rear wheel unit. During the inter-vehicle distance adjustment control, the controller may control the brake adjustment device so that braking force is applied to only one or some of the rear wheels in a speed range in which the low-speed inter-vehicle distance adjustment control is performed. The driving device may be able to apply driving force to all rear wheels (plural rear wheels) of the rear wheel unit. When the rear wheel unit includes two rear wheels, the controller may apply driving force to only one of the two rear wheels, depending on the running situation. During the low-speed inter-vehicle distance adjustment control, the controller may control the driving device so that positive driving force is applied to all rear wheels (plural rear wheels) of the rear wheel unit. During the inter-vehicle distance adjustment control, the controller may control the driving device so that positive driving force is applied to only one or some of the rear wheels in a speed range in which the low-speed inter-vehicle distance adjustment control is performed.

### <<Modifications of Type of Leaning Vehicle>>

The leaning vehicle of the present teaching may be of any type as long as the leaning vehicle includes a vehicle body frame which leans in the vehicle rightward direction when turning right and leans in the vehicle leftward direction when turning left. The leaning vehicle of the present teaching may be a straddled vehicle. A straddled vehicle indicates all types of vehicles on which a driver rides in a manner of straddling a saddle. The leaning vehicle of the present teaching may be a motorcycle. The motorcycle includes a sport bike, an off-road bike, a scooter, an engine-equipped bicycle, a moped, etc. The leaning vehicle of the present teaching may be a motor tricycle having one front wheel or one rear wheel. The leaning vehicle of the present teaching may be a four-wheeled motor vehicle having two front wheels and two rear wheels.

The inter-vehicle distance adjustment control of the present teaching is equivalent to inter-vehicle distance control of the basic application (Tokugan 2018-155691) of the subject application. The front braking device 51 of the subject application is equivalent to a front brake 51 of the basic application. The rear braking device 52 of the subject application is equivalent to a rear brake 52 of the basic application. The brake adjustment device 60 of the subject application is equivalent to a brake hydraulic pressure controller 55 of the basic application. The controller 90 of the subject application is equivalent to a controller 60 of the basic application.

### [Reference Signs List]

1 leaning vehicle
1A, 1B motorcycle (leaning vehicle)
2 front wheel unit
3 rear wheel unit
4, 4A, 4B vehicle body frame
20, 20B driving device
20a driving source, engine
20A engine unit (driving device)
20Bu engine unit
20b, 20Ab, 20Bb torque transmission mechanism
46, 243 clutch
44 secondary pulley (first member)
45 secondary shaft (second member)
242 clutch gear (first member)
244a primary shaft (second member)
60 brake adjustment device
90 controller
91 preceding vehicle detector
TV target preceding vehicle (preceding vehicle)

## Claims

1. A leaning vehicle comprising:
a front wheel unit which includes at least one front wheel;
a rear wheel unit which includes at least one rear wheel and is provided rearward of the front wheel unit in a vehicle-front-rear direction;
a vehicle body frame which supports the front wheel unit and the rear wheel unit, and is structured to lean in a vehicle rightward direction when turning right and lean in a vehicle leftward direction when turning left;
a driving device which includes: a driving source configured to generate a driving source torque; and a torque transmission mechanism capable of transmitting at least part of the driving source torque transmitted from the driving source to at least one of the front wheel unit or the rear wheel unit and is capable of applying driving force to the at least one of the front wheel unit or the rear wheel unit;
a brake adjustment device which is configured to be able to adjust braking force applied to the front wheel unit and the rear wheel unit;
a preceding vehicle detector which is capable of detecting a preceding vehicle which runs forward of a host vehicle in the vehicle front-rear direction; and
a controller which is configured to perform inter-vehicle distance adjustment control of adjusting the distance in the vehicle front-rear direction between the preceding vehicle and the host vehicle by controlling the driving device and the brake adjustment device so that acceleration of the host vehicle in a vehicle forward direction is controlled based on the distance in the vehicle front-rear direction between the preceding vehicle detected by the preceding vehicle detector and the host vehicle,
during the inter-vehicle distance adjustment control, the controller being configured to control the driving device and the brake adjustment device so that the driving force which is positive and the braking force are both applied to the leaning vehicle.

2. The leaning vehicle according to claim 1, wherein, during the inter-vehicle distance adjustment control, the controller is configured to the driving device and the brake adjustment device so that the positive driving force and the braking force are both applied to the leaning vehicle when speed of the leaning vehicle in the vehicle forward direction is 30km or less.

3. The leaning vehicle according to claim 1 or 2, wherein, during the inter-vehicle distance adjustment control, the controller is configured to control the driving device and the brake adjustment device so that acceleration of the leaning vehicle in the vehicle forward direction shifts from zero or positive to negative or the acceleration of the leaning vehicle in the vehicle forward direction shifts from negative to zero or positive, while the positive driving force and the braking force are both applied to the leaning vehicle.

4. The leaning vehicle according to any one of claims 1 to 3, wherein, during the inter-vehicle distance adjustment control, the controller is configured to control the driving device and the brake adjustment device so that the acceleration of the leaning vehicle in the vehicle forward direction is positive as both the positive driving force and the braking force are applied to the leaning vehicle and the total positive driving force applied to the leaning vehicle is larger than the sum total of the total braking force applied to the leaning vehicle and the running resistance acting on the leaning vehicle.

5. The leaning vehicle according to any one of claims 1 to 4, wherein, during the inter-vehicle distance adjustment control, the controller is configured to control the driving device and the brake adjustment device so that, as both the positive driving force and the braking force are applied to the leaning vehicle, the acceleration of the leaning vehicle in the vehicle forward direction is positive and the total positive driving force applied to the leaning vehicle is larger than the total braking force applied to the leaning vehicle.

6. The leaning vehicle according to any one of claims 1 to 5, wherein, during the inter-vehicle distance adjustment control, the controller is configured to control the driving device and the brake adjustment device so that, as both the positive driving force and the braking force are applied to the leaning vehicle, at least one of increase in the total positive driving force applied to the leaning vehicle or decrease in the total braking force applied to the leaning vehicle occurs and the acceleration of the leaning vehicle in the vehicle forward direction is maintained to be positive.

7. The leaning vehicle according to any one of claims 1 to 6, wherein, during the inter-vehicle distance adjustment control, the controller is configured to control the driving device and the brake adjustment device so that the acceleration of the leaning vehicle in the vehicle forward direction is negative as both the positive driving force and the braking force are applied to the leaning vehicle and the total positive driving force applied to the leaning vehicle is smaller than the sum total of the total braking force applied to the leaning vehicle and the running resistance acting on the leaning vehicle.

8. The leaning vehicle according to any one of claims 1 to 7, wherein, during the inter-vehicle distance adjustment control, the controller is configured to control the driving device and the brake adjustment device so that, as both the positive driving force and the braking force are applied to the leaning vehicle, the acceleration of the leaning vehicle in the vehicle forward direction is negative and the total positive driving force applied to the leaning vehicle is smaller than the total braking force applied to the leaning vehicle.

9. The leaning vehicle according to any one of claims 1 to 8, wherein, during the inter-vehicle distance adjustment control, the controller is configured to control the driving device and the brake adjustment device so that, as both the positive driving force and the braking force are applied to the leaning vehicle, at least one of a decrease in the total positive driving force applied to the leaning vehicle or an increase in the total braking force applied to the leaning vehicle occurs and the acceleration of the leaning vehicle in the vehicle forward direction is maintained to be negative.

10. The leaning vehicle according to any one of claims 1 to 9, wherein,
the torque transmission mechanism includes:
a first member which is provided on a torque transmission path of the torque transmission mechanism;
a second member which is provided on the torque transmission path of the torque transmission mechanism so that the distance from the driving source to the second member is longer than the distance from the driving source to the first member; and
a clutch which is switchable between a connection state in which transmission of a torque from the first member to the second member is allowed and a cut-off state in which the transmission of the torque from the first member to the second member is blocked, the clutch being capable of taking a partial connection state in which the transmission of the torque from the first member to the second member is allowed at a torque transmission rate which is lower than a torque transmission rate in the connection state, and
during the inter-vehicle distance adjustment control, the controller is configured to control the driving device and the brake adjustment device so that the positive driving force and the braking force are both applied to the leaning vehicle when the clutch is not in the cut-off state.

11. The leaning vehicle according to claim 10, wherein, the clutch is a centrifugal clutch in which the cut-off state is automatically switched to the connection state via the partial connection state, in accordance with increase in the rotation speed of the first member.

12. The leaning vehicle according to claim 10, wherein,
the clutch is an electronic-controlled clutch which is electronically controllable by the controller, and
during the inter-vehicle distance adjustment control, the controller is configured to control the driving device and the brake adjustment device so that the positive driving force and the braking force are both applied to the leaning vehicle when the electronic-controlled clutch controlled by the controller is in the connection state or the partial connection state.

13. The leaning vehicle according to any one of claims 1 to 12, wherein, the driving source includes an engine.

14. The leaning vehicle according to any one of claims 1 to 13, wherein, the driving source includes an electric motor.
